# EUROPEAN PATENT SPECIFICATION

(11) **EP 4 132 035 B1**
(45) Date of publication and mention of the grant of the patent: **01.10.2025**
(21) Application number: 21793207.8
(22) Date of filing: 02.03.2021
(51) Int. Cl.: H04W 4/70, H04W 4/80, H04W 88/04, H04W 76/14

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 23.04.2020 CN 202010329112; 20.07.2020 CN 202010698475
(43) Date of publication of application: 08.02.2023
(73) Proprietor: Huawei Technologies Co., Ltd., Shenzhen, Guangdong 518129 (CN)
(72) Inventor: YAO, Chuting, Shenzhen, Guangdong 518129 (CN); XU, Haibo, Shenzhen, Guangdong 518129 (CN); CAI, Yu, Shenzhen, Guangdong 518129 (CN)
(74) Representative: Maiwald GmbH
(86) International application number: PCT/CN2021/078790
(87) International publication number: WO 2021/213014

(56) References cited:
- WO-A1-2017/220247
- WO-A1-2018/028694
- WO-A1-2018/129875
- CN-A- 104 954 976
- CN-A- 109 892 003
- CN-A- 110 113 781
- US-A1- 2020 120 728
- HUAWEI ET AL.: "Discussion on Sidelink Resource Allocation and Configuration", 3GPP TSG RAN WG1 MEETING #89 R1-1707040, 6 May 2017 (2017-05-06), XP051261653

## Description

### TECHNICAL FIELD

This application relates to the field of communications technologies, and in particular, to a communications method and apparatus.

### BACKGROUND

To facilitate user's life, more terminal devices emerge, for example, a smartphone and smart glasses. For example, compared with the smart glasses, the smartphone may have larger storage space. The smartphone may store some information such as a virtual reality (virtual reality, VR) video, and a user may use the smart glasses to watch the VR video stored in the smartphone.
US2020/120728A1 describes a method for establishing a radio resource control connection between a first wireless device and a radio network node, comprises transmitting a request for a radio resource control connection towards the radio network node from the first wireless device to a second wireless device. It is described that then, the second wireless device forwards the request for a radio resource control connection towards the radio network node to the radio network node, and that the forwarding by the second wireless device uses an already established radio resource control signaling connection between the second wireless device and the radio network node.
WO2018/028694A1 describes a communication method and device for a direct device communication system, and a communication system. It is described that the method comprises: a UE receiving PC5 interface configuration information, wherein the PC5 interface configuration information is used to configure the UE to support a device-to-device (D2D) communication function; and the UE performing configuration according to the PC5 interface configuration information

If the user needs to use the smart glasses to watch the VR video stored in the smartphone, a data transmission process is involved between the smart glasses and the smartphone. To transmit data, a resource needs to be first obtained, and some authentication processes need to be first performed on the device such as the smart glasses or the smartphone. In a current manner, the smart glasses are connected to a base station, and the smartphone is also connected to a base station. For example, the smart glasses are connected to a base station 1, and the smartphone is connected to a base station 2. The base station 1 performs authentication on the smart glasses, and may allocate a corresponding resource to the smart glasses, so that the smart glasses transmit data to the smartphone. In addition, the base station 2 performs authentication on the smartphone, and may allocate a corresponding resource to the smartphone, so that the smartphone transmits data to the smart glasses. It can be learned that, in this current manner, both the smart glasses and the smartphone need to have a Uu interface, to communicate with the base station.

However, if a Uu interface needs to be set for the device such as the smart glasses, it is not conducive to meeting requirements such as "light" and "thin". In addition, the Uu interface also causes some energy consumption, resulting in relatively high power consumption of the smart glasses.

### SUMMARY

Embodiments of this application provide a communications method and apparatus, to reduce power consumption of a terminal device.

Appended claim 1 defines a communications method. Appended claim 11 defines a communications apparatus. Appended claim 12 defines a computer-readable storage medium. The invention and its scope of protection is defined by these independent claims. The following aspects and implementations of the disclousre proivde examples of how techncial subject matetrs can be combined.

According to a first aspect, a first communications method is provided. The method includes: receiving a first connection establishment request message from a second terminal device, where the first connection establishment request message is used to request to establish a sidelink connection to the second terminal device, and is further used to request a first terminal device to provide a relay service for control plane information of the second terminal device, and data plane information of the second terminal device is transmitted only between the first terminal device and the second terminal device by using the sidelink connection; and sending a first connection establishment complete message to the second terminal device, where the first connection establishment complete message is used to indicate that the sidelink connection to the second terminal device has been established.
The method may be performed by a first communications apparatus. The first communications apparatus may be a communications device, or may be a communications apparatus, for example, a chip, that can support the communications device in implementing a function required in the method. For example, the first communications apparatus is a terminal device, a chip that is disposed in the terminal device and that is configured to implement a function of the terminal device, or another component configured to implement the function of the terminal device. In the following description process, an example in which the first communications apparatus is the terminal device is used. For example, the terminal device is a first terminal device.

In this embodiment of this application, the control plane information of the second terminal device may be relayed by using the first terminal device, so that a network device can perform an operation such as authentication or resource allocation on the second terminal device. In this manner, because the second terminal device does not need to directly communicate with the network device, a Uu interface may not need to be set for the second terminal device. If the Uu interface is considered as a logical concept, because the Uu interface does not need to be set, a logical module configured to implement a Uu interface communication function does not occupy a processor resource of the second terminal device, thereby reducing power consumption of the second terminal device. Alternatively, if the Uu interface is considered as a hardware concept, because the Uu interface does not need to be set, the second terminal device can be designed in a lighter and thinner direction, thereby reducing power consumption of the second terminal device.

With reference to the first aspect, in a first optional implementation of the first aspect,
the first connection establishment request message is a relay connection establishment request message, and the relay connection establishment request message is used to request the first terminal device to provide a relay service for the second terminal device; or
the first connection establishment request message is a direct communication establishment request message, and the direct communication establishment request message is used to request to establish direct communication with the second terminal device; or
the first connection establishment request message is a control plane relay connection establishment request message, the control plane relay connection establishment request message is used to request the first terminal device to provide the relay service for the control plane information of the second terminal device, and the data plane information of the second terminal device is transmitted only between the first terminal device and the second terminal device.

The first connection establishment request message may have a plurality of implementations. The foregoing is merely several examples, and the first connection establishment request message may have another implementation. This is not limited in this embodiment of this application.

With reference to the first optional implementation of the first aspect, in a second optional implementation of the first aspect, that the first connection establishment request message is the relay connection establishment request message or the direct communication establishment request message, the first connection establishment request message is used to request the first terminal device to provide the relay service for the control plane information of the second terminal device by using the sidelink connection, and the data plane information of the second terminal device is transmitted only between the first terminal device and the second terminal device by using the sidelink connection includes:
the first connection establishment request message includes first information, the first information is used to request the first terminal device to provide the relay service for the control plane information of the second terminal device by using the sidelink connection, and the data plane information of the second terminal device is transmitted only between the first terminal device and the second terminal device by using the sidelink connection.

If the first connection establishment request message is a relay connection establishment request message, the relay connection establishment request message may be used to request the first terminal device to provide a relay service for the second terminal device. The relay service herein is a relay service for control plane information and user plane information, that is, the relay connection establishment request message is used to request the first terminal device to provide a relay service for the control plane information of the second terminal device, and request the first terminal device to provide a relay service for the user plane information of the second terminal device. However, in this embodiment of this application, the first connection establishment request message is used to request the first terminal device to provide the relay service only for the control plane information of the second terminal device, and not to provide the relay service for the user plane information of the second terminal device. To implement this indication, in an optional manner, if the first connection establishment request message is a relay connection establishment request message, the relay connection establishment request message may include first information. The first information may be used to request the first terminal device to provide the relay service for the control plane information of the second terminal device by using the sidelink connection, and the data plane information of the second terminal device is transmitted only between the first terminal device and the second terminal device by using the sidelink connection, so that the relay connection establishment request message can meet a requirement of this embodiment of this application.

Alternatively, the first connection establishment request message is a direct communication establishment request message, and the direct communication establishment request message may be used to request to establish direct communication with the second terminal device. However, in this embodiment of this application, the first connection establishment request message is used to request the first terminal device to provide the relay service only for the control plane information of the second terminal device, and not to provide the relay service for the user plane information of the second terminal device. To implement this indication, in an optional manner, if the first connection establishment request message is a direct communication establishment request message, the direct communication establishment request message may include first information. The first information may be used to request the first terminal device to provide the relay service for the control plane information of the second terminal device by using the sidelink connection, and the data plane information of the second terminal device is transmitted only between the first terminal device and the second terminal device by using the sidelink connection, so that the relay connection establishment request message can meet a requirement of this embodiment of this application.

With reference to the first aspect, the first optional implementation of the first aspect, or the second optional implementation of the first aspect, in a third optional implementation of the first aspect, the method further includes:
sending a first message to an access network device, where the first message includes second information, and the second information is used to request to relay the control plane information of the second terminal device.

If the second terminal device requests the first terminal device to relay the control plane information of the second terminal device, the first terminal device may initiate a request to the access network device, to request to relay the control plane information of the second terminal device.

With reference to the third optional implementation of the first aspect, in a fourth optional implementation of the first aspect, the first message further includes one or more of the following: a layer 2 identifier of the second terminal device, a first identifier of the second terminal device, or information indicating that the second terminal device is out of coverage, where the first identifier is an identifier allocated by the first terminal device to the first terminal device.

For example, the first message includes the layer 2 identifier of the second terminal device; or the first message includes the first identifier of the second terminal device; or the first message includes the layer 2 identifier of the second terminal device and the information indicating that the second terminal device is out of coverage; or the first message includes the first identifier of the second terminal device and the information indicating that the second terminal device is out of coverage; or the first message includes the first identifier of the second terminal device, the layer 2 identifier of the second terminal device, and the information indicating that the second terminal device is out of coverage.

The first message includes the layer 2 identifier of the second terminal device or the first identifier of the second terminal device, so that the access network device can determine a terminal device that is used as the second terminal device. If the second terminal device is out of coverage, the second terminal device cannot communicate with a network. In this case, the second terminal device performs relay by using the first terminal device, so that the second terminal device can be connected to the network device, and a communication status of the second terminal device can be improved relatively well. Therefore, the second terminal device may request the first terminal device to relay the control plane information of the second terminal device. In this case, the first message may include the information indicating that the second terminal device is out of coverage. Alternatively, even if the second terminal device is in coverage, the second terminal device may request the first terminal device to relay the control plane information of the second terminal device. In this case, the first message may include the information indicating that the second terminal device is out of coverage (if the second terminal device is out of coverage), or may not include the information indicating that the second terminal device is out of coverage (regardless of whether the second terminal device is in coverage, the information is not included).

With reference to the third optional implementation of the first aspect or the fourth optional implementation of the first aspect, in a fifth optional implementation of the first aspect, the first message is an SUI message.

For example, the first message is a sidelink UE information (sidelink UE information, SUI) message, or may be another message.

With reference to any one of the first aspect, or the first optional implementation of the first aspect to the fifth optional implementation of the first aspect, in a sixth optional implementation of the first aspect, the sidelink connection is a PC5-S connection.

The sidelink connection may be a PC5-S connection, or may be a PC5-RRC connection, or may be a sidelink connection of another type.

With reference to any one of the first aspect, or the first optional implementation of the first aspect to the sixth optional implementation of the first aspect, in a seventh optional implementation of the first aspect, the method further includes:
receiving a discovery request message from the second terminal device, where the discovery request message is used to request a relay service; and
sending a discovery response message to the second terminal device, where the discovery response message is used to determine to provide the relay service for the second terminal device.

If the first terminal device and the second terminal device have not discovered each other, the first terminal device and the second terminal device may first perform a discovery process. For example, the second terminal device sends a discovery request message, and the discovery request message may be sent in a broadcast manner. The discovery request message may be used to request one or more services. For example, one of the requested services is a relay service, or one of the requested services is a relay service for control plane information, and data plane information does not need to be relayed. Because the discovery request message is sent in a broadcast manner, there may be a plurality of terminal devices that can receive the discovery request message. If a terminal device that receives the discovery request message can provide all or some services requested by the second terminal device, the terminal device may send a discovery response message to the second terminal device. For example, if the discovery request message is used to request a relay service for control plane information, and data plane information does not need to be relayed, a terminal device (for example, the first terminal device) that can provide this service may send a discovery response message to the second terminal device, to indicate that the relay service for the control plane information can be provided for the second terminal device, and the data plane information is not relayed. After the first terminal device and the second terminal device have discovered each other, the second terminal device can send the first connection establishment request message to the first terminal device.

With reference to any one of the first aspect, or the first optional implementation of the first aspect to the seventh optional implementation of the first aspect, in an eighth optional implementation of the first aspect, the method further includes:
receiving a second connection establishment request message from the second terminal device by using a preconfigured first radio bearer, where the first radio bearer is used to transmit relay information corresponding to the second terminal device, and the second connection establishment request message is used to request to establish an RRC connection to the access network device; and
forwarding the second connection establishment request message to the access network device by using a preconfigured second radio bearer, where the second radio bearer is used to transmit the relay information corresponding to the second terminal device.

To request to establish the RRC connection to the access network device, the second terminal device may send the second connection establishment request message to the access network device by using a preconfigured radio bearer (the first radio bearer and the second radio bearer). The "preconfigured" radio bearer may be understood as that the radio bearer is a radio bearer specified in a protocol or a preconfigured radio bearer.

With reference to the eighth optional implementation of the first aspect, in a ninth optional implementation of the first aspect, the method further includes:
receiving a second connection establishment complete message from the access network device by using the second radio bearer, where the second connection establishment complete message is used to indicate that the RRC connection between the access network device and the second terminal device has been established; and
forwarding the second connection establishment complete message to the second terminal device by using the first radio bearer.

To notify the second terminal device that the RRC connection has been established, the access network device may send the second connection establishment complete message to the second terminal device by using a preconfigured radio bearer (the second radio bearer and the first radio bearer).

With reference to the eighth optional implementation or the ninth optional implementation of the first aspect, in a tenth optional implementation of the first aspect, the method further includes:
receiving a fourth message from the access network device by using the second radio bearer corresponding to the RRC connection, where the fourth message includes first resource information, the first resource information is used to indicate a first resource allocated to the second terminal device, and the first resource is used by the second terminal device to send data to the first terminal device by using the sidelink connection; and
forwarding the fourth message to the second terminal device by using the first radio bearer corresponding to the RRC connection.

If the RRC connection is established between the second terminal device and the access network device, the access network device may allocate a resource to the second terminal device. For example, if the second terminal device needs to send data to the first terminal device by using the sidelink connection, the second terminal device may request the access network device to allocate a resource to the second terminal device. In this case, the access network device may allocate the resource to the second terminal device, or even if the second terminal device does not send a request, the access network device may allocate the resource to the second terminal device. The access network device may send the allocated first resource information to the second terminal device by using a preconfigured radio bearer (the second radio bearer and the first radio bearer), so that the second terminal device can use the resource allocated by the access network device. In the manner provided in this embodiment of this application, even if no Uu interface is set for the second terminal device, the access network device can allocate a resource to the second terminal device, so that the second terminal device can perform communication on a sidelink.

With reference to the fifth optional implementation of the first aspect, in an eleventh optional implementation of the first aspect, the method further includes:
receiving a second message from the access network device, where the second message is used to configure a second radio bearer between the access network device and the first terminal device, and the second radio bearer is used to transmit relay information corresponding to the second terminal device.

To implement communication between the access network device and the second terminal device, one manner is to establish an RRC connection between the access network device and the second terminal device, and another manner is to configure a corresponding radio bearer between the access network device and the second terminal device without establishing an RRC connection between the access network device and the second terminal device, so that the access network device and the second terminal device can communicate with each other by using the configured radio bearer. Because there is no need to establish an RRC connection, signaling overheads can be reduced.

With reference to the eleventh optional implementation of the first aspect, in a twelfth optional implementation of the first aspect, the method further includes:
receiving second configuration information from the access network device by using the second radio bearer, where the second configuration information is a configuration of the second terminal device that corresponds to a first radio bearer, the first radio bearer is a radio bearer between the first terminal device and the second terminal device, and the first radio bearer is used to transmit the relay information corresponding to the second terminal device; and
forwarding the second configuration information to the second terminal device.

Configuring a corresponding radio bearer between the access network device and the second terminal device includes configuring a radio bearer (for example, the second radio bearer) between the access network device and the first terminal device, and further includes configuring a radio bearer (for example, the first radio bearer) between the first terminal device and the second terminal device. The first radio bearer may be configured by the access network device. For example, the access network device may send the second configuration information by using the second radio bearer. Because the second radio bearer is used to transmit information corresponding to the second terminal device, the first terminal device may forward the second configuration information to the second terminal device, and the second terminal device may configure the first radio bearer based on the second configuration information. In addition, the second terminal device may further forward fourth configuration information to the first terminal device, and the first terminal device may configure the first radio bearer based on the fourth configuration information. In this manner, the access network device only needs to deliver the second configuration information of the second terminal device that corresponds to the first radio bearer, and does not need to configure the first terminal device, to reduce load of the access network device.

Alternatively, in addition to sending the second configuration information by using the second radio bearer, the access network device may further send first configuration information to the first terminal device by using a third radio bearer. The third radio bearer is not dedicated to transmitting information corresponding to the second terminal device. In other words, the third radio bearer is used to transmit information corresponding to the first terminal device. This may be understood as that the third radio bearer is a common radio bearer between the first terminal device and the access network device. Therefore, the first terminal device may configure the first radio bearer based on the first configuration information. The access network device may configure the first terminal device and the second terminal device, and the terminal device does not need to generate a corresponding configuration. This reduces load of the terminal device. In addition, the access network device sends the first configuration information and the second configuration information by using different radio bearers, so that the first terminal device can determine, based on the radio bearers, that the first configuration information corresponds to the first terminal device and that the second configuration information corresponds to the second terminal device. This reduces a possibility of a forwarding error of the first terminal device.

With reference to the eleventh optional implementation or the twelfth optional implementation of the first aspect, in a thirteenth optional implementation of the first aspect, the method further includes:
receiving a fourth message from the access network device by using the second radio bearer, where the fourth message includes first resource information, the first resource information is used to indicate a first resource allocated to the second terminal device, and the first resource is used by the second terminal device to send data to the first terminal device by using the sidelink connection; and
forwarding the fourth message to the second terminal device.

If a dedicated radio bearer (the first radio bearer and the second radio bearer) is configured between the second terminal device and the access network device, the access network device may allocate a resource to the second terminal device. For example, if the second terminal device needs to send data to the first terminal device by using the sidelink connection, the second terminal device may request the access network device to allocate a resource to the second terminal device. In this case, the access network device may allocate the resource to the second terminal device, or even if the second terminal device does not send a request, the access network device may allocate the resource to the second terminal device. The access network device may send the allocated first resource information to the second terminal device by using a configured radio bearer (the second radio bearer and the first radio bearer), so that the second terminal device can use the resource allocated by the access network device. In the manner provided in this embodiment of this application, even if no Uu interface is set for the second terminal device, the access network device can allocate a resource to the second terminal device, so that the second terminal device can perform communication on a sidelink.

With reference to any one of the first aspect, or the first optional implementation of the first aspect to the eleventh optional implementation of the first aspect, in a fourteenth optional implementation of the first aspect, the method further includes:
receiving first configuration information from the access network device by using a third radio bearer to the access network device, where the first configuration information is configuration information of the first terminal device that corresponds to the first radio bearer, the first radio bearer is a radio bearer between the first terminal device and the second terminal device, the first radio bearer is used to transmit the relay information corresponding to the second terminal device, the third radio bearer is used to transmit information corresponding to the first terminal device, and the third radio bearer is established when the first terminal device enters an RRC connected state; and
sending third configuration information to the second terminal device, where the third configuration information is used to generate configuration information of the second terminal device that corresponds to the first radio bearer, and the third configuration information includes some or all content of the first configuration information.

Configuring a corresponding radio bearer between the access network device and the second terminal device includes configuring a radio bearer (for example, the second radio bearer) between the access network device and the first terminal device, and further includes configuring a radio bearer (for example, the first radio bearer) between the first terminal device and the second terminal device. The first radio bearer may be configured by the access network device. For example, the access network device may send second configuration information by using the third radio bearer. The third radio bearer is not dedicated to transmitting information corresponding to the second terminal device. In other words, the third radio bearer is used to transmit information corresponding to the first terminal device. This may be understood as that the third radio bearer is a common radio bearer between the first terminal device and the access network device. Therefore, the first terminal device may configure the first radio bearer based on the first configuration information. In addition, the first terminal device may further send the third configuration information to the second terminal device, where the third configuration information includes, for example, some or all content of the first configuration information, and the second terminal device may configure the first radio bearer based on the third configuration information. In this manner, the access network device only needs to deliver the first configuration information of the first terminal device that corresponds to the first radio bearer, and does not need to configure the second terminal device, to reduce load of the access network device.

With reference to any one of the first aspect, or the first optional implementation of the first aspect to the eleventh optional implementation of the first aspect, in a fifteenth optional implementation of the first aspect, the method further includes:
receiving a configuration message from the access network device by using a third radio bearer to the access network device, where the configuration message includes first configuration information and second configuration information, and the configuration message further includes first indication information, where the first indication information indicates that the second configuration information corresponds to the second terminal device, the first configuration information is a configuration of the first terminal device that corresponds to the first radio bearer, the second configuration information is a configuration of the second terminal device that corresponds to the first radio bearer, the first radio bearer is a radio bearer between the first terminal device and the second terminal device, the first radio bearer is used to transmit the relay information corresponding to the second terminal device, the third radio bearer is used to transmit information corresponding to the first terminal device, and the third radio bearer is established when the first terminal device enters an RRC connected state; and
forwarding the second configuration information to the second terminal device.

Configuring a corresponding radio bearer between the access network device and the second terminal device includes configuring a radio bearer (for example, the second radio bearer) between the access network device and the first terminal device, and further includes configuring a radio bearer (for example, the first radio bearer) between the first terminal device and the second terminal device. The first radio bearer may be configured by the access network device. For example, the access network device may send second configuration information by using the third radio bearer. The third radio bearer is not dedicated to transmitting information corresponding to the second terminal device. In other words, the third radio bearer is used to transmit information corresponding to the first terminal device. This may be understood as that the third radio bearer is a common radio bearer between the first terminal device and the access network device. Therefore, the first terminal device may configure the first radio bearer based on the first configuration information. In addition, because the first indication information indicates that the second configuration information corresponds to the second terminal device, the first terminal device may further send the second configuration information to the second terminal device, and the second terminal device may configure the first radio bearer based on the second configuration information. In this manner, the access network device may configure the first terminal device and the second terminal device, and the terminal device does not need to generate a corresponding configuration. This reduces load of the terminal device. In addition, the access network device may send both the first configuration information and the second configuration information by using the third radio bearer, and does not need to separately send the first configuration information and the second configuration information by using different radio bearers. This saves a process in which the access network device performs a sending operation, and helps reduce power consumption of the access network device.

With reference to the fourteenth optional implementation of the first aspect or the fifteenth optional implementation of the first aspect, in a sixteenth optional implementation of the first aspect, the method further includes:
entering the RRC connected state if the first terminal device is in an RRC idle state or an RRC inactive state when the first connection establishment request message is received.

If the first terminal device is in the RRC idle state or the RRC inactive state when the first connection establishment request message is received, because the first terminal device subsequently needs to provide the relay service for the control information of the second terminal device, the first terminal device needs to enter the RRC connected state. If the first terminal device has been in the RRC connected state when the first connection establishment request message is received, the first terminal device does not need to perform an operation of entering the RRC connected state.

With reference to the fourteenth optional implementation of the first aspect, the fifteenth optional implementation of the first aspect, or the sixteenth optional implementation of the first aspect, in a seventeenth optional implementation of the first aspect, the method further includes:
receiving the fourth message from the access network device by using the third radio bearer, where the fourth message includes the first resource information, the first resource information is used to indicate the first resource allocated to the second terminal device, the third radio bearer is used to transmit the information corresponding to the first terminal device, and the first resource is used by the second terminal device to send the data to the first terminal device by using the sidelink connection; and
forwarding the fourth message to the second terminal device.

The access network device may allocate a resource to the second terminal device by using a common radio bearer (for example, the third radio bearer) between the access network device and the first terminal device. For example, if the second terminal device needs to send data to the first terminal device by using the sidelink connection, the second terminal device may request the access network device to allocate a resource to the second terminal device. In this case, the access network device may allocate the resource to the second terminal device, or even if the second terminal device does not send a request, the access network device may allocate the resource to the second terminal device. The access network device may send the allocated first resource information to the first terminal device by using the third radio bearer, and the first terminal device only needs to forward the first resource information to the second terminal device, so that the second terminal device can use the resource allocated by the access network device. In the manner provided in this embodiment of this application, even if no Uu interface is set for the second terminal device, the access network device can allocate a resource to the second terminal device, so that the second terminal device can perform communication on a sidelink.

With reference to any one of the first aspect, or the first optional implementation of the first aspect to the seventeenth optional implementation of the first aspect, in an eighteenth optional implementation of the first aspect, the method further includes:
receiving a resource request message from the second terminal device, where the resource request message is used to request to allocate a resource that is used to send data on the sidelink connection after the first terminal device is disconnected from the access network device;
sending a second request message to the access network device, where the second request message includes the resource request message;
receiving an RRC release message from the access network device, where the RRC release message is used to release an RRC connection between the access network device and the first terminal device, the RRC release message further includes second resource information, the second resource information is used to indicate a second resource allocated to the second terminal device, and the second resource is used by the second terminal device to send data by using the sidelink connection after the first terminal device is disconnected from the access network device; and
sending a third message to the second terminal device, where the third message includes the second resource information.

The second terminal device can request a corresponding resource in advance, and the requested resource may be used after the RRC connection between the first terminal device and the access network device is disconnected. The access network device may allocate a resource to the second terminal device, so that the second terminal device can use the resource after the RRC connection between the first terminal device and the access network device is disconnected. Therefore, the first terminal device does not need to always keep in the RRC connected state to use the resource. This helps reduce power consumption of the first terminal device. In addition, after the RRC connection between the first terminal device and the access network device is disconnected, the first terminal device or the second terminal device still has an available resource to send data by using the sidelink connection. This saves a case in which the terminal device has no available resource, and reduces a data sending delay.

With reference to the eighteenth optional implementation of the first aspect, in a nineteenth optional implementation of the first aspect, the RRC release message and the third message further include first duration information, and the first duration information is used to indicate use duration of the second resource.

The access network device may further set use duration for the second resource, for example, referred to as first duration. The first duration may indicate the use duration of the second resource. For example, if the first duration includes a start moment and an end moment, the second terminal device can use the second resource only within duration indicated by the start moment and the end moment, and when the end moment expires, the second terminal device cannot use the second resource. For another example, the first duration includes duration information. For example, the duration information is 24 hours or 3 hours. In this case, a start moment corresponding to the duration information may be calculated starting from a moment for receiving the second resource information by the second terminal device, or may be calculated starting from a moment for sending the second resource information by the access network device. In this case, the second terminal device can use the second resource only within the duration, and when the duration expires, the second terminal device cannot use the second resource. Alternatively, the first duration may be implemented in another form. By setting the duration, the second terminal device is prevented from occupying the second resource for a long time as much as possible, so that the second resource can be properly released for use by another terminal device in an RRC connected state.

With reference to the eighteenth optional implementation of the first aspect or the nineteenth optional implementation of the first aspect, in a twentieth optional implementation of the first aspect, the RRC release message further includes third resource information, the third resource information is used to indicate a third resource allocated to the first terminal device, and the third resource is used by the first terminal device to send data by using the sidelink connection after the first terminal device is disconnected from the access network device.

In addition to allocating the second resource to the second terminal device, the access network device may further allocate the third resource to the first terminal device. After the first terminal device is disconnected from the access network device, the first terminal device may perform communication on the sidelink connection by using the third resource. The access network device may allocate resources to two terminal devices by using one message instead of excessive messages. This helps reduce signaling overheads.

With reference to the twentieth optional implementation of the first aspect, in a twenty-first optional implementation of the first aspect, the RRC release message further includes second duration information, and the second duration information is used to indicate use duration of the third resource.

The access network device may further set use duration for the third resource, for example, referred to as second duration. The second duration may indicate the use duration of the third resource. For example, if the second duration includes a start moment and an end moment, the first terminal device can use the third resource only within duration indicated by the start moment and the end moment, and when the end moment expires, the first terminal device cannot use the third resource. For another example, the second duration includes duration information. For example, the duration information is 24 hours or 3 hours. In this case, a start moment corresponding to the duration information may be calculated starting from a moment for receiving the third resource information by the first terminal device, or may be calculated starting from a moment for sending the third resource information by the access network device. In this case, the first terminal device can use the third resource only within the duration, and when the duration expires, the first terminal device cannot use the third resource. Alternatively, the second duration may be implemented in another form. By setting the duration, the first terminal device is prevented from occupying the third resource for a long time as much as possible, so that the third resource can be properly released for use by another terminal device in an RRC connected state. A time corresponding to the second duration may be the same as or different from a time corresponding to the first duration.

With reference to any one of the first aspect, or the first optional implementation of the first aspect to the seventeenth optional implementation of the first aspect, in a twenty-second optional implementation of the first aspect, the method further includes:
sending a resource request message to the access network device, where the resource request message is used to request to forward, to the second terminal device, resource pool information broadcast by the access network device; and
receiving second indication information from the access network device, where the second indication information indicates that the broadcast resource pool information is allowed to be forwarded to the second terminal device, and a resource pool indicated by the resource pool information is used to select a transmission resource of the sidelink connection.

If the first terminal device is disconnected from the access network device, the first terminal device cannot use a resource allocated by the access network device to the first terminal device when the first terminal device is in the RRC connected state. However, the access network device may further broadcast the resource pool information, and the first terminal device may perform communication on the sidelink connection by using the resource pool indicated by the resource pool information broadcast by the access network device. However, if no Uu interface is set for the second terminal device, the second terminal device cannot receive a broadcast message from the access network device. Consequently, the second terminal device cannot obtain a resource used for communication on the sidelink connection. Therefore, in this embodiment of this application, the first terminal device may request to forward, to the second terminal device, the resource pool information broadcast by the access network device. In this case, although no Uu interface is set for the second terminal device, the second terminal device can obtain the resource pool information broadcast by the access network device. Therefore, after the RRC connection between the first terminal device and the access network device is disconnected, the second terminal device can select a resource from the resource pool indicated by the resource pool information to send data on the sidelink connection, to avoid a case in which the second terminal device has no available resource as much as possible, and reduce a data transmission delay. In addition, the first terminal device does not need to always keep in the RRC connected state. This helps reduce power consumption of the first terminal device.

With reference to the twenty-second optional implementation of the first aspect, in a twenty-third optional implementation of the first aspect, the method further includes:
receiving a broadcast message from the access network device after the first terminal device is disconnected from the access network device, where the broadcast message includes first resource pool information, and a first resource pool indicated by the first resource pool information is used to select a transmission resource of the sidelink connection; and
sending second resource pool information to the second terminal device, where a second resource pool indicated by the second resource pool information includes all or some resources in the first resource pool.

If the access network device allows the first terminal device to forward, to the second terminal device, the resource pool information broadcast by the access network device, after the first terminal device is disconnected from the access network device, if the first terminal device receives the first resource pool information broadcast by the access network device, the first terminal device may forward the second resource pool information to the second terminal device, so that the second terminal device can perform communication on the sidelink connection by using the second resource pool.

With reference to any one of the first aspect, or the first optional implementation of the first aspect to the twenty-third optional implementation of the first aspect, in a twenty-fourth optional implementation of the first aspect, the method further includes:
receiving the third message from the second terminal device by using a first bearer element, where the third message is a NAS message, and the first bearer element is used to transmit NAS information that corresponds to the second terminal device and that needs to be relayed; and
forwarding the third message to the access network device by using a second bearer element, where the second bearer element is used to transmit the NAS information that corresponds to the second terminal device and that needs to be relayed.

For example, the second terminal device may send the third message to the first terminal device by using the first radio bearer, or the second terminal device may send the third message to the first terminal device by using another radio bearer (for example, a fourth radio bearer) between the first terminal device and the second terminal device. That the fourth radio bearer is not used to transmit relay information may be understood as that the fourth radio bearer is a common radio bearer between the first terminal device and the second terminal device. If the second terminal device sends the third message to the first terminal device by using the fourth radio bearer, because the fourth radio bearer is not used to transmit the relay information, to enable the first terminal device to determine that the third message needs to be forwarded to the network, the second terminal device may send the third message to the first terminal device by using the first bearer element. In this case, the first bearer element is located on the fourth radio bearer. Alternatively, if the second terminal device sends the third message to the first terminal device by using the first radio bearer, because the fourth radio bearer is used to transmit the relay information, the second terminal device may not send the third message to the first terminal device by using the first bearer element. Alternatively, because the third message is the NAS message, even if the second terminal device sends the third message to the first terminal device by using the first radio bearer, the second terminal device may send the third message to the first terminal device by using the first bearer element. In this case, the first bearer element is located on the first radio bearer.

For example, the first terminal device may forward the third message to the access network device by using the second radio bearer, or the first terminal device may forward the third message to the access network device by using another radio bearer (for example, the third radio bearer) between the first terminal device and the access network device. The third radio bearer is not used to transmit the relay information. If the first terminal device sends the third message to the access network device by using the third radio bearer, because the third radio bearer is not used to transmit the relay information, to enable the access network device to determine that the third message is from the second terminal device, the first terminal device may send the third message to the access network device by using the second bearer element. In this case, the second bearer element is located on the third radio bearer. Alternatively, if the first terminal device sends the third message to the access network device by using the second radio bearer, because the second radio bearer is used to transmit the relay information, the first terminal device may not send the third message to the access network device by using the second bearer element. Alternatively, because the third message is the NAS message, even if the first terminal device sends the third message to the access network device by using the second radio bearer, the first terminal device may send the third message to the access network device by using the second bearer element, so that the access network device determines that the third message further needs to be forwarded to a core network device. In this case, the second bearer element is located on the second radio bearer.

According to a second aspect, a second communications method is provided. The method includes: sending a first connection establishment request message to a first terminal device, where the first connection establishment request message is used to request to establish a sidelink connection to the first terminal device, and is further used to request the first terminal device to provide a relay service for control plane information of a second terminal device by using the sidelink connection, and data plane information of the second terminal device is transmitted only between the first terminal device and the second terminal device by using the sidelink connection; and receiving a first connection establishment complete message from the first terminal device, where the first connection establishment complete message is used to indicate that the sidelink connection to the second terminal device has been established.

The method may be performed by a second communications apparatus. The second communications apparatus may be a communications device, or may be a communications apparatus, for example, a chip, that can support the communications device in implementing a function required in the method. For example, the second communications apparatus is a terminal device, a chip that is disposed in the terminal device and that is configured to implement a function of the terminal device, or another component configured to implement the function of the terminal device. In the following description process, an example in which the second communications apparatus is the terminal device is used. For example, the terminal device is a second terminal device.

With reference to the second aspect, in a first optional implementation of the second aspect,
the first message is a relay connection establishment request message, and the relay connection establishment request message is used to request the first terminal device to provide a relay service for the second terminal device; or
the first message is a direct communication establishment request message, and the direct communication establishment request message is used to request to establish direct communication with the second terminal device; or
the first message is a control plane relay connection establishment request message, the control plane relay connection establishment request message is used to request the first terminal device to provide the relay service for the control plane information of the second terminal device, and the data plane information of the second terminal device is transmitted only between the first terminal device and the second terminal device.

With reference to the first optional implementation of the second aspect, in a second optional implementation of the second aspect, that the first message is the relay connection establishment request message or the direct communication establishment request message, the first connection establishment request message is used to request the first terminal device to provide the relay service for the control plane information of the second terminal device by using the sidelink connection, and the data plane information of the second terminal device is transmitted only between the first terminal device and the second terminal device by using the sidelink connection includes:
the first connection establishment request message includes first information, the first information is used to request the first terminal device to provide the relay service for the control plane information of the second terminal device by using the sidelink connection, and the data plane information of the second terminal device is transmitted only between the first terminal device and the second terminal device by using the sidelink connection.

With reference to the second aspect, the first optional implementation of the second aspect, or the second optional implementation of the second aspect, in a third optional implementation of the second aspect, the sidelink connection is a PC5-S connection.

With reference to any one of the second aspect, or the first optional implementation of the second aspect to the third optional implementation of the second aspect, in a fourth optional implementation of the second aspect, the method further includes:
sending a discovery request message to the first terminal device, where the discovery request message is used to request a relay service; and
receiving a discovery response message from the first terminal device, where the discovery response message is used to determine to provide the relay service for the second terminal device.

With reference to any one of the second aspect, or the first optional implementation of the second aspect to the fourth optional implementation of the second aspect, in a fifth optional implementation of the second aspect, the method further includes:
sending a second connection establishment request message to the first terminal device by using a preconfigured first radio bearer, where the first radio bearer is used to transmit relay information corresponding to the second terminal device, and the second connection establishment request message is used to request to establish an RRC connection to an access network device; and
receiving a second connection establishment complete message from the first terminal device by using the first radio bearer, where the second connection establishment complete message is used to indicate that the RRC connection between the access network device and the second terminal device has been established.

With reference to the fifth optional implementation of the second aspect, in a sixth optional implementation of the second aspect, the method further includes:
receiving a fourth message from the first terminal device, where the fourth message includes first resource information, the first resource information is used to indicate a first resource allocated to the second terminal device, and the first resource is used by the second terminal device to send data to the first terminal device by using the sidelink connection.

With reference to any one of the second aspect, or the first optional implementation of the second aspect to the sixth optional implementation of the second aspect, in a seventh optional implementation of the second aspect, the method further includes:
receiving third configuration information from the first terminal device; and
generating, based on the third configuration information, a configuration of the second terminal device that corresponds to the first radio bearer, where the third configuration information includes some or all content of first configuration information, the first configuration information is a configuration of the first terminal device that corresponds to the first radio bearer, and the first radio bearer is used to transmit the relay information corresponding to the second terminal device.

With reference to any one of the second aspect, or the first optional implementation of the second aspect to the sixth optional implementation of the second aspect, in an eighth optional implementation of the second aspect, the method further includes:
receiving second configuration information from the first terminal device, where the second configuration information is a configuration of the second terminal device that corresponds to the first radio bearer, and the first radio bearer is used to transmit the relay information corresponding to the second terminal device.

With reference to any one of the second aspect, or the first optional implementation of the second aspect to the eighth optional implementation of the second aspect, in a ninth optional implementation of the second aspect, the method further includes:
sending a resource request message to the first terminal device, where the resource request message is used to request to allocate a resource that is used to send data on the sidelink connection after the first terminal device is disconnected from the access network device; and
receiving a third message from the first terminal device, where the third message includes second resource information, the second resource information is used to indicate a second resource allocated to the second terminal device, and the second resource is used by the second terminal device to send data by using the sidelink connection after the first terminal device is disconnected from the access network device.

With reference to the ninth optional implementation of the second aspect, in a tenth optional implementation of the second aspect, the third message further includes first duration information, and the first duration information is used to indicate use duration of the second resource.

With reference to any one of the second aspect, or the first optional implementation of the second aspect to the eighth optional implementation of the second aspect, in an eleventh optional implementation of the second aspect, the method further includes:
receiving second resource pool information from the first terminal device, where a second resource pool indicated by the second resource pool information is used to select a transmission resource of the sidelink connection.

For technical effects brought by the second aspect or the optional implementations of the second aspect, refer to the descriptions of the technical effects brought by the first aspect or the corresponding implementations.

According to a third aspect, a third communications method is provided. The method includes: receiving a first message from a first terminal device; and obtaining second information from the first message, where the second information is used to request to relay control plane information of a second terminal device.

The method may be performed by a third communications apparatus. The third communications apparatus may be a communications device, or may be a communications apparatus, for example, a chip, that can support the communications device in implementing a function required in the method. For example, the third communications apparatus is a network device, a chip that is disposed in the network device and that is configured to implement a function of the network device, or another component configured to implement the function of the network device. In the following description process, an example in which the third communications apparatus is the network device is used. For example, the network device is an access network device.

With reference to the third aspect, in a first optional implementation of the third aspect, the first message further includes one or more of the following: a layer 2 identifier of the second terminal device, a first identifier of the second terminal device, or information indicating that the second terminal device is out of coverage, where the first identifier is an identifier allocated by the first terminal device to the first terminal device.

With reference to the third aspect or the first optional implementation of the third aspect, in a second optional implementation of the third aspect, the first message is SUI.

With reference to the third aspect, the first optional implementation of the third aspect, or the second optional implementation of the third aspect, in a third optional implementation of the third aspect, the method further includes:
allocating a second identifier to the second terminal device.

With reference to any one of the third aspect, or the first optional implementation of the third aspect to the third optional implementation of the third aspect, in a fourth optional implementation of the third aspect, the method further includes:
sending a second message to the first terminal device, where the second message is used to configure a second radio bearer between an access network device and the first terminal device, and the second radio bearer is used to transmit relay information corresponding to the second terminal device.

With reference to the fourth optional implementation of the third aspect, in a fifth optional implementation of the third aspect, the method further includes:
sending second configuration information to the first terminal device by using the second radio bearer, where the second configuration information is a configuration of the second terminal device that corresponds to a first radio bearer, the first radio bearer is a radio bearer between the first terminal device and the second terminal device, and the first radio bearer is used to transmit the relay information corresponding to the second terminal device.

With reference to the fourth optional implementation of the third aspect or the fifth optional implementation of the third aspect, in a sixth optional implementation of the third aspect, the method further includes:
sending a fourth message to the first terminal device by using the second radio bearer, where the fourth message includes first resource information, the first resource information is used to indicate a first resource allocated to the second terminal device, and the first resource is used by the second terminal device to send data to the first terminal device by using a sidelink connection.

With reference to any one of the third aspect, or the first optional implementation of the third aspect to the fourth optional implementation of the third aspect, in a seventh optional implementation of the third aspect, the method further includes:
sending first configuration information to the first terminal device by using a third radio bearer to the first terminal device, where the first configuration information is a configuration of the first terminal device that corresponds to a first radio bearer, the first radio bearer is a radio bearer between the first terminal device and the second terminal device, the first radio bearer is used to transmit relay information corresponding to the second terminal device, the third radio bearer is used to transmit information corresponding to the first terminal device, and the third radio bearer is established when the first terminal device enters an RRC connected state.

With reference to any one of the third aspect, or the first optional implementation of the third aspect to the fourth optional implementation of the third aspect, in an eighth optional implementation of the third aspect, the method further includes:
sending a configuration message to the first terminal device by using a third radio bearer to the first terminal device, where the configuration message includes first configuration information and second configuration information, and the configuration message further includes first indication information, where the first indication information indicates that the second configuration information corresponds to the second terminal device, the first configuration information is a configuration of the first terminal device that corresponds to a first radio bearer, the second configuration information is a configuration of the second terminal device that corresponds to the first radio bearer, the first radio bearer is a radio bearer between the first terminal device and the second terminal device, the first radio bearer is used to transmit the relay information corresponding to the second terminal device, the third radio bearer is used to transmit information corresponding to the first terminal device, and the third radio bearer is established when the first terminal device enters an RRC connected state.

With reference to any one of the third aspect, or the first optional implementation of the third aspect to the eighth optional implementation of the third aspect, in a ninth optional implementation of the third aspect, the method further includes:
sending the fourth message to the first terminal device by using the third radio bearer to the first terminal device, where the fourth message includes the first resource information, the first resource information is used to indicate the first resource allocated to the second terminal device, and the first resource is used by the second terminal device to send the data to the first terminal device by using the sidelink connection; or
sending the fourth message to the first terminal device by using the second radio bearer corresponding to an RRC connection to the second terminal device, where the fourth message includes the first resource information, the first resource information is used to indicate the first resource allocated to the second terminal device, and the first resource is used by the second terminal device to send the data to the first terminal device by using the sidelink connection.

With reference to any one of the third aspect, or the first optional implementation of the third aspect to the ninth optional implementation of the third aspect, in a tenth optional implementation of the third aspect, the method further includes:
receiving a second request message from the first terminal device, where the second request message is used to request to allocate a resource that is used by the second terminal device to send data on the sidelink connection after the first terminal device is disconnected from the access network device; and
sending an RRC release message to the first terminal device, where the RRC release message is used to release an RRC connection between the access network device and the first terminal device, the RRC release message further includes second resource information, the second resource information is used to indicate a second resource allocated to the second terminal device, and the second resource is used by the second terminal device to send data by using the sidelink connection after the first terminal device is disconnected from the access network device.

With reference to the tenth optional implementation of the third aspect, in an eleventh optional implementation of the third aspect, the RRC release message further includes first duration information, and the first duration information is used to indicate use duration of the second resource.

With reference to the tenth optional implementation of the third aspect or the eleventh optional implementation of the third aspect, in a twelfth optional implementation of the third aspect, the RRC release message further includes third resource information, the third resource information is used to indicate a third resource allocated to the first terminal device, and the third resource is used by the first terminal device to send data by using the sidelink connection after the first terminal device is disconnected from the access network device.

With reference to the twelfth optional implementation of the third aspect, in a thirteenth optional implementation of the third aspect, the RRC release message further includes second duration information, and the second duration information is used to indicate use duration of the third resource.

With reference to any one of the third aspect, or the first optional implementation of the third aspect to the ninth optional implementation of the third aspect, in a fourteenth optional implementation of the third aspect, the method further includes:
receiving a resource request message from the first terminal device, where the resource request message is used to request to forward broadcast resource pool information to the second terminal device, and a resource pool indicated by the resource pool information is used to select a transmission resource of the sidelink connection; and
sending second indication information to the first terminal device, where the second indication information indicates that the broadcast resource pool information is allowed to be forwarded to the second terminal device.

With reference to any one of the third aspect, or the first optional implementation of the third aspect to the fourteenth optional implementation of the third aspect, in a fifteenth optional implementation of the third aspect, the method further includes:
receiving a third message from the first terminal device by using a second bearer element, where the third message is a NAS message, and the second bearer element is used to transmit NAS information that corresponds to the second terminal device and that needs to be relayed; and
forwarding the third message to a core network device.

For technical effects brought by the third aspect or the optional implementations of the third aspect, refer to the descriptions of the technical effects brought by the first aspect or the corresponding implementations.

According to a fourth aspect, a fourth communications method is provided. The method includes: receiving a fourth message from an access network device, where the fourth message includes first resource information, the first resource information is used to indicate a first resource allocated to a second terminal device, and the first resource is used by the second terminal device to send data to a first terminal device by using a sidelink connection; and forwarding the fourth message to the second terminal device.

The method may be performed by a fourth communications apparatus. The fourth communications apparatus may be a communications device, or may be a communications apparatus, for example, a chip, that can support the communications device in implementing a function required in the method. For example, the fourth communications apparatus is a terminal device, a chip that is disposed in the terminal device and that is configured to implement a function of the terminal device, or another component configured to implement the function of the terminal device. In the following description process, an example in which the fourth communications apparatus is the terminal device is used. For example, the terminal device is a first terminal device.

In this embodiment of this application, because the second terminal device interacts with the access network device by using the first terminal device, a Uu interface does not need to be set for the second terminal device. If the Uu interface is considered as a logical concept, because the Uu interface does not need to be set, a logical module configured to implement a Uu interface communication function does not occupy a processor resource of the second terminal device, thereby reducing power consumption of the second terminal device. Alternatively, if the Uu interface is considered as a hardware concept, because the Uu interface does not need to be set, the second terminal device can be designed in a lighter and thinner manner, thereby reducing costs of the second terminal device, and reducing power consumption of the second terminal device that is caused by the Uu interface. In addition, according to the method provided in this embodiment of this application, the access network device can allocate a resource to the second terminal device, so that the second terminal device can transmit data by using the sidelink connection. Alternatively, when the second terminal device is in an OOC state, because a sidelink resource may be configured and controlled by using the access network device corresponding to the first terminal device, the second terminal device does not need to use a preconfigured resource to obtain better sidelink performance, or a sidelink resource between the first terminal device and the second terminal device is configured and controlled by using the access network device corresponding to the first terminal device, to obtain better sidelink performance.

With reference to the fourth aspect, in a first optional implementation of the fourth aspect, the method further includes:
receiving a seventh message from the second terminal device, where the seventh message is used to request the first resource, the seventh message further includes QoS information and/or expected periodicity information, the QoS information is used to indicate expected QoS that can be met by the first resource, and the expected periodicity information is used to indicate an expected periodicity of the first resource; and
sending a first request message to the access network device, where the first request message includes the seventh message.

The QoS information may indicate QoS expected by the second terminal device. For example, the second terminal device expects that a resource allocated by the access network device can meet the QoS. The first terminal device sends the QoS information to the access network device, and the access network device may allocate a resource to the second terminal device based on the QoS information. The expected periodicity information may indicate an expected periodicity, and the expected periodicity is a periodicity that is expected by the second terminal device and that is of the resource allocated by the access network device. The first terminal device sends the expected periodicity information to the access network device. For example, if the second terminal device needs to send periodic data by using a resource requested in the seventh message, the access network device may allocate a periodic resource to the second terminal device. In this case, the second terminal device may send the expected periodicity information to the access network device, so that the periodicity of the resource allocated by the access network device can meet the expected periodicity. For example, a length of the periodicity of the resource allocated by the access network device may be equal to a length of the expected periodicity.

With reference to the fourth aspect or the first optional implementation of the fourth aspect, in a second optional implementation of the fourth aspect, the receiving a fourth message from an access network device includes:
receiving the fourth message from the access network device by using a second radio bearer corresponding to an RRC connection between the second terminal device and the access network device; or
receiving the fourth message from the access network device by using a second radio bearer between the first terminal device and the access network device, where the second radio bearer is used to transmit relay information corresponding to the second terminal device, and the second radio bearer is configured by the access network device; or
receiving the fourth message from the access network device by using a third radio bearer between the first terminal device and the access network device, where the third radio bearer is used to transmit information corresponding to the first terminal device, and the third radio bearer is established when the first terminal device enters an RRC connected state.

With reference to the fourth aspect, the first optional implementation of the fourth aspect, or the second optional implementation of the fourth aspect, in a third optional implementation of the fourth aspect, the method further includes:
receiving a resource request message from the second terminal device, where the resource request message is used to request to allocate a resource that is used to send data on the sidelink connection after the first terminal device is disconnected from the access network device;
sending a second request message to the access network device, where the second request message includes the resource request message;
receiving an RRC release message from the access network device, where the RRC release message is used to release an RRC connection between the access network device and the first terminal device, the RRC release message further includes second resource information, the second resource information is used to indicate a second resource allocated to the second terminal device, and the second resource is used by the second terminal device to send data by using the sidelink connection after the first terminal device is disconnected from the access network device; and
sending a third message to the second terminal device, where the third message includes the second resource information.

With reference to the third optional implementation of the fourth aspect, in a fourth optional implementation of the fourth aspect, the RRC release message and the third message further include first duration information, and the first duration information is used to indicate use duration of the second resource.

With reference to the third optional implementation of the fourth aspect or the fourth optional implementation of the fourth aspect, in a fifth optional implementation of the fourth aspect, the RRC release message further includes third resource information, the third resource information is used to indicate a third resource allocated to the first terminal device, and the third resource is used by the first terminal device to send data by using the sidelink connection after the first terminal device is disconnected from the access network device.

With reference to the fifth optional implementation of the fourth aspect, in a sixth optional implementation of the fourth aspect, the RRC release message further includes second duration information, and the second duration information is used to indicate use duration of the third resource.

With reference to the fourth aspect, the first optional implementation of the fourth aspect, or the second optional implementation of the fourth aspect, in a seventh optional implementation of the fourth aspect, the method further includes:
sending a resource request message to the access network device, where the resource request message is used to request to forward, to the second terminal device, resource pool information broadcast by the access network device; and
receiving second indication information from the access network device, where the second indication information indicates that the broadcast resource pool information is allowed to be forwarded to the second terminal device, and a resource pool indicated by the resource pool information is used to select a transmission resource of the sidelink connection.

With reference to the seventh optional implementation of the fourth aspect, in an eighth optional implementation of the fourth aspect, the method further includes:
receiving a broadcast message from the access network device after the first terminal device is disconnected from the access network device, where the broadcast message includes first resource pool information, and a first resource pool indicated by the first resource pool information is used to select a transmission resource of the sidelink connection; and
sending second resource pool information to the second terminal device, where a second resource pool indicated by the second resource pool information includes all or some resources in the first resource pool.

For technical effects brought by the fourth aspect or the optional implementations of the fourth aspect, refer to the descriptions of the technical effects brought by the first aspect or the corresponding implementations.

According to a fifth aspect, a fifth communications method is provided. The method includes: receiving a fourth message from a first terminal device; and obtaining first resource information from the fourth message, where the first resource information is used to indicate a first resource allocated by an access network device to a second terminal device, and the first resource is used by the second terminal device to send data to the first terminal device by using a sidelink connection.

The method may be performed by a fifth communications apparatus. The fifth communications apparatus may be a communications device, or may be a communications apparatus, for example, a chip, that can support the communications device in implementing a function required in the method. For example, the fifth communications apparatus is a terminal device, a chip that is disposed in the terminal device and that is configured to implement a function of the terminal device, or another component configured to implement the function of the terminal device. In the following description process, an example in which the fifth communications apparatus is the terminal device is used. For example, the terminal device is a second terminal device.

With reference to the fifth aspect, in a first optional implementation of the fifth aspect, the method further includes:
sending a seventh message to the first terminal device, where the seventh message is used to request the first resource, the seventh message further includes QoS information and/or expected periodicity information, the QoS information is used to indicate expected QoS that can be met by the first resource, and the expected periodicity information is used to indicate an expected periodicity of the first resource.

With reference to the fifth aspect or the first optional implementation of the fifth aspect, in a second optional implementation of the fifth aspect, the method further includes:
sending a resource request message to the first terminal device, where the resource request message is used to request to allocate a resource that is used to send data on the sidelink connection after the first terminal device is disconnected from the access network device; and
receiving a third message from the first terminal device, where the third message includes second resource information, the second resource information is used to indicate a second resource allocated to the second terminal device, and the second resource is used by the second terminal device to send data by using the sidelink connection after the first terminal device is disconnected from the access network device.

With reference to the second optional implementation of the fifth aspect, in a third optional implementation of the fifth aspect, the third message further includes first duration information, and the first duration information is used to indicate use duration of the second resource.

With reference to the fifth aspect or the first optional implementation of the fifth aspect, in a fourth optional implementation of the fifth aspect, the method further includes:
receiving second resource pool information from the first terminal device, where a second resource pool indicated by the second resource pool information is used to select a transmission resource of the sidelink connection.

For technical effects brought by the fifth aspect or the optional implementations of the fifth aspect, refer to the descriptions of the technical effects brought by the fourth aspect or the corresponding implementations.

According to a sixth aspect, a sixth communications method is provided. The method includes: determining a first resource allocated to a second terminal device; and sending a fourth message to a first terminal device, where the fourth message includes first resource information, the first resource information is used to indicate the first resource allocated to the second terminal device, and the first resource is used by the second terminal device to send data to the first terminal device by using a sidelink connection.

The method may be performed by a sixth communications apparatus. The sixth communications apparatus may be a communications device, or may be a communications apparatus, for example, a chip, that can support the communications device in implementing a function required in the method. For example, the sixth communications apparatus is a network device, a chip that is disposed in the network device and that is configured to implement a function of the network device, or another component configured to implement the function of the network device. In the following description process, an example in which the sixth communications apparatus is the network device is used. For example, the network device is an access network device.

With reference to the sixth aspect, in a first optional implementation of the sixth aspect, the method further includes:
receiving a first request message from the first terminal device, where the first request message includes a seventh message, the seventh message is used to request the first resource, the seventh message further includes QoS information and/or expected periodicity information, the QoS information is used to indicate expected QoS that can be met by the first resource, and the expected periodicity information is used to indicate an expected periodicity of the first resource.

With reference to the first optional implementation of the sixth aspect, in a second optional implementation of the sixth aspect, the method further includes:
the seventh message includes the QoS information, and the first resource is determined based on the QoS information; and/or
the seventh message includes the expected periodicity information, and the first resource is determined based on the expected periodicity information.

With reference to the sixth aspect, the first optional implementation of the sixth aspect, or the second optional implementation of the sixth aspect, in a third optional implementation of the sixth aspect, the sending a fourth message to a first terminal device includes:
sending the fourth message to the first terminal device by using a second radio bearer corresponding to an RRC connection between the second terminal device and an access network device; or
receiving the fourth message from the access network device by using a second radio bearer between the first terminal device and an access network device, where the second radio bearer is used to transmit relay information corresponding to the second terminal device, and the second radio bearer is configured by the access network device; or
receiving the fourth message from the access network device by using a third radio bearer between the first terminal device and an access network device, where the third radio bearer is used to transmit information corresponding to the first terminal device, and the third radio bearer is established when the first terminal device enters an RRC connected state.

With reference to the sixth aspect, the first optional implementation of the sixth aspect, or the second optional implementation of the sixth aspect, in a fourth optional implementation of the sixth aspect, the method further includes:
receiving a second request message from the first terminal device, where the second request message is used to request to allocate a resource that is used by the second terminal device to send data on the sidelink connection after the first terminal device is disconnected from an access network device; and
sending an RRC release message to the first terminal device, where the RRC release message is used to release an RRC connection between the access network device and the first terminal device, the RRC release message further includes second resource information, the second resource information is used to indicate a second resource allocated to the second terminal device, and the second resource is used by the second terminal device to send data by using the sidelink connection after the first terminal device is disconnected from the access network device.

With reference to the fourth optional implementation of the sixth aspect, in a fifth optional implementation of the sixth aspect, the RRC release message and the third message further include first duration information, and the first duration information is used to indicate use duration of the second resource.

With reference to the fourth optional implementation of the sixth aspect or the fifth optional implementation of the sixth aspect, in a sixth optional implementation of the sixth aspect, the RRC release message further includes third resource information, the third resource information is used to indicate a third resource allocated to the first terminal device, and the third resource is used by the first terminal device to send data by using the sidelink connection after the first terminal device is disconnected from the access network device.

With reference to the sixth optional implementation of the sixth aspect, in a seventh optional implementation of the sixth aspect, the RRC release message further includes second duration information, and the second duration information is used to indicate use duration of the third resource.

With reference to the sixth aspect, the first optional implementation of the sixth aspect, or the second optional implementation of the sixth aspect, in an eighth optional implementation of the sixth aspect, the method further includes:
receiving a resource request message from the first terminal device, where the resource request message is used to request to forward, to the second terminal device, resource pool information broadcast by an access network device; and
sending second indication information to the first terminal device, where the second indication information indicates that the broadcast resource pool information is allowed to be forwarded to the second terminal device, and a resource pool indicated by the resource pool information is used to select a transmission resource of the sidelink connection.

With reference to the eighth optional implementation of the sixth aspect, in a ninth optional implementation of the sixth aspect, the method further includes:
sending a broadcast message after the first terminal device is disconnected from the access network device, where the broadcast message includes first resource pool information, and a first resource pool indicated by the first resource pool information is used to select a transmission resource of the sidelink connection.

For technical effects brought by the sixth aspect or the optional implementations of the sixth aspect, refer to the descriptions of the technical effects brought by the fourth aspect or the corresponding implementations.

According to a seventh aspect, a communications apparatus is provided. For example, the communications apparatus is the first communications apparatus described above. The first communications apparatus is configured to perform the method in any one of the first aspect or the possible implementations of the first aspect. Specifically, the first communications apparatus may include a module configured to perform the method in any one of the first aspect or the possible implementations of the first aspect, for example, a processing module. Optionally, the first communications apparatus may further include a transceiver module. For example, the transceiver module may include a sending module and a receiving module. The sending module and the receiving module may be different function modules, or may be a same function module that can implement different functions. For example, the first communications apparatus is a communications device, or is a chip or another component disposed in the communications device. For example, the communications device is a terminal device, for example, a first terminal device. The following uses an example in which the first communications apparatus is the first terminal device. For example, the transceiver module may alternatively be implemented by a transceiver, and the processing module may alternatively be implemented by a processor. Alternatively, the sending module may be implemented by a transmitter, and the receiving module may be implemented by a receiver. The transmitter and the receiver may be different function modules, or may be a same function module that can implement different functions. For example, if the first communications apparatus is the communications device, the transceiver is implemented by an antenna, a feeder, and a codec in the communications device. Alternatively, if the first communications apparatus is the chip disposed in the communications device, the transceiver (or the transmitter and the receiver) is, for example, a communications interface in the chip. The communications interface is connected to a radio frequency transceiver component in the communications device, to send and receive information by using the radio frequency transceiver component.

According to an eighth aspect, a communications apparatus is provided. For example, the communications apparatus is the second communications apparatus described above. The second communications apparatus is configured to perform the method in any one of the second aspect or the possible implementations of the second aspect. Specifically, the second communications apparatus may include a module configured to perform the method in any one of the second aspect or the possible implementations of the second aspect, for example, a processing module. Optionally, the second communications apparatus may further include a transceiver module. For example, the transceiver module may include a sending module and a receiving module. The sending module and the receiving module may be different function modules, or may be a same function module that can implement different functions. For example, the second communications apparatus is a communications device, or is a chip or another component disposed in the communications device. For example, the communications device is a terminal device, for example, a second terminal device. The following uses an example in which the second communications apparatus is the second terminal device. For example, the transceiver module may alternatively be implemented by a transceiver, and the processing module may alternatively be implemented by a processor. Alternatively, the sending module may be implemented by a transmitter, and the receiving module may be implemented by a receiver. The transmitter and the receiver may be different function modules, or may be a same function module that can implement different functions. For example, if the second communications apparatus is the communications device, the transceiver is implemented by an antenna, a feeder, and a codec in the communications device. Alternatively, if the second communications apparatus is the chip disposed in the communications device, the transceiver (or the transmitter and the receiver) is, for example, a communications interface in the chip. The communications interface is connected to a radio frequency transceiver component in the communications device, to send and receive information by using the radio frequency transceiver component.

According to a ninth aspect, a communications apparatus is provided. For example, the communications apparatus is the third communications apparatus described above. The third communications apparatus is configured to perform the method in any one of the third aspect or the possible implementations of the third aspect. Specifically, the third communications apparatus may include a module configured to perform the method in any one of the third aspect or the possible implementations of the third aspect, for example, a processing module. Optionally, the third communications apparatus may further include a transceiver module. For example, the transceiver module may include a sending module and a receiving module. The sending module and the receiving module may be different function modules, or may be a same function module that can implement different functions. For example, the third communications apparatus is a communications device, or is a chip or another component disposed in the communications device. For example, the communications device is a network device. For example, the network device is an access network device. The following uses an example in which the third communications apparatus is the network device. For example, the transceiver module may alternatively be implemented by a transceiver, and the processing module may alternatively be implemented by a processor. Alternatively, the sending module may be implemented by a transmitter, and the receiving module may be implemented by a receiver. The transmitter and the receiver may be different function modules, or may be a same function module that can implement different functions. For example, if the third communications apparatus is the communications device, the transceiver is implemented by an antenna, a feeder, and a codec in the communications device. Alternatively, if the third communications apparatus is the chip disposed in the communications device, the transceiver (or the transmitter and the receiver) is, for example, a communications interface in the chip. The communications interface is connected to a radio frequency transceiver component in the communications device, to send and receive information by using the radio frequency transceiver component.

According to a tenth aspect, a communications apparatus is provided. For example, the communications apparatus is the fourth communications apparatus described above. The fourth communications apparatus is configured to perform the method in any one of the fourth aspect or the possible implementations. Specifically, the fourth communications apparatus may include modules configured to perform the method in any one of the fourth aspect or the possible implementations, for example, a processing module and a transceiver module. For example, the transceiver module may include a sending module and a receiving module. The sending module and the receiving module may be different function modules, or may be a same function module that can implement different functions. For example, the fourth communications apparatus is a communications device, or is a chip or another component disposed in the communications device. For example, the communications device is a terminal device, for example, a first terminal device. The following uses an example in which the fourth communications apparatus is the first terminal device. For example, the transceiver module may alternatively be implemented by a transceiver, and the processing module may alternatively be implemented by a processor. Alternatively, the sending module may be implemented by a transmitter, and the receiving module may be implemented by a receiver. The transmitter and the receiver may be different function modules, or may be a same function module that can implement different functions. For example, if the fourth communications apparatus is the communications device, the transceiver is implemented by an antenna, a feeder, and a codec in the communications device. Alternatively, if the fourth communications apparatus is the chip disposed in the communications device, the transceiver (or the transmitter and the receiver) is, for example, a communications interface in the chip. The communications interface is connected to a radio frequency transceiver component in the communications device, to send and receive information by using the radio frequency transceiver component.

According to an eleventh aspect, a communications apparatus is provided. For example, the communications apparatus is the fifth communications apparatus described above. The fifth communications apparatus is configured to perform the method in any one of the fifth aspect or the possible implementations of the fifth aspect. Specifically, the fifth communications apparatus may include a module configured to perform the method in any one of the fifth aspect or the possible implementations of the fifth aspect, for example, a processing module. Optionally, the fifth communications apparatus may further include a transceiver module. For example, the transceiver module may include a sending module and a receiving module. The sending module and the receiving module may be different function modules, or may be a same function module that can implement different functions. For example, the fifth communications apparatus is a communications device, or is a chip or another component disposed in the communications device. For example, the communications device is a terminal device, for example, a second terminal device. The following uses an example in which the fifth communications apparatus is the second terminal device. For example, the transceiver module may alternatively be implemented by a transceiver, and the processing module may alternatively be implemented by a processor. Alternatively, the sending module may be implemented by a transmitter, and the receiving module may be implemented by a receiver. The transmitter and the receiver may be different function modules, or may be a same function module that can implement different functions. For example, if the fifth communications apparatus is the communications device, the transceiver is implemented by an antenna, a feeder, and a codec in the communications device. Alternatively, if the fifth communications apparatus is the chip disposed in the communications device, the transceiver (or the transmitter and the receiver) is, for example, a communications interface in the chip. The communications interface is connected to a radio frequency transceiver component in the communications device, to send and receive information by using the radio frequency transceiver component.

According to a twelfth aspect, a communications apparatus is provided. For example, the communications apparatus is the sixth communications apparatus described above. The sixth communications apparatus is configured to perform the method in any one of the sixth aspect or the possible implementations of the sixth aspect. Specifically, the sixth communications apparatus may include a module configured to perform the method in any one of the sixth aspect or the possible implementations of the sixth aspect, for example, a processing module. Optionally, the sixth communications apparatus may further include a transceiver module. For example, the transceiver module may include a sending module and a receiving module. The sending module and the receiving module may be different function modules, or may be a same function module that can implement different functions. For example, the sixth communications apparatus is a communications device, or is a chip or another component disposed in the communications device. For example, the communications device is a network device. For example, the network device is an access network device. The following uses an example in which the sixth communications apparatus is the network device. For example, the transceiver module may alternatively be implemented by a transceiver, and the processing module may alternatively be implemented by a processor. Alternatively, the sending module may be implemented by a transmitter, and the receiving module may be implemented by a receiver. The transmitter and the receiver may be different function modules, or may be a same function module that can implement different functions. For example, if the sixth communications apparatus is the communications device, the transceiver is implemented by an antenna, a feeder, and a codec in the communications device. Alternatively, if the sixth communications apparatus is the chip disposed in the communications device, the transceiver (or the transmitter and the receiver) is, for example, a communications interface in the chip. The communications interface is connected to a radio frequency transceiver component in the communications device, to send and receive information by using the radio frequency transceiver component.

According to a thirteenth aspect, a communications apparatus is provided. For example, the communications apparatus is the first communications apparatus described above. The communications apparatus includes one or more processors, and optionally, may further include a communications interface. The communications interface may be configured to communicate with another apparatus or device. Optionally, the first communications apparatus may further include one or more memories, configured to store computer instructions. The one or more processors and the one or more memories are coupled, to implement the method described in the first aspect or the possible implementations. Alternatively, the first communications apparatus may include no memory, and at least one memory may be located outside the first communications apparatus. The one or more processors, the one or more memories, and the communications interface are coupled, to implement the method described in the first aspect or the possible implementations. For example, the first communications apparatus may further include one or more computer programs, the one or more computer programs are stored in the one or more memories, and the one or more computer programs include computer instructions. When the one or more processors execute the computer instructions stored in the one or more memories, the first communications apparatus is enabled to perform the method in any one of the first aspect or the possible implementations. For example, the first communications apparatus is a communications device, or is a chip or another component disposed in the communications device. For example, the communications device is a terminal device, for example, a first terminal device.

For example, if the first communications apparatus is the communications device, the communications interface is implemented by a transceiver (or a transmitter and a receiver) in the communications device, and the transceiver is implemented by an antenna, a feeder, and a codec in the communications device. Alternatively, if the first communications apparatus is the chip disposed in the communications device, the communications interface is, for example, an input/output interface such as an input/output pin in the chip. The communications interface is connected to a radio frequency transceiver component in the communications device, to send and receive information by using the radio frequency transceiver component.

According to a fourteenth aspect, a communications apparatus is provided. For example, the communications apparatus is the second communications apparatus described above. The communications apparatus includes one or more processors, and optionally, may further include a communications interface. The communications interface may be configured to communicate with another apparatus or device. Optionally, the second communications apparatus may further include a memory, configured to store computer instructions. The one or more processors and the one or more memories are coupled, to implement the method described in the first aspect or the possible implementations. Alternatively, the second communications apparatus may include no memory, and one or more memories may be located outside the second communications apparatus. The one or more processors, the one or more memories, and the communications interface are coupled, to implement the method described in the second aspect or the possible implementations. For example, the second communications apparatus may further include one or more computer programs, the one or more computer programs are stored in the one or more memories, and the one or more computer programs include computer instructions. When the one or more processors execute the computer instructions stored in the one or more memories, the second communications apparatus is enabled to perform the method in any one of the second aspect or the possible implementations. For example, the second communications apparatus is a communications device, or is a chip or another component disposed in the communications device. For example, the communications device is a network device. For example, the network device is a terminal device, for example, a second terminal device.

For example, if the second communications apparatus is the communications device, the communications interface is implemented by a transceiver (or a transmitter and a receiver) in the communications device, and the transceiver is implemented by an antenna, a feeder, and a codec in the communications device. Alternatively, if the second communications apparatus is the chip disposed in the communications device, the communications interface is, for example, an input/output interface such as an input/output pin in the chip. The communications interface is connected to a radio frequency transceiver component in the communications device, to send and receive information by using the radio frequency transceiver component.

According to a fifteenth aspect, a communications apparatus is provided. For example, the communications apparatus is the third communications apparatus described above. The communications apparatus includes one or more processors, and optionally, may further include a communications interface. The communications interface may be configured to communicate with another apparatus or device. Optionally, the third communications apparatus may further include one or more memories, configured to store computer instructions. The one or more processors and the one or more memories are coupled, to implement the method described in the third aspect or the possible implementations of the third aspect. Alternatively, the third communications apparatus may include no memory, and one or more memories may be located outside the third communications apparatus. The one or more processors, the one or more memories, and the communications interface are coupled, to implement the method described in the third aspect or the possible implementations. For example, the third communications apparatus may further include one or more computer programs, the one or more computer programs are stored in the one or more memories, and the one or more computer programs include computer instructions. When the one or more processors execute the computer instructions stored in the one or more memories, the third communications apparatus is enabled to perform the method in any one of the third aspect or the possible implementations. For example, the third communications apparatus is a communications device, or is a chip or another component disposed in the communications device. For example, the communications device is a network device, for example, an access network device.

For example, if the third communications apparatus is the communications device, the communications interface is implemented by a transceiver (or a transmitter and a receiver) in the communications device, and the transceiver is implemented by an antenna, a feeder, and a codec in the communications device. Alternatively, if the third communications apparatus is the chip disposed in the communications device, the communications interface is, for example, an input/output interface such as an input/output pin in the chip. The communications interface is connected to a radio frequency transceiver component in the communications device, to send and receive information by using the radio frequency transceiver component.

According to a sixteenth aspect, a communications apparatus is provided. For example, the communications apparatus is the fourth communications apparatus described above. The communications apparatus includes one or more processors, and optionally, may further include a communications interface. The communications interface may be configured to communicate with another apparatus or device. Optionally, the fourth communications apparatus may further include a memory, configured to store computer instructions. The one or more processors and the one or more memories are coupled, to implement the method described in the fourth aspect or the possible implementations. Alternatively, the fourth communications apparatus may include no memory, and one or more memories may be located outside the fourth communications apparatus. The one or more processors, the one or more memories, and the communications interface are coupled, to implement the method described in the fourth aspect or the possible implementations. For example, the fourth communications apparatus may further include one or more computer programs, the one or more computer programs are stored in the one or more memories, and the one or more computer programs include computer instructions. When the one or more processors execute the computer instructions stored in the one or more memories, the fourth communications apparatus is enabled to perform the method in any one of the fourth aspect or the possible implementations. For example, the fourth communications apparatus is a communications device, or is a chip or another component disposed in the communications device. For example, the communications device is a terminal device. For example, the terminal device is a first terminal device.

For example, if the fourth communications apparatus is the communications device, the communications interface is implemented by a transceiver (or a transmitter and a receiver) in the communications device, and the transceiver is implemented by an antenna, a feeder, and a codec in the communications device. Alternatively, if the fourth communications apparatus is the chip disposed in the communications device, the communications interface is, for example, an input/output interface such as an input/output pin in the chip. The communications interface is connected to a radio frequency transceiver component in the communications device, to send and receive information by using the radio frequency transceiver component.

According to a seventeenth aspect, a communications apparatus is provided. For example, the communications apparatus is the fifth communications apparatus described above. The communications apparatus includes one or more processors, and optionally, may further include a communications interface. The communications interface may be configured to communicate with another apparatus or device. Optionally, the fifth communications apparatus may further include a memory, configured to store computer instructions. The one or more processors and the one or more memories are coupled, to implement the method described in the fifth aspect or the possible implementations. Alternatively, the fifth communications apparatus may include no memory, and one or more memories may be located outside the fifth communications apparatus. The one or more processors, the one or more memories, and the communications interface are coupled, to implement the method described in the fifth aspect or the possible implementations. For example, the fifth communications apparatus may further include one or more computer programs, the one or more computer programs are stored in the one or more memories, and the one or more computer programs include computer instructions. When the one or more processors execute the computer instructions stored in the one or more memories, the fifth communications apparatus is enabled to perform the method in any one of the fifth aspect or the possible implementations. For example, the fifth communications apparatus is a communications device, or is a chip or another component disposed in the communications device. For example, the communications device is a terminal device. For example, the terminal device is a second terminal device.

For example, if the fifth communications apparatus is the communications device, the communications interface is implemented by a transceiver (or a transmitter and a receiver) in the communications device, and the transceiver is implemented by an antenna, a feeder, and a codec in the communications device. Alternatively, if the fifth communications apparatus is the chip disposed in the communications device, the communications interface is, for example, an input/output interface such as an input/output pin in the chip. The communications interface is connected to a radio frequency transceiver component in the communications device, to send and receive information by using the radio frequency transceiver component.

According to an eighteenth aspect, a communications apparatus is provided. For example, the communications apparatus is the sixth communications apparatus described above. The communications apparatus includes one or more processors, and optionally, may further include a communications interface. The communications interface may be configured to communicate with another apparatus or device. Optionally, the sixth communications apparatus may further include a memory, configured to store computer instructions. The one or more processors and the one or more memories are coupled, to implement the method described in the sixth aspect or the possible implementations. Alternatively, the sixth communications apparatus may include no memory, and one or more memories may be located outside the sixth communications apparatus. The one or more processors, the one or more memories, and the communications interface are coupled, to implement the method described in the sixth aspect or the possible implementations. For example, the sixth communications apparatus may further include one or more computer programs, the one or more computer programs are stored in the one or more memories, and the one or more computer programs include computer instructions. When the one or more processors execute the computer instructions stored in the one or more memories, the sixth communications apparatus is enabled to perform the method in any one of the sixth aspect or the possible implementations. For example, the sixth communications apparatus is a communications device, or is a chip or another component disposed in the communications device. For example, the communications device is a network device. For example, the network device is an access network device.

For example, if the sixth communications apparatus is the communications device, the communications interface is implemented by a transceiver (or a transmitter and a receiver) in the communications device, and the transceiver is implemented by an antenna, a feeder, and a codec in the communications device. Alternatively, if the sixth communications apparatus is the chip disposed in the communications device, the communications interface is, for example, an input/output interface such as an input/output pin in the chip. The communications interface is connected to a radio frequency transceiver component in the communications device, to send and receive information by using the radio frequency transceiver component.

According to a nineteenth aspect, a first communications system is provided. The communications system includes the communications apparatus in the seventh aspect or the communications apparatus in the thirteenth aspect, and includes the communications apparatus in the eighth aspect or the communications apparatus in the fourteenth aspect.

With reference to the nineteenth aspect, in a first optional implementation of the nineteenth aspect, the first communications system further includes the communications apparatus in the ninth aspect or the communications apparatus in the fifteenth aspect.

According to a twentieth aspect, a second communications system is provided. The second communications system includes the communications apparatus in the tenth aspect or the communications apparatus in the sixteenth aspect, and includes the communications apparatus in the eleventh aspect or the communications apparatus in the seventeenth aspect.

With reference to the twentieth aspect, in a first optional implementation of the twentieth aspect, the second communications system further includes the communications apparatus in the twelfth aspect or the communications apparatus in the eighteenth aspect.

According to a twenty-first aspect, a computer-readable storage medium is provided. The computer-readable storage medium is configured to store a computer program, and when the computer program is run on a computer, the computer is enabled to perform the method in any one of the first aspect or the possible implementations of the first aspect.

According to a twenty-second aspect, a computer-readable storage medium is provided. The computer-readable storage medium is configured to store a computer program, and when the computer program is run on a computer, the computer is enabled to perform the method in any one of the second aspect or the possible implementations of the second aspect.

According to a twenty-third aspect, a computer-readable storage medium is provided. The computer-readable storage medium is configured to store a computer program, and when the computer program is run on a computer, the computer is enabled to perform the method in any one of the third aspect or the possible implementations of the third aspect.

According to a twenty-fourth aspect, a computer-readable storage medium is provided. The computer-readable storage medium is configured to store a computer program, and when the computer program is run on a computer, the computer is enabled to perform the method in any one of the fourth aspect or the possible implementations of the fourth aspect.

According to a twenty-fifth aspect, a computer-readable storage medium is provided. The computer-readable storage medium is configured to store a computer program, and when the computer program is run on a computer, the computer is enabled to perform the method in any one of the fifth aspect or the possible implementations of the fifth aspect.

According to a twenty-sixth aspect, a computer-readable storage medium is provided. The computer-readable storage medium is configured to store a computer program, and when the computer program is run on a computer, the computer is enabled to perform the method in any one of the sixth aspect or the possible implementations of the sixth aspect.

According to a twenty-seventh aspect, a computer program product including instructions is provided. The computer program product is configured to store a computer program, and when the computer program is run on a computer, the computer is enabled to perform the method in any one of the first aspect or the possible implementations of the first aspect.

According to a twenty-eighth aspect, a computer program product including instructions is provided. The computer program product is configured to store a computer program, and when the computer program is run on a computer, the computer is enabled to perform the method in any one of the second aspect or the possible implementations of the second aspect.

According to a twenty-ninth aspect, a computer program product including instructions is provided. The computer program product is configured to store a computer program, and when the computer program is run on a computer, the computer is enabled to perform the method in any one of the third aspect or the possible implementations of the third aspect.

According to a thirtieth aspect, a computer program product including instructions is provided. The computer program product is configured to store a computer program, and when the computer program is run on a computer, the computer is enabled to perform the method in any one of the fourth aspect or the possible implementations of the fourth aspect.

According to a thirty-first aspect, a computer program product including instructions is provided. The computer program product is configured to store a computer program, and when the computer program is run on a computer, the computer is enabled to perform the method in any one of the fifth aspect or the possible implementations of the fifth aspect.

According to a thirty-second aspect, a computer program product including instructions is provided. The computer program product is configured to store a computer program, and when the computer program is run on a computer, the computer is enabled to perform the method in any one of the sixth aspect or the possible implementations of the sixth aspect.

In embodiments of this application, the second terminal device does not need to directly communicate with a network device. Therefore, a Uu interface may not need to be set, which helps reduce power consumption of the second terminal device.

### BRIEF DESCRIPTION OF DRAWINGS

FIG. 1A is a schematic diagram of a V2X scenario;
FIG. 1B is a schematic diagram of communication between a mobile phone and smart glasses by using a sidelink;
FIG. 2 is a schematic diagram of a process of data transmission between smart glasses and a smartphone;
FIG. 3 is a schematic diagram of an application scenario according to an embodiment of this application;
FIG. 4 is a flowchart of a first communications method according to an embodiment of this application;
FIG. 5 is a flowchart of a second communications method according to an embodiment of this application;
FIG. 6A and FIG. 6B are a flowchart of a third communications method according to an embodiment of this application;
FIG. 7 is a flowchart of a fourth communications method according to an embodiment of this application;
FIG. 8 is a flowchart of a fifth communications method according to an embodiment of this application;
FIG. 9 is a flowchart of a sixth communications method according to an embodiment of this application;
FIG. 10 is a schematic block diagram of a first terminal device according to an embodiment of this application;
FIG. 11 is a schematic block diagram of a second terminal device according to an embodiment of this application;
FIG. 12 is a schematic block diagram of an access network device according to an embodiment of this application;
FIG. 13 is a schematic block diagram of a communications apparatus according to an embodiment of this application;
FIG. 14 is another schematic block diagram of a communications apparatus according to an embodiment of this application;
FIG. 15 is still another schematic block diagram of a communications apparatus according to an embodiment of this application; and
FIG. 16 is yet another schematic block diagram of a communications apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.

(1) Terminal device: The terminal device includes a device that provides a voice and/or data connectivity for a user. Specifically, the terminal device includes a device that provides a voice for the user, includes a device that provides data connectivity for the user, or includes a device that provides a voice and data connectivity for the user. For example, the terminal device may include a handheld device having a wireless connection function or a processing device connected to a wireless modem. The terminal device may communicate with a core network over a radio access network (radio access network, RAN), and exchange a voice or data with the RAN, or interact a voice and data with the RAN. The terminal device may include user equipment (user equipment, UE), a wireless terminal device, a mobile terminal device, a device-to-device (device-to-device, D2D) terminal device, a vehicle-to-everything (vehicle-to-everything, V2X) terminal device, a machine-to-machine/machine-type communications (machine-to-machine/machine-type communications, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, or a portable, pocket-sized, handheld, or computer built-in mobile apparatus, for example, a device such as a personal communications service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with relatively low power consumption, a device with a limited storage capability, or a device with a limited computing capability. For example, the terminal device includes an information sensing device such as a barcode, a radio frequency identification (radio frequency identification, RFID) reader, a sensor, a global positioning system (global positioning system, GPS), or a laser scanner.

As an example instead of a limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that is directly worn or integrated into clothes or accessories of a user. The wearable device is more than a hardware device, and is used to implement powerful functions through software support, data exchange, and cloud interaction. In a broad sense, the wearable intelligent device includes a full-featured and large-sized device that can implement all or some of functions without depending on a smartphone, for example, a smart watch or smart glasses, and includes a device that focuses on only one type of application function and needs to collaboratively work with another device such as the smartphone, for example, various smart bands, smart helmets, or smart jewelry for monitoring physical signs.

If the terminal devices described above are located in a vehicle (for example, placed in the vehicle or installed in the vehicle), the terminal devices may be all considered as vehicle-mounted terminal devices. For example, the vehicle-mounted terminal device is also referred to as an on-board unit (on-board unit, OBU).

In embodiments of this application, the terminal device may further include a relay (relay). Alternatively, it is understood that any device that can perform data communication with a base station may be considered as a terminal device.

In embodiments of this application, an apparatus configured to implement a function of the terminal device may be a terminal device, or may be an apparatus, for example, a chip system, that can support the terminal device in implementing the function. The apparatus may be installed in the terminal device. In embodiments of this application, the chip system may include a chip, or may include a chip and another discrete component. In the technical solutions provided in embodiments of this application, the technical solutions provided in embodiments of this application are described by using an example in which the apparatus configured to implement the function of the terminal is the terminal device.

(2) Network device: The network device includes, for example, an access network (access network, AN) device such as a base station (for example, an access point), and may be a device that is in an access network and that communicates with a wireless terminal device through one or more cells on an air interface. Alternatively, a network device in a vehicle-to-everything (vehicle-to-everything, V2X) technology is, for example, a road side unit (road side unit, RSU). The base station may be configured to perform mutual conversion between a received over-the-air frame and an IP packet, to serve as a router between a terminal device and the remaining part of the access network, where the remaining part of the access network may include an IP network. The RSU may be a fixed infrastructure entity that supports a V2X application, and may exchange a message with another entity that supports the V2X application. The network device may further coordinate attribute management of the air interface. For example, the network device may include an evolved NodeB (NodeB, eNB, or e-NodeB, evolutional NodeB) in an LTE system or a long term evolution-advanced (long term evolution-advanced, LTE-A) system, may include a next generation NodeB (next generation NodeB, gNB) in a fifth generation (the 5th generation, 5G) NR system (also referred to as an NR system for short), or may include a centralized unit (centralized unit, CU) and a distributed unit (distributed unit, DU) in a cloud radio access network (cloud radio access network, Cloud RAN) system. This is not limited in this embodiment of this application.

The network device may further include a core network device. For example, the core network device includes an access and mobility management function (access and mobility management function, AMF), a session management function (session management function, SMF), or a user plane function (user plane function, UPF) in a 5G system, or includes a mobility management entity (mobility management entity, MME) in a 4G system.

In embodiments of this application, an apparatus configured to implement a function of a network device may be a network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus configured to implement the function of the network device is the network device.

(3) Radio resource control (radio resource control, RRC) state: A terminal device has three RRC states: an RRC connected (connected) state, an RRC idle (idle) state, and an RRC inactive (inactive) state.

RRC connected state (which may also be referred to as a connected state for short, where in this specification, the "connected state" and the "RRC connected state" are a same concept, and may be interchanged): The terminal device establishes an RRC connection to a network, and may transmit data.

RRC idle state (which may also be referred to as an idle state for short, where in this specification, the "idle state" and the "RRC idle state" are a same concept, and may be interchanged): The terminal device does not establish an RRC connection to a network, and a base station does not store a context of the terminal device. If the terminal device needs to enter the RRC connected state from the RRC idle state, the terminal device needs to initiate an RRC connection establishment process.

RRC inactive state (which may also be referred to as an inactive state for short, where in this specification, the "inactive state" and the "RRC inactive state" are a same concept, and may be interchanged): The terminal device previously enters the RRC connected state through an anchor base station. Then, the anchor base station releases the RRC connection, but stores the context of the terminal device. If the terminal device needs to enter the RRC connected state from the RRC inactive state again, the terminal device needs to initiate an RRC connection resume process (or referred to as an RRC connection reestablishment process) through a base station on which the terminal device currently camps. Because the terminal device may be in a moving state, the base station on which the terminal device currently camps and the anchor base station of the terminal device may be a same base station, or may be different base stations. Compared with the RRC establishment process, the RRC resume process has a shorter delay and lower signaling overheads. However, the base station needs to store the context of the terminal device. This causes storage overheads of the base station.

(4) The terms "system" and "network" in embodiments of this application may be used interchangeably. "At least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following" or a similar expression thereof indicates "any combination of the following", including "one or any combination of the following". For example, at least one of a, b, or c may indicate: a, b, c, a and b, a and c, b and c, or a, b, and c, where a, b, and c may be singular or plural.

In addition, unless otherwise stated, in embodiments of this application, ordinal numbers such as "first" and "second" are intended to distinguish between a plurality of objects, but are not intended to limit sizes, content, orders, time sequences, priorities, importance, or the like of the plurality of objects. For example, a first message and a second message are merely used to distinguish between different messages, but do not indicate that the two messages are different in an information amount, content, a sending sequence, a priority, or importance.

The foregoing describes some noun concepts used in embodiments of this application. The following describes technical features of embodiments of this application.

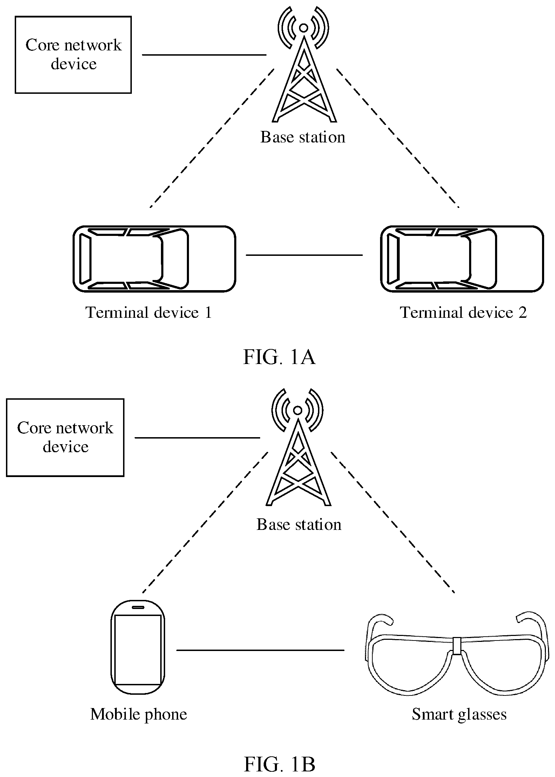

A sidelink (sidelink, SL) is a transmission link between two terminal devices. For example, FIG. 1A is a schematic diagram of V2X. Two vehicles may be considered as two terminal devices: a terminal device 1 and a terminal device 2. The two terminal devices may communicate with each other by using the sidelink. A base station may allocate, to the two terminal devices, resources used for sidelink communication. In addition, FIG. 1B is a schematic diagram of communication between a mobile phone and smart glasses by using a sidelink. The smart glasses are, for example, augmented reality (augmented reality, AR)/VR glasses. The terminal device (for example, the vehicle in FIG. 1A, or the mobile phone or the smart glasses in FIG. 1B) communicates with an access network device (for example, the base station in FIG. 1A or FIG. 1B) through a Uu interface.

The following considers a scenario in which a user may use the smart glasses to watch a VR video stored in a smartphone. For example, compared with the smart glasses, the smartphone may have larger storage space. The smartphone may store some information such as a VR video, and the user may use the smart glasses to watch the VR video stored in the smartphone.

If the user needs to use the smart glasses to watch the VR video stored in the smartphone, a data transmission process is involved between the smart glasses and the smartphone. If data transmission needs to be performed between the smart glasses and the smartphone, a communication connection may be established between the smart glasses and the smartphone. For example, a short-range communication connection, for example, a Bluetooth connection or a wireless fidelity (wireless fidelity, Wi-Fi) connection may be established between the smartphone and the smart glasses. If a Bluetooth connection is established between the smartphone and the smart glasses, because the Bluetooth connection is a low-speed transmission manner and has a relatively low transmission rate, if the user wants to watch content such as a VR video, a phenomenon such as frame freezing may occur due to the relatively low transmission rate, resulting in a relatively poor watching effect. Alternatively, if a Wi-Fi connection is established between the smartphone and the smart glasses, when transmitting data by using the Wi-Fi connection, the terminal device needs to obtain a resource in a preemption-based manner. This preemption-based manner causes transmission instability. For example, a transmission delay may be caused at some moments due to a resource preemption failure.

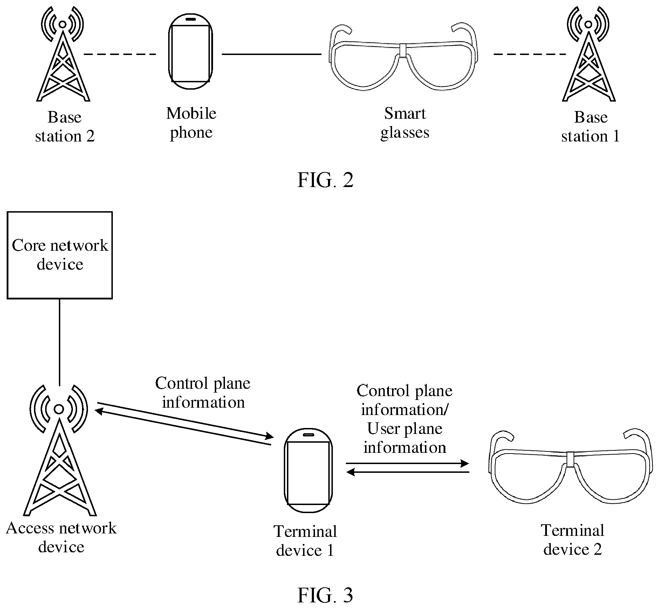

Considering these problems, the smartphone and the smart glasses may not communicate with each other by using a short-range communication connection, but implement data transmission by establishing a sidelink connection. The two terminal devices communicate with each other by using the sidelink connection, so that a transmission rate can be ensured, and transmission instability caused because a resource needs to be preempted does not occur. This is more advantageous. If the two terminal devices need to communicate with each other by using the sidelink connection, a network needs to allocate a resource used to transmit data on the sidelink connection. In addition, the network may further need to perform authentication on the terminal devices. For example, as shown in FIG. 2, the smart glasses and the smartphone may communicate with each other by using the sidelink connection. It can be learned from FIG. 2 that the smart glasses are connected to a base station, and the smartphone is also connected to a base station. For example, the smart glasses are connected to a base station 1, and the smartphone is connected to a base station 2. The base station 1 performs authentication on the smart glasses through a Uu interface on the smart glasses. After the authentication succeeds, the base station 1 may allocate a corresponding resource to the smart glasses through the Uu interface, so that the smart glasses transmit data to the smartphone. In addition, the base station 2 performs authentication on the smartphone through a Uu interface on the smartphone. After the authentication succeeds, the base station 2 may allocate a corresponding resource to the smartphone through the Uu interface, so that the smartphone transmits data to the smart glasses. It can be learned that, in this current manner, a Uu interface needs to be set for both the smart glasses and the smartphone, to communicate with the base station. The Uu interface is also referred to as a Uu interface, is set on a corresponding terminal device (for example, the smartphone or the smart glasses), and is configured to implement communication between the terminal device and the network. "U" indicates a user to network interface (user to network interface), and u indicates universal (universal).

To implement communication with the network, or to communicate with the network through the Uu interface, the terminal device needs to have one or more hardware modules. The one or more hardware modules may include all hardware modules configured to implement Uu interface communication in the terminal device, for example, may include a radio frequency antenna, a radio frequency processing chip, and a module configured to complete a Uu interface function in a baseband chip, and may further include another hardware module. In addition, a function of performing communication by the terminal device through the Uu interface may be considered as a logical function inside the terminal device. In other words, if the terminal device needs to perform communication through the Uu interface, the one or more hardware modules described above need to be disposed in hardware, and there is also a corresponding logical function (or a logical module) logically. The logical module may be considered as running in a processor (for example, a processor disposed on the baseband chip) of the terminal device, and occupies a resource of the processor. In embodiments of this application, the Uu interface may be considered as a logical concept. For example, the Uu interface may be considered as the logical module. Alternatively, the Uu interface may be considered as a hardware concept. For example, the Uu interface may be considered as the one or more hardware modules.

If the Uu interface is considered as a logical concept in embodiments of this application, as described below in embodiments of this application, that the Uu interface is not set for the terminal device, or the Uu interface of the terminal device is removed, or the Uu interface of the terminal device is cancelled means disabling a logical function of Uu communication of the terminal device, or disabling a logical module used for Uu interface communication of the terminal device. However, the one or more hardware modules used by the terminal device to communicate with the network through the Uu interface are still disposed on the terminal device. Correspondingly, as described below in embodiments of this application, that the Uu interface is set for the terminal device means enabling a logical function of Uu communication of the terminal device, or enabling a logical module used for Uu interface communication of the terminal device. The one or more hardware modules used by the terminal device to communicate with the network through the Uu interface are disposed on the terminal device.

Alternatively, if the Uu interface is considered as a hardware concept in embodiments of this application, as described below in embodiments of this application, that the Uu interface is not set for the terminal device, or the Uu interface of the terminal device is removed, or the Uu interface of the terminal device is cancelled means that the one or more hardware modules are not disposed on the terminal device. Because the one or more hardware modules are not disposed on the terminal device, the logical module configured to implement Uu interface communication in the terminal device does not exist. Correspondingly, as described below in embodiments of this application, that the Uu interface is set for the terminal device means that the one or more hardware modules are disposed on the terminal device, and therefore the logical module configured to implement Uu interface communication in the terminal device also exists. In other words, the logical module configured to implement Uu interface communication in the terminal device is enabled.

If the Uu interface is considered as a logical concept, because the Uu interface needs to be set, the logical module configured to implement a Uu interface communication function occupies a processor resource of the terminal device. Consequently, power consumption of the terminal device is relatively high. For example, a battery capacity of the terminal device such as the smart glasses is relatively small. If power consumption caused by the logical module configured to implement the Uu interface communication function is relatively high, a service life of the terminal device is shortened. Alternatively, if the Uu interface is considered as a hardware concept, because the Uu interface needs to be set, the one or more hardware modules need to be disposed on the terminal device. Consequently, a size of the terminal device is increased. For example, the terminal device such as the smart glasses is not conducive to meeting design requirements such as "light" and "thin" of the terminal device, and has relatively high costs. In addition, the Uu interface also causes specific power consumption, and consequently power consumption of the terminal device is relatively high. For example, a battery capacity of the terminal device such as the smart glasses is relatively small. If power consumption caused by the logical module configured to implement the Uu interface communication function is relatively high, a service life of the terminal device is shortened.

In view of this, the technical solutions in embodiments of this application are provided. In embodiments of this application, control plane information of a second terminal device may be relayed by using a first terminal device, so that a network device can perform an operation such as authentication or resource allocation on the second terminal device. In this manner, because the second terminal device does not need to directly communicate with the network device, a Uu interface may not need to be set for the second terminal device. If the Uu interface is considered as a logical concept, because the Uu interface does not need to be set, a logical module configured to implement a Uu interface communication function does not occupy a processor resource of the second terminal device, thereby reducing power consumption of the second terminal device. In addition, the processor resource of the second terminal device may be used by another function. Alternatively, if the Uu interface is considered as a hardware concept, because the Uu interface does not need to be set, the second terminal device can be designed in a lighter and thinner direction, thereby reducing costs, and reducing power consumption of the second terminal device. A method proposed for resource use in embodiments of this application may also be applied to direct communication between the first terminal device and the second terminal device under the control of a network. When using a resource, the second terminal device cannot be directly served by the network (for example, cannot camp on the network).

The technical solutions provided in embodiments of this application may be applied to a fourth generation (the 4th generation, 4G) system, for example, an LTE system, or may be applied to a 5G system, for example, an NR system, or may be applied to a next generation mobile communications system or another similar communications system. This is not specifically limited. In addition, the technical solutions provided in embodiments of this application may be applied to a device-to-device (device-to-device, D2D) scenario, for example, an NR-D2D scenario, or may be applied to a V2X scenario, for example, an NR-V2X scenario, or may be applied to the internet of vehicles, for example, V2X, vehicle-to-vehicle (vehicle-to-vehicle, V2V), or may be applied to fields such as intelligent driving, assisted driving, or intelligent connected vehicles.

FIG. 3 shows an application scenario according to an embodiment of this application. FIG. 3 includes a terminal device 1, a terminal device 2, an access network device, and a core network device. The access network device is an access network device accessed by the terminal device 1, and the core network device is a core network device serving the access network device. Control plane information of the terminal device 2 may be relayed by using the terminal device 1, and data plane information of the terminal device 2 is transmitted only between the terminal device 1 and the terminal device 2, and is not relayed by using the terminal device 1. The relay means that information (for example, control plane information) sent by the terminal device 2 is sent to the access network device by using the terminal device 1, and information (for example, control plane information) sent by the access network device to the terminal device 2 is also sent to the terminal device 2 by using the terminal device 1. A Uu interface is set for the terminal device 1. For a meaning of setting the Uu interface by the terminal device 1, refer to the foregoing descriptions. In addition, in FIG. 3, an example in which the terminal device 1 is a smartphone and the terminal device 2 is smart glasses is used. It can be learned from the foregoing descriptions that the terminal device in embodiments of this application is not limited thereto.

The access network device in FIG. 3 is, for example, a base station. The access network device corresponds to different devices in different systems. For example, the access network device may correspond to an eNB in a 4G system, and corresponds to an access network device, for example, a gNB, in a 5G system. Certainly, the technical solutions provided in embodiments of this application may also be applied to a future mobile communications system. Therefore, the access network device in FIG. 3 may also correspond to a network device in the future mobile communications system. In FIG. 3, an example in which the access network device is the base station is used. Actually, with reference to the foregoing descriptions, the access network device may alternatively be a device such as an RSU. In addition, the core network in FIG. 3 is, for example, an AMF, or may be another core network device.

With reference to FIG. 3, an application scenario may be considered. For example, if a user needs to use the smart glasses to watch a VR video stored in the smartphone, a data transmission process is involved between the smart glasses and the smartphone. In this case, a sidelink connection may be established between the smartphone and the smart glasses, to implement data transmission. The two terminal devices communicate with each other by using the sidelink connection, so that a transmission rate can be ensured, and transmission instability caused because a resource needs to be preempted does not occur. This is more advantageous. If the two terminal devices need to communicate with each other by using the sidelink connection, a network needs to allocate a resource used to transmit data on the sidelink connection. According to the method provided in embodiments of this application, a Uu interface does not need to be set for the smart glasses, or although a Uu interface is provided, the smart glasses are not connected to the network through the Uu interface. Control plane information of the smart glasses may be relayed by using the smartphone, so that the access network device accessed by the smartphone can perform an operation such as authentication on the smart glasses, and can also allocate a resource to the smart glasses. In this way, communication between the smart glasses and the network can be implemented, and the Uu interface of the smart glasses can be canceled, to reduce power consumption of the smart glasses, enhance a sense of design of the smart glasses, and help reduce costs of the smart glasses.

With reference to the accompanying drawings, the following describes the method provided in embodiments of this application.

Currently, two terminal devices may need to perform both direct communication and relay communication. In this case, two sidelink connections may be established between the two terminal devices. One sidelink connection is a sidelink connection used for direct communication. For example, the sidelink connection may be used for a vehicle-to-everything (vehicle-to-everything, V2X) service, and the other sidelink connection is used for relay communication, that is, relay between a user plane and a control plane. After one sidelink connection is established, if one of the terminal devices receives data from a peer end, the terminal device can know whether current data is sent by the other terminal device to the terminal device (direct communication) or sent by the other terminal device to a network through the terminal device (relay communication). Embodiments of this application propose that the control plane information of the second terminal device needs to be relayed by using the first terminal device, to facilitate network control, and user plane data is exchanged only between the two terminal devices. In this case, if two sidelink connections are established, implementation complexity and signaling overhead are definitely increased. In addition, currently, during sidelink connection establishment, one sidelink connection corresponds to one service ID, and different sidelink connections generally correspond to different service IDs. However, the two sidelink connections may actually correspond to a same service. Therefore, if the two sidelink connections are established in the current manner, it is difficult to ensure that the two sidelink connections correspond to a same service.

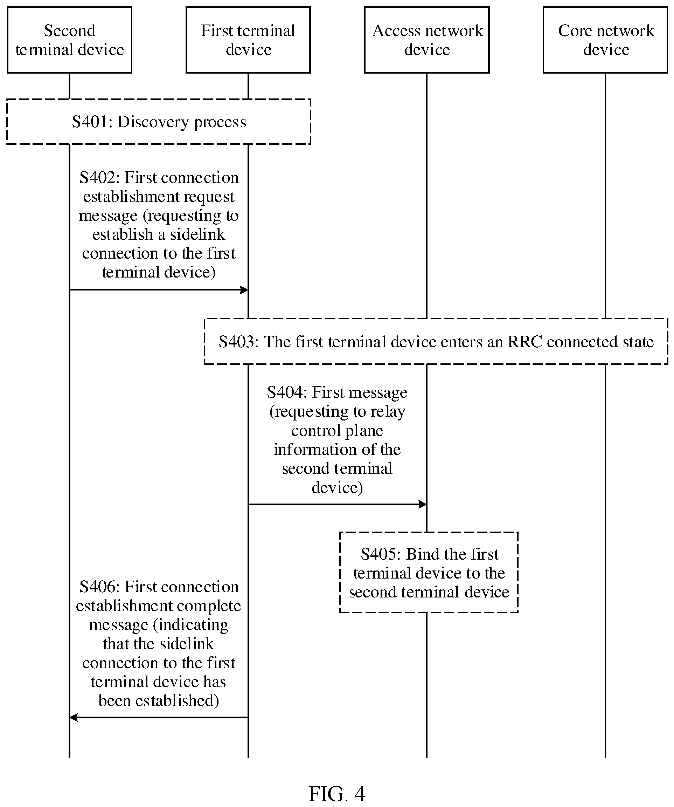

Therefore, an embodiment of this application provides a first communications method. FIG. 4 is a flowchart of the method. In the following description process, an example in which the method is applied to the network architecture shown in FIG. 3 is used. The scenario shown in FIG. 3 is a relay scenario. Alternatively, this embodiment of this application may not be used in a relay scenario, but is used in a scenario in which two terminal devices are directly connected. For example, if a first terminal device can communicate with a second terminal device, the second terminal device is in an out-of-coverage (out of coverage, OOC) state or is not provided with a Uu interface, and the first terminal device is in an in-coverage (in coverage, IC) state, a network device serving the first terminal device performs control plane interaction with the second terminal device.

For ease of description, the following uses an example in which the method is performed by a network device and a terminal device. For example, this embodiment of this application is applied to the network architecture shown in FIG. 3. Therefore, the following core network device may be the core network device in the network architecture shown in FIG. 3. For example, the core network device is an AMF. The following access network device may be the access network device in the network architecture shown in FIG. 3. The following first terminal device may be the terminal device 1 in the network architecture shown in FIG. 3. The following second terminal device may be the terminal device 2 in the network architecture shown in FIG. 3.

S401: The first terminal device and the second terminal device perform a discovery process.

For example, the second terminal device sends a discovery request message, and the discovery request message may be sent in a broadcast manner. The discovery request message may be used to request one or more services. For example, one of the requested services is a relay service, or one of the requested services is a relay service for control plane information, and data plane information does not need to be relayed. Alternatively, the discovery request message may not be used to request any service, but is only used to discover another terminal device.

Because the discovery request message is sent in a broadcast manner, there may be a plurality of terminal devices that can receive the discovery request message. If a terminal device that receives the discovery request message can provide all or some services requested by the second terminal device, the terminal device may send a discovery response message to the second terminal device. For example, if the discovery request message is used to request a relay service, a terminal device (for example, the first terminal device) that can provide the relay service may send a discovery response message to the second terminal device, to indicate that the relay service can be provided for the second terminal device. Alternatively, if the discovery request message is used to request a relay service for control plane information, and data plane information does not need to be relayed, a terminal device (for example, the first terminal device) that can provide this service may send a discovery response message to the second terminal device, to indicate that the relay service for the control plane information can be provided for the second terminal device, and the data plane information is not relayed. Alternatively, if the discovery request message is not used to request any service, a terminal device (for example, the first terminal device) that receives the discovery request message may send a discovery response message to the second terminal device, to confirm that the discovery request message is received, so that the second terminal device can discover the terminal device. For example, the second terminal device requests a relay service. If the second terminal device receives discovery response messages from a plurality of terminal devices, the second terminal device may select one terminal device from the plurality of terminal devices, and perform relay by using the terminal device. For example, the second terminal device may randomly select one terminal device. Alternatively, if moments at which the second terminal device receives discovery response messages are different, the second terminal device may select a terminal device corresponding to a first received discovery response message (that is, a terminal device that sends the discovery response message), and perform relay by using the terminal device.

A resource used by the second terminal device to send the discovery request message and a resource used by the another terminal device to send the discovery response message to the second terminal device may be preconfigured. Alternatively, a resource used by the second terminal device to send the discovery response message is broadcast by the first terminal device.

Alternatively, the discovery process may be initiated by the first terminal device. For example, the first terminal device may send a discovery request message, and the discovery request message may be sent in a broadcast manner. The discovery request message may be used to indicate that the first terminal device can provide one or more services. For example, one of the indicated services is a relay service, or one of the indicated services is a relay service for control plane information, and data plane information does not need to be relayed. Alternatively, the discovery request message may not be used to indicate any service, but is only used to discover another terminal device.

Because the discovery request message is sent in a broadcast manner, there may be a plurality of terminal devices that can receive the discovery request message. If a terminal device that receives the discovery request message needs to perform all or some services indicated by the first terminal device, the terminal device may send a discovery response message to the second terminal device. For example, if the discovery request message is used to indicate that the first terminal device can provide a relay service, a terminal device (for example, the second terminal device) that requires the relay service may send a discovery response message to the first terminal device, to request the first terminal device to provide the relay service. Alternatively, if the discovery request message is used to indicate that the first terminal device can provide a relay service for control plane information, and data plane information does not need to be relayed, a terminal device (for example, the second terminal device) that requires this service may send a discovery response message to the first terminal device, to request the first terminal device to provide the relay service for the control plane information, and the data plane information is not relayed. Alternatively, if the discovery request message is not used to indicate any service, a terminal device (for example, the second terminal device) that receives the discovery request message may send a discovery response message to the first terminal device, to confirm that the discovery request message is received, so that the first terminal device can discover the terminal device. For example, the first terminal device indicates that the first terminal device can provide a relay service. If the first terminal device receives discovery response messages from a plurality of terminal devices, the first terminal device may provide relay services for all the plurality of terminal devices. Alternatively, the first terminal device may select one terminal device from the plurality of terminal devices, and provide a relay service for the terminal device. For example, the second terminal device may randomly select one terminal device. Alternatively, if moments at which the second terminal device receives discovery response messages are different, the second terminal device may select a terminal device corresponding to a first received discovery response message (that is, a terminal device that sends the discovery response message), and provide a relay service for the terminal device.

A resource used by the first terminal device to send the discovery request message and a resource used by the another terminal device to send the discovery response message to the first terminal device may be preconfigured. Alternatively, a resource used by the second terminal device to send the discovery response message is broadcast by the first terminal device.

Alternatively, the first terminal device and the second terminal device may perform a discovery process in another manner. An objective of the discovery process is to enable the first terminal device and the second terminal device to know existence of each other, but no sidelink connection is established between the first terminal device and the second terminal device.

S402: The second terminal device sends a first connection establishment request message to the first terminal device, and correspondingly, the first terminal device receives the first connection establishment request message from the second terminal device.

The first connection establishment request message is used to request to establish a sidelink connection to the first terminal device, and is further used to request the first terminal device to provide a relay service for control plane information of the second terminal device by using the sidelink connection, and data plane information of the second terminal device is transmitted only between the first terminal device and the second terminal device by using the sidelink connection. Alternatively, the first connection establishment request message is further used to request the first terminal device to provide a relay service only for control plane information of the second terminal device by using the sidelink connection. "Only" herein is specific to "control plane information". It may be understood that "providing a relay service only for control plane information of the second terminal device" means providing the relay service only for the control plane information of the second terminal device, and skipping providing a relay service for the data plane information of the second terminal device.

The first connection establishment request message may have a plurality of implementations, which are described below by using examples.

In a first optional implementation of the first connection establishment request message, the first connection establishment request message is, for example, a relay connection establishment request message. The relay connection establishment request message may be used to request a relay service, or the relay connection establishment request message may be used to request the first terminal device to provide a relay service for the second terminal device. The relay service herein is a relay service for control plane information and user plane information, that is, the relay connection establishment request message is used to request the first terminal device to provide a relay service for the control plane information of the second terminal device, and request the first terminal device to provide a relay service for the user plane information of the second terminal device.

However, in this embodiment of this application, the first connection establishment request message is used to request the first terminal device to provide the relay service only for the control plane information of the second terminal device, and not to provide the relay service for the user plane information of the second terminal device. To implement this indication, in an optional manner, if the first connection establishment request message is a relay connection establishment request message, the relay connection establishment request message may include first information. The first information may be used to request the first terminal device to provide the relay service for the control plane information of the second terminal device by using the sidelink connection, and the data plane information of the second terminal device is transmitted only between the first terminal device and the second terminal device by using the sidelink connection. Alternatively, the first information may be used to request the first terminal device to provide the relay service for the control plane information of the second terminal device by using the sidelink connection, and not to provide the relay service for the user plane information of the second terminal device. The first information may be carried in an existing field (field) in the relay connection establishment request message, for example, a reserved bit (bit) of the existing field. Alternatively, a new field may be added to the relay connection establishment request message, to carry the first information.

In a second optional implementation of the first connection establishment request message, the first connection establishment request message is, for example, a direct communication establishment request message. The direct communication establishment request message may be used to request to establish direct communication with the second terminal device, or the direct communication establishment request message may be used to request the first terminal device to establish direct communication with the second terminal device. The direct communication herein is communication between the first terminal device and the second terminal device.

However, in this embodiment of this application, the first connection establishment request message is used to request the first terminal device to provide the relay service only for the control plane information of the second terminal device, and not to provide the relay service for the user plane information of the second terminal device. To implement this indication, in an optional manner, if the first connection establishment request message is a direct communication establishment request message, the direct communication establishment request message may include first information. The first information may be used to request the first terminal device to provide the relay service for the control plane information of the second terminal device by using the sidelink connection, and the data plane information of the second terminal device is transmitted only between the first terminal device and the second terminal device by using the sidelink connection. Alternatively, the first information may be used to request the first terminal device to provide the relay service for the control plane information of the second terminal device by using the sidelink connection, and not to provide the relay service for the user plane information of the second terminal device. The first information may be carried in an existing field in the direct communication establishment request message, for example, a reserved bit of the existing field. Alternatively, a new field may be added to the direct communication establishment request message, to carry the first information.

In a third optional implementation of the first connection establishment request message, the first connection establishment request message is, for example, a control plane relay connection establishment request message. The control plane relay connection request message may be a newly added message, the control plane relay connection establishment request message may be used to request the first terminal device to provide the relay service for the control plane information of the second terminal device by using the sidelink connection, and the data plane information of the second terminal device is transmitted only between the first terminal device and the second terminal device by using the sidelink connection. Alternatively, the first information may be used to request the first terminal device to provide the relay service for the control plane information of the second terminal device by using the sidelink connection, and not to provide the relay service for the user plane information of the second terminal device. In this case, the control plane relay connection request message may not need to include additional indication information (for example, the first information). This helps reduce an amount of information and reduce signaling overheads.

In addition to the foregoing three implementations, the first connection establishment request message may further have another implementation. For example, the first connection establishment request message may further reuse another existing message. This is not limited in this embodiment of this application.

In addition, S401 may be an optional step, and is represented by a dashed line in FIG. 4. For example, S401 may not be performed, and discovery between the first terminal device and the second terminal device can be completed in S402. For example, the second terminal device may send the first connection establishment request message in a broadcast manner, and a terminal device that receives the first connection establishment request message may respond to the first terminal device if the terminal device can provide a service requested by the first connection establishment request message. A discovery process can also be completed in this manner.

S403: The first terminal device enters an RRC connected state.

If the first terminal device is in an RRC idle state or an RRC inactive state, because the first terminal device needs to provide the relay service for the control plane information of the second terminal device, the first terminal device may enter the RRC connected state. For example, the first terminal device may send a registration request message to the core network device, to enter the RRC connected state. The core network device is, for example, an AMF.

If the first terminal device has been in the RRC connected state, S403 does not need to be performed. Therefore, S403 is an optional step, and is represented by a dashed line in FIG. 4.

S404: The first terminal device sends a first message to the access network device, and correspondingly, the access network device receives the first message from the first terminal device.

For example, the first message includes second information, and the second information may be used to request to relay the control plane information of the second terminal device. For example, the first message is a sidelink UE information (sidelink UE information, SUI) message, or may be another message.

Optionally, the first message may further include one or more of the following: a layer 2 (layer 2) identifier of the second terminal device, a 5G-globally unique temporary UE identity (globally unique temporary UE identity, GUTI) of the second terminal device, a 5G-serving (serving, S)-temporary mobile subscriber identity (5G S-temporary mobile subscription identifier, 5G-S-TMSI) of the second terminal device, a first identifier of the second terminal device, or information indicating that the second terminal device is out of coverage. For example, the first message includes the layer 2 identifier of the second terminal device; or the first message includes the first identifier of the second terminal device; or the first message includes the layer 2 identifier of the second terminal device and the information indicating that the second terminal device is out of coverage; or the first message includes the first identifier of the second terminal device and the information indicating that the second terminal device is out of coverage; or the first message includes the first identifier of the second terminal device, the layer 2 identifier of the second terminal device, and the information indicating that the second terminal device is out of coverage; or the first message includes the 5G-GUTI of the second terminal device. Alternatively, the first message may not include the foregoing several items, but includes only the second information. The layer 2 identifier of the second terminal device is, for example, a destination (destination) identity (ID) of the second terminal device. The first identifier is an identifier allocated by the first terminal device to the first terminal device, and may also be referred to as a local (local) identity (ID) of the second terminal device. The information indicating that the second terminal device is out of coverage is, for example, information indicating that the second terminal device is in an out-of-coverage (out of coverage, OOC) state.

For example, if the first connection establishment request message is a relay connection establishment request message, the first message may include only the second information, and does not include the foregoing optional information. For example, the second information is an SL service only (service) indication. It may be understood that the second information may indicate that the relay service is provided only for the control plane information of the second terminal device, and no relay service is provided for the user plane information of the second terminal device. Alternatively, in addition to the second information, the first message may further include the layer 2 identifier of the second terminal device, the first identifier of the second terminal device, or the layer 2 identifier of the second terminal device and the first identifier.

For another example, if the first connection establishment request message is a direct communication establishment request message, the first message may include only the second information, and does not include the foregoing optional information. The second information may be used to request to relay the control plane information of the second terminal device, and used to request not to relay the user plane information of the second terminal device. Alternatively, the second information may be used to request to relay the control plane information of the second terminal device. Because the second information is not used to request to relay the user plane information of the second terminal device, it may be considered that the second information is implicitly used to request not to relay the user plane information of the second terminal device. Alternatively, in addition to the second information, the first message may further include the layer 2 identifier of the second terminal device, the first identifier of the second terminal device, or the layer 2 identifier of the second terminal device and the first identifier.

For still another example, if the first connection establishment request message is a control plane relay connection establishment request message, the first message may include only the second information, and does not include the foregoing optional information. The second information may be used to request to relay the control plane information of the second terminal device, and used to request not to relay the user plane information of the second terminal device. Alternatively, the second information may be used to request to relay the control plane information of the second terminal device. Because the second information is not used to request to relay the user plane information of the second terminal device, it may be considered that the second information is implicitly used to request not to relay the user plane information of the second terminal device. Alternatively, in addition to the second information, the first message may further include the layer 2 identifier of the second terminal device, the first identifier of the second terminal device, or the layer 2 identifier of the second terminal device and the first identifier.

S405: The access network device binds the first terminal device to the second terminal device. Alternatively, the access network device establishes an association relationship (or referred to as a correspondence) between the first terminal device and the second terminal device.

For example, the access network device may bind an identifier of the first terminal device to an identifier of the second terminal device, to determine that the first terminal device provides the relay service for the control plane information of the second terminal device. The identifier of the first terminal device is, for example, a layer 2 identifier of the first terminal device, an IP address used by the first terminal device to register with the access network device, or another identifier of the first terminal device. The identifier of the second terminal device is, for example, a layer 2 identifier of the second terminal device, or a first identifier of the second terminal device. Alternatively, if the first message does not include the first identifier of the second terminal device, the access network device may allocate an identifier, for example, referred to as a second identifier, to the second terminal device. In this case, the access network device may bind the identifier of the first terminal device to the second identifier of the second terminal device. The second identifier of the second terminal device is, for example, a local identity (local ID), or a cell radio network temporary identifier (cell-radio network temporary identifier, C-RNTI). The second identifier may be allocated by the first terminal device to the second terminal device.

S405 is an optional step, and is not necessarily performed. S405 is represented by a dashed line in FIG. 4. That is, the access network device may alternatively not need to bind the first terminal device to the second terminal device, provided that the access network device can determine that the first terminal device provides the relay service for the control plane information of the second terminal device.

S406: The first terminal device sends a first connection establishment complete message to the second terminal device, and correspondingly, the second terminal device receives the first connection establishment complete message from the first terminal device. The first connection establishment complete message may be used to indicate that the sidelink connection between the first terminal device and the second terminal device has been established, and the sidelink connection is, for example, a PC5-signalling (signaling, S) connection.

For example, after receiving the first message, the access network device may send a response message of the first message to the first terminal device. The response message may indicate that the first message is successfully received. Alternatively, if the access network device further binds the first terminal device to the second terminal device, the response message may indicate that the access network device binds the first terminal device to the second terminal device. After receiving the response message, the first terminal device may send the first connection establishment complete message to the second terminal device.

Alternatively, when the first terminal device does not receive the response message, the first terminal device may still send the first connection establishment complete message to the second terminal device. For example, the first terminal device sends the first connection establishment complete message to the second terminal device after receiving the first connection establishment request message, or the first terminal device sends the first connection establishment complete message to the second terminal device after sending the first message to the access network device.

In this case, the sidelink connection between the first terminal device and the second terminal device is established. On the sidelink connection, the first terminal device may relay the control plane information of the second terminal device, but does not relay the user plane information of the second terminal device.

Therefore, in this embodiment of this application, the first connection establishment request may be used to indicate that the control plane information needs to be relayed, but the user plane information does not need to be relayed. In this manner, only one sidelink connection needs to be established between the first terminal device and the second terminal device. Compared with a solution in which two sidelink connections need to be established between two terminal devices, the technical solution provided in this embodiment of this application helps reduce complexity, reduce signaling overheads, and avoid a case in which different sidelink connections are unlikely to correspond to a same service.

For example, in addition to a common communication scenario, this embodiment of this application is further applicable to some emergency scenarios. For example, this embodiment of this application is further applicable to an emergency scenario such as a rescue scenario. For example, if the second terminal device is in a network disconnected state, but a user who uses the second terminal device encounters a danger and needs to send rescue information, the second terminal device may send the rescue information to the first terminal device. The rescue information may be control signaling, and the first terminal device may forward the rescue information to the access network device. Alternatively, the rescue information may be data, and the first terminal device can identify the rescue information. If the rescue information is determined, the first terminal device may forward the rescue information to the access network device, so that the access network device can take a corresponding measure, for example, push the rescue information to more users, a police station, or a hospital, to ensure life and property safety of the user as much as possible.

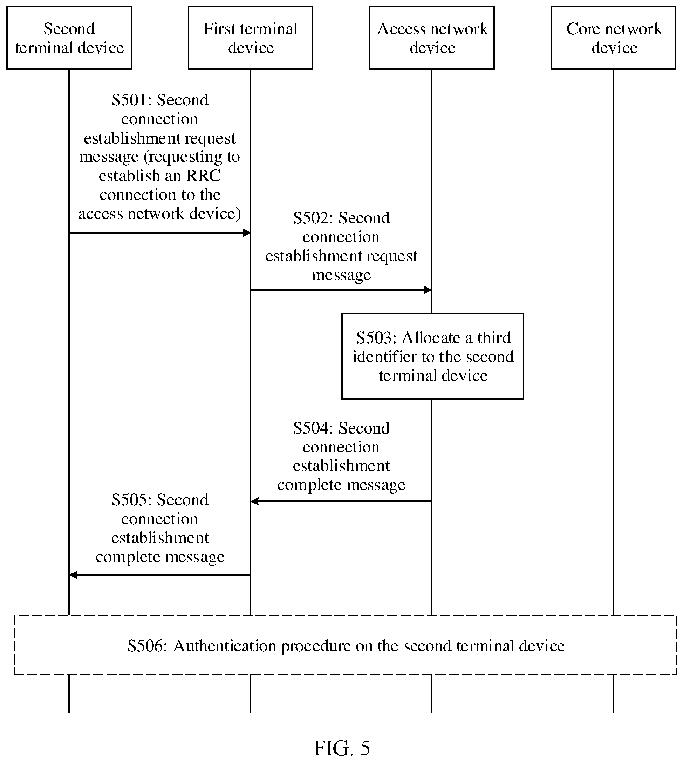

After the sidelink connection is established between the first terminal device and the second terminal device, the access network device can sense that the first terminal device communicates with the second terminal device. In this case, if the second terminal device is not provided with a Uu interface, the second terminal device communicates with the access network device by using the first terminal device, and the access network device can also sense existence of the second terminal device, technically, the second terminal device may be equivalent to being in the OOC state. To perform an operation such as authentication on the second terminal device, the access network device further needs to establish a control plane connection between the access network device and the second terminal device. The following describes a second communications method according to an embodiment of this application. According to the method, a control plane connection can be established between the access network device and the second terminal device. FIG. 5 is a flowchart of the method. In the following description process, an example in which the method is applied to the network architecture shown in FIG. 3 is used. The scenario shown in FIG. 3 is a relay scenario. Alternatively, this embodiment of this application may not be used in a relay scenario, but is used in a scenario in which two terminal devices are directly connected. For example, if a first terminal device can communicate with a second terminal device, the second terminal device is in an OOC state or is not provided with a Uu interface, and the first terminal device is in an in-coverage state, a network device serving the first terminal device can establish a control plane connection to the second terminal device.

The method provided in the embodiment shown in FIG. 5 may be performed after the method provided in the embodiment shown in FIG. 4. To be specific, the embodiment shown in FIG. 4 and the embodiment shown in FIG. 5 may be applied in combination. Alternatively, the embodiment shown in FIG. 4 and the embodiment shown in FIG. 5 may be applied separately. For example, even if the first terminal device and the second terminal device establish a sidelink connection for relay (including relay of control plane information and relay of user plane information), after the sidelink connection is established, the method provided in the embodiment shown in FIG. 5 may also be performed. It should be noted that an access network device has sensed that a second terminal device that is in an OOC state or is not provided with a Uu interface communicates with the access network device by using the first terminal device.

For ease of description, the following uses an example in which the method is performed by a network device and a terminal device. For example, this embodiment of this application is applied to the network architecture shown in FIG. 3. Therefore, the following core network device may be the core network device in the network architecture shown in FIG. 3. For example, the core network device is an AMF. The following access network device may be the access network device in the network architecture shown in FIG. 3. The following first terminal device may be the terminal device 1 in the network architecture shown in FIG. 3. The following second terminal device may be the terminal device 2 in the network architecture shown in FIG. 3.

S501: The second terminal device sends a second connection establishment request message to the second terminal device by using a first radio bearer, and correspondingly, the second terminal device receives the second connection establishment request message from the second terminal device by using the first radio bearer.

The second connection establishment request message may be used to request to establish an RRC connection to the access network device. The first radio bearer may be a preconfigured radio bearer, and is used to transmit relay information corresponding to the second terminal device. It may be understood that, if the first terminal device receives control information from the second terminal device by using the first radio bearer, the first terminal device needs to forward the control information to the access network device. If the first terminal device receives, from the access network device, the control information that needs to be forwarded to the second terminal device, the first terminal device may forward the control information to the second terminal device by using the first radio bearer.

"Preconfigured" may be understood as that the first radio bearer is a radio bearer specified in a protocol, or a radio bearer preconfigured for the first terminal device and the second terminal device. For example, the first radio bearer is a sidelink data radio bearer (sidelink data radio bearer, SLRB), an SL-DRB, a sidelink control channel (sidelink control channel, SCCH), or an SL-SRB introduced between terminal devices. Alternatively, the first radio bearer may be an SL-SRB. In the SL-DRB, SL represents a sidelink (sidelink, SL), and DRB represents a data radio bearer (data radio bearer, DRB). In the SL-SRB, SL represents a sidelink (sidelink, SL), and SRB represents a signaling radio bearer (signaling radio bearer, DRB).

S502: The first terminal device sends the second connection establishment request message to the access network device by using a second radio bearer, and correspondingly, the access network device receives the second connection establishment request message from the first terminal device by using the second radio bearer.

Because the first terminal device receives the second connection establishment request message from the second terminal device by using the first radio bearer, the first terminal device may determine, based on the first radio bearer, that the second connection establishment request message is relay information and needs to be forwarded to the access network device. In this case, the first terminal device may send the second connection establishment request message to the access network device by using the second radio bearer between the first terminal device and the access network device.

The second radio bearer may be a preconfigured radio bearer. For example, the second radio bearer is a radio bearer specified in a protocol, or a radio bearer preconfigured for the first terminal device and the access network device. The second radio bearer may be used to transmit the relay information corresponding to the second terminal device. It may be understood that, if the first terminal device receives the relay information from the second terminal device, the first terminal device may forward the relay information to the access network device by using the second radio bearer, and the access network device can learn, based on the second radio bearer, that the relay information is from the second terminal device. If the first terminal device receives the control information from the access network device by using the second radio bearer, and the first terminal device may determine, based on the second radio bearer, that the control information needs to be forwarded to the second terminal device, the first terminal device may forward the control information to the second terminal device.

For example, the second radio bearer is an SRB, for example, an SRB 0, an SRB 1, or another SRB; or the second radio bearer is a new logical channel, for example, a common control channel (common control channel, CCCH), where a logical channel ID (logic channel ID, LCID) of the CCCH is, for example, 5.

In addition, the first terminal device may establish a mapping relationship between a second identifier and the first terminal device (or an identifier of the first terminal device) at an adaptation layer of the first terminal device. The first terminal device may add the mapping relationship to the second connection establishment request message, and send, to the access network device, the second connection establishment request message to which the mapping relationship is added. The adaptation layer of the first terminal device is, for example, an adaptation (adaptation) layer of the first terminal device. The second identifier is an identifier of the second terminal device, for example, a local ID allocated to the second terminal device, or a C-RNTI allocated to the second terminal device. The second identifier may be allocated by the first terminal device to the second terminal device.

Alternatively, S502 may be changed to: The first terminal device sends a third connection establishment request message to the network device by using a second radio bearer, and correspondingly, the access network device receives the third connection establishment request message from the first terminal device by using the second radio bearer. The third connection establishment request message may be used to request to establish an RRC connection to the access network device, and the third connection establishment request message includes a mapping relationship between a second identifier and the first terminal device. The third connection establishment request message may be considered as a connection establishment request message of the first terminal device. In other words, the third connection establishment request message is originally used by the first terminal device to request to establish an RRC connection to the access network device. However, the third connection establishment request message includes the mapping relationship, and the access network device can obtain the mapping relationship by using an adaptation layer of the access network device. Therefore, the access network device can determine that the third connection establishment request message is used to request to establish an RRC connection between the second terminal device and the access network device.

S503: The access network device allocates a third identifier to the second terminal device. For example, the third identifier is a local ID or a C-RNTI.

If the access network device receives the second connection establishment request message, the access network device determines, based on the second radio bearer, that the second connection establishment request message is from the second terminal device. Alternatively, if the access network device receives the third connection establishment request message, the access network device can determine, based on the mapping relationship, that the third connection establishment request message is used to request to establish the RRC connection between the second terminal device and the access network device. The first terminal device has sent, to the access network device in advance, the second identifier allocated to the second terminal device. For example, the first terminal device sends the second identifier to the access network device by using an SUI message. Therefore, the access network device knows that the second identifier corresponds to the second terminal device, and the access network device can determine, based on the mapping relationship obtained from the third connection establishment request message, that the second identifier corresponds to the second terminal device, that is, determine that the third connection establishment request message is used to request to establish the RRC connection between the second terminal device and the access network device. The first terminal device sends the SUI message to the access network device. For example, this step is performed before S51 or after S51.

The access network device may further allocate the third identifier to the second terminal device, and the second terminal device may use the third identifier in a subsequent process of communicating with the access network device. For example, the third identifier is a local ID allocated to the second terminal device, or a C-RNTI allocated to the second terminal device.

S504: The access network device sends a second connection establishment complete message to the first terminal device by using the second radio bearer, and correspondingly, the first terminal device receives the second connection establishment complete message from the access network device by using the second radio bearer. For example, the second connection establishment complete message may include the third identifier.

If the access network device determines to establish the RRC connection to the second terminal device, the access network device may send the second connection establishment complete message to the first terminal device by using the second radio bearer. The second connection establishment complete message is used to indicate that the RRC connection between the access network device and the second terminal device has been established.

S505: The first terminal device sends the second connection establishment complete message to the second terminal device by using the first radio bearer, and correspondingly, the second terminal device receives the second connection establishment complete message from the first terminal device by using the first radio bearer.

After receiving the second connection establishment complete message by using the second radio bearer, the first terminal device may determine, based on the third identifier included in the second connection establishment complete message, that the second connection establishment complete message needs to be forwarded to the second terminal device, and the first terminal device may forward the second connection establishment complete message to the second terminal device. For example, the first terminal device may forward the second connection establishment complete message to the second terminal device by using the first radio bearer, so that the second terminal device can determine, based on the first radio bearer, that the second connection establishment complete message is from the access network device.

Alternatively, the first terminal device may not forward the second connection establishment complete message to the second terminal device. For example, the first terminal device may send third information to the second terminal device, and the third information may indicate that the RRC connection between the access network device and the second terminal device has been established. For example, the first terminal device may send the third information to the second terminal device by using the first radio bearer. After receiving the third information by using the first radio bearer, the second terminal device can determine that the RRC connection between the access network device and the second terminal device has been established. The third information may include the third identifier. For example, the third information may occupy one or more bits, and a quantity of bits occupied by the third information may be less than a quantity of bits occupied by the second connection establishment complete message. Signaling overheads can be reduced by sending the third information.

S506: Perform an authentication procedure on the second terminal device.

For example, the second terminal device sends a third message to the core network device by using the RRC connection to the access network device, and correspondingly, the core network device receives the third message from the second terminal device. After obtaining the third message, the core network device determines that the third message is from the second terminal device, and the core network device may perform the authentication procedure on the second terminal device.

For example, the third message is a non-access stratum (non-access stratum, NAS) message. Optionally, the third message may include the identifier of the second terminal device, for example, an ID of the second terminal device (for example, a layer 2 identifier of the second terminal device, a 5G-GUTI or a 5G-S-TMSI of the second terminal device, a first identifier of the second terminal device, or a second identifier of the second terminal device).

The second terminal device may send the third message to the first terminal device by using the RRC connection between the second terminal device and the access network device. After receiving the third message from the second terminal device, the first terminal device sends the third message to the access network device by using the RRC connection between the second terminal device and the access network device. Then, the access network device forwards the third message to the core network device, so that the second terminal device sends the third message to the core network device. For example, the second terminal device may send the third message to the first terminal device by using the first radio bearer, and the first terminal device receives the third message from the second terminal device by using the first radio bearer. Then, the first terminal device may forward the third message to the access network device by using the second radio bearer, and the access network device receives the third message from the first terminal device by using the second radio bearer. Next, the access network device forwards the third message to the core network device.

According to the method provided in this embodiment of this application, the second terminal device may establish the RRC connection to the access network device, so that the access network device can perform a procedure such as authentication on the second terminal device. This ensures validity of the second terminal device as much as possible, and maintains network security. In this embodiment of this application, because the second terminal device interacts with the access network device by using the first terminal device, a Uu interface does not need to be set for the second terminal device. If the Uu interface is considered as a logical concept, because the Uu interface does not need to be set, a logical module configured to implement a Uu interface communication function does not occupy a processor resource of the second terminal device, thereby reducing power consumption of the second terminal device. Alternatively, if the Uu interface is considered as a hardware concept, because the Uu interface does not need to be set, the second terminal device can be designed in a lighter and thinner manner, thereby reducing costs of the second terminal device, and reducing power consumption of the second terminal device that is caused by the Uu interface.

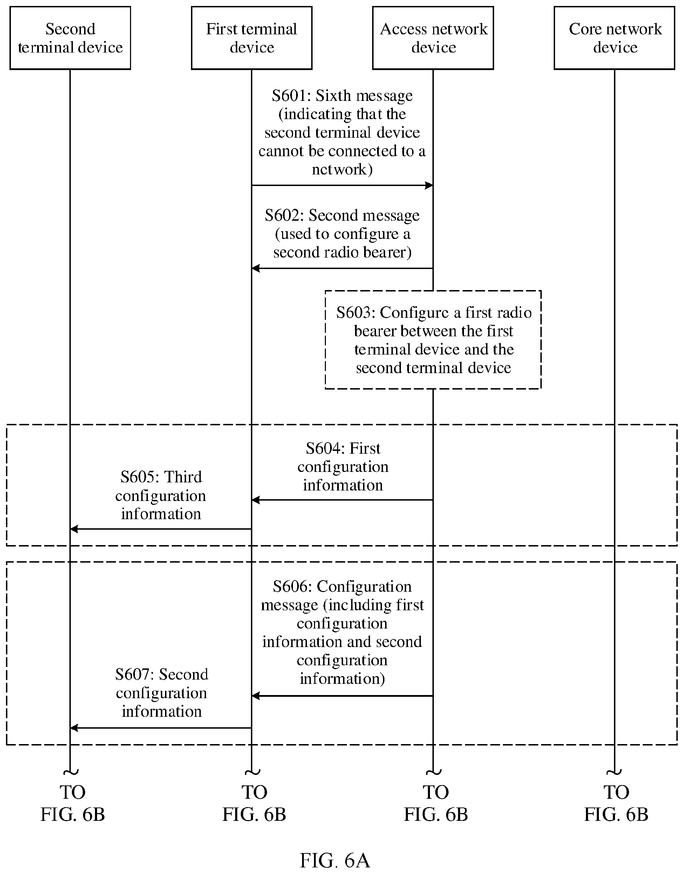

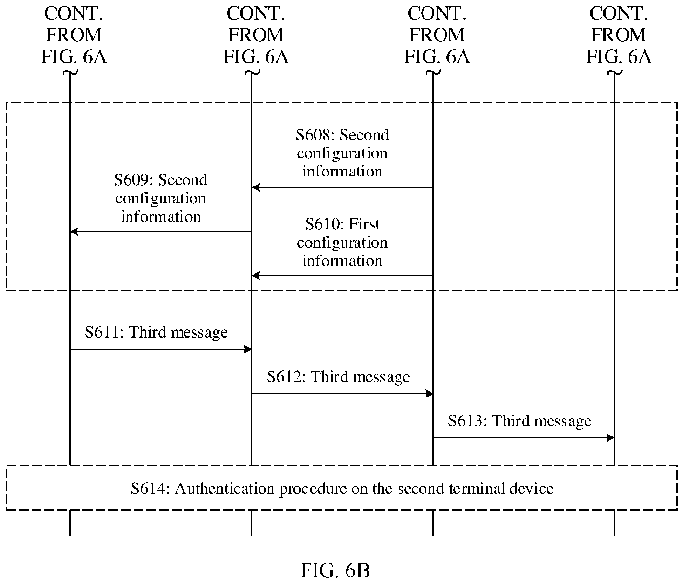

A control plane connection is established between the access network device and the second terminal device. The embodiment shown in FIG. 5 describes a connection establishment manner. The following describes a third communications method according to an embodiment of this application. According to the method, a control plane connection can be established between the access network device and the second terminal device. FIG. 6A and FIG. 6B are a flowchart of the method. In the following description process, an example in which the method is applied to the network architecture shown in FIG. 3 is used. The scenario shown in FIG. 3 is a relay scenario. Alternatively, this embodiment of this application may not be used in a relay scenario, but is used in a scenario in which two terminal devices are directly connected. For example, if a first terminal device can communicate with a second terminal device, the second terminal device is in an OOC state or is not provided with a Uu interface, and the first terminal device is in an in-coverage state, a network device serving the first terminal device can establish a control plane connection to the second terminal device.

The method provided in the embodiment shown in FIG. 6A and FIG. 6B may be performed after the method provided in the embodiment shown in FIG. 4. To be specific, the embodiment shown in FIG. 4 and the embodiment shown in FIG. 6A and FIG. 6B may be applied in combination, or the embodiment shown in FIG. 4 and the embodiment shown in FIG. 6A and FIG. 6B may be applied separately. For example, even if the first terminal device and the second terminal device establish a sidelink connection for relay (including relay of control plane information and relay of user plane information), after the sidelink connection is established, the method provided in the embodiment shown in FIG. 6A and FIG. 6B may also be performed.

For ease of description, the following uses an example in which the method is performed by a network device and a terminal device. For example, this embodiment of this application is applied to the network architecture shown in FIG. 3. Therefore, the following core network device may be the core network device in the network architecture shown in FIG. 3. For example, the core network device is an AMF. The following access network device may be the access network device in the network architecture shown in FIG. 3. The following first terminal device may be the terminal device 1 in the network architecture shown in FIG. 3. The following second terminal device may be the terminal device 2 in the network architecture shown in FIG. 3.

S601: The first terminal device sends a sixth message to the access network device, and correspondingly, the access network device receives the sixth message from the first terminal device. For example, the sixth message is an SUI message or another message.

The sixth message may indicate that the second terminal device cannot be connected to a network, or the sixth message may indicate that the second terminal device is in an OOC state, or the sixth message may include an identifier of the second terminal device.

If the embodiment shown in FIG. 6A and FIG. 6B and the embodiment shown in FIG. 4 are applied in combination, the sixth message and the first message in S404 in the embodiment shown in FIG. 4 may be a same message, which is equivalent to that the first message not only includes the information in S404 in the embodiment shown in FIG. 4, but also may indicate the corresponding content in S601. Alternatively, even if the embodiment shown in FIG. 6A and FIG. 6B and the embodiment in FIG. 4 are applied in combination, the sixth message and the first message in S404 may be different messages. For example, after the embodiment shown in FIG. 4 is performed, the first terminal device sends the sixth message to the access network device. Alternatively, if the embodiment shown in FIG. 6A and FIG. 6B and the embodiment in FIG. 4 are independent of each other, the sixth message and the first message in S404 may be different messages.

S602: The access network device sends a second message to the first terminal device, and correspondingly, the first terminal device receives the second message from the access network device.

The second message may be used to configure a second radio bearer between the access network device and the first terminal device, and the second radio bearer may be used to transmit relay information corresponding to the second terminal device. It may be understood that, if the first terminal device receives the relay information from the second terminal device, the first terminal device may forward the relay information to the access network device by using the second radio bearer, and the access network device can learn, based on the second radio bearer, that the relay information is from the second terminal device. If the first terminal device receives control information from the access network device by using the second radio bearer, and the first terminal device may determine, based on the second radio bearer, that the control information needs to be forwarded to the second terminal device, the first terminal device may forward the control information to the second terminal device.

For example, the second radio bearer is an SRB, for example, an SRB X, where X is, for example, 4 or another value; or the second radio bearer is a new logical channel, for example, a CCCH, where an LCID of the CCCH is, for example, 5.

S603: The access network device configures a first radio bearer between the first terminal device and the second terminal device.

The first radio bearer may be used to transmit the relay information corresponding to the second terminal device. It may be understood that, if the first terminal device receives the control information from the second terminal device by using the first radio bearer, the first terminal device needs to forward the control information to the access network device. If the first terminal device receives, from the access network device, the control information that needs to be forwarded to the second terminal device, the first terminal device may forward the control information to the second terminal device by using the first radio bearer.

For example, the first radio bearer is an SLRB or an SL-DRB, an SCCH, or an SL-SRB introduced between terminal devices. Alternatively, the first radio bearer may be an SL-SRB.

The access network device may configure the first radio bearer between the first terminal device and the second terminal device in a plurality of configuration manners, which are described below by using examples.

### 1. A first configuration manner is as follows:

S604: The access network device sends first configuration information to the first terminal device by using a third radio bearer, and correspondingly, the first terminal device receives the first configuration information from the access network device by using the third radio bearer.

The third radio bearer is a radio bearer between the access network device and the first terminal device, and the third radio bearer is used to transmit information corresponding to the first terminal device. In other words, the third radio bearer is not a radio bearer dedicated to transmitting the relay information of the second terminal device. The third radio bearer may be understood as a common radio bearer between the first terminal device and the access network device. For example, the third radio bearer may be established when the first terminal device enters an RRC connected state.

The first terminal device considers that the information sent by the access network device to the first terminal device by using the third radio bearer corresponds to the first terminal device. In other words, the first terminal device does not directly forward the information to the second terminal device, but parses the information. For example, the first configuration information is configuration information of the first terminal device that corresponds to the first radio bearer, that is, the first terminal device may configure the first radio bearer based on the first configuration information. For example, the first configuration information includes a sending configuration (for example, referred to as a first sending configuration) and a common (common) configuration (for example, referred to as a first common configuration) of the first terminal device that correspond to the first radio bearer, or includes a logical channel LCID (for example, referred to as a first LCID) of the first terminal device that corresponds to the first radio bearer, or includes a first sending configuration, a first common configuration, and a first LCID. The first terminal device may generate, based on the first common configuration, a receiving configuration (for example, referred to as a first receiving configuration) of the first terminal device that corresponds to the first radio bearer. Alternatively, the first configuration information may include a first receiving configuration, and the first terminal device does not need to perform the step of generating the first receiving configuration.

For example, the first sending configuration may include one or more of the following: a packet data convergence protocol (packet data convergence protocol, PDCP) discard timer (discard timer), a robust header compression (robust header compression, ROHC) profile (profile) configuration, whether a service data adaptation protocol (service data adaptation protocol, SDAP) header appears, a mapping relationship with a quality of service flow identifier (QoS flow identity, QFI) on an SL, a sending type (for example, broadcast, unicast, or multicast), and an RLC-related sending configuration in unicast, including a T-PollRetransmit timer, PollPDU, PollByte, a retransmission threshold MaxRetrThreshold, an association relationship between a QFI and an SLRB or an SL-DRB in broadcast or multicast, or a MAC-related sending configuration, including a logical channel group (logic channel group, LCG), a priority, a prioritized bit rate (prioritized bit rate, PBR), a BSD, whether a configured grant type 1 is allowed to be used (configured grant type1allowed), a scheduling request identifier (schedule request ID, SR ID), or a logical channel SR-delay timer (LCH SR-delay timer applied). For example, the first sending configuration may include the PDCP discard timer; or the first sending configuration may include the ROHC profile configuration and whether the SDAP header appears; or the first sending configuration may include the PDCP discard timer, the ROHC profile configuration, whether the SDAP header appears, the mapping relationship with the QFI on the SL, and the sending type. Certainly, in addition to the foregoing items, the first sending configuration may further include other information. Alternatively, the first sending configuration does not include any one of the foregoing items, but includes other information.

The first common configuration may include one or more of the following: a QFI corresponding to SDAP, sequence number (sequence number, SN) lengths of PDCP and radio link control (radio link control, RLC), or whether header compression is used, including a header compression-related parameter (for example, MaxCID), or an SLRB ID or an SL-DRB ID used when a transmission type is unicast. For example, the first common configuration may include the QFI corresponding to the SDAP; or the first common configuration may include the SN lengths of PDCP and RLC; or the first common configuration may include the QFI corresponding to the SDAP, the SN lengths of PDCP and RLC, and whether the header compression is used. Certainly, in addition to the foregoing items, the first common configuration may further include other information. Alternatively, the first common configuration does not include any one of the foregoing items, but includes other information.

The receiving configuration may include one or more of the following: whether out-of-order delivery (out of order delivery) is supported or the like for unicast, an RLC-related timer, for example, a packet assembly (T-reassembly) timer, a status report-related (T-StatusProhibit) timer, a PDCP reordering (T-reordering) timer for all types (unicast, multicast, or broadcast), and the like. The first receiving configuration may include any one or more of the foregoing configurations. Alternatively, the first receiving configuration does not include any one of the foregoing configurations, but includes other information.

S605: The first terminal device sends third configuration information to the second terminal device, and correspondingly, the second terminal device receives the third configuration information from the first terminal device.

Optionally, the first terminal device may send both the third configuration information and the identifier of the second terminal device to the second terminal device. If the first terminal device provides relay services for a plurality of terminal devices, it may be determined, by using the identifier of the second terminal device, that the third configuration information corresponds to the second terminal device. The third configuration information is used to generate configuration information of the second terminal device that corresponds to the first radio bearer. In other words, the second terminal device may generate, based on the third configuration information, the configuration information of the second terminal device that corresponds to the first radio bearer. For example, the third configuration information may include some or all content of the first configuration information. For example, the third configuration information may include the first common configuration, or may include the first LCID, or may include the first common configuration and the first LCID.

For example, the second terminal device may generate, based on the third configuration information, a receiving configuration (for example, referred to as a second receiving configuration) of the second terminal device that corresponds to the first radio bearer, and generate, based on the second receiving configuration, a sending configuration (for example, referred to as a second sending configuration) of the second terminal device that corresponds to the first radio bearer.

In this manner, the access network device needs to deliver only the first configuration information of the first terminal device that corresponds to the first radio bearer, and the configuration information of the second terminal device that corresponds to the first radio bearer may be generated by the second terminal device. This helps reduce load of the access network device.

### 2. A second configuration manner is as follows:

S606: The access network device sends a configuration message to the first terminal device by using a third radio bearer, and correspondingly, the first terminal device receives the configuration message from the access network device by using the third radio bearer.

For descriptions of the third radio bearer, refer to S604.

The configuration message may include first configuration information and second configuration information. For example, the first configuration information is configuration information of the first terminal device that corresponds to the first radio bearer, that is, the first terminal device may configure the first radio bearer based on the first configuration information. The second configuration information is configuration information of the second terminal device that corresponds to the first radio bearer, that is, the second terminal device may configure the first radio bearer based on the first configuration information. Optionally, the configuration message may further include first indication information, and the first indication information may indicate that the second configuration information corresponds to the second terminal device. The third radio bearer is used to transmit information corresponding to the first terminal device. Therefore, unless otherwise indicated, the first terminal device cannot learn that the second configuration information corresponds to the second terminal device. Therefore, in this embodiment of this application, the first indication information may be added to the configuration message, so that the first terminal device can determine that the second configuration information corresponds to the second terminal device.

For example, the first configuration information includes a first sending configuration and a first common configuration, or includes a first LCID, or includes a first sending configuration, a first common configuration, and a first LCID. The first terminal device may generate a first receiving configuration based on the first common configuration, or the first configuration information may include a first receiving configuration.

For example, the second configuration information includes a sending configuration (for example, referred to as a second sending configuration) and a common configuration (for example, referred to as a second common configuration) of the second terminal device that correspond to the first radio bearer, or includes a second sending configuration, a second common configuration, and a receiving configuration (for example, referred to as a second receiving configuration) of the second terminal device that corresponds to the first radio bearer. For content included in the second sending configuration, refer to the descriptions of the content included in the first sending configuration. For content included in the second common configuration, refer to the descriptions of the content included in the first common configuration.

S607: The first terminal device sends the second configuration information to the second terminal device, and correspondingly, the second terminal device receives the second configuration information from the first terminal device.

Optionally, the first terminal device may send both the second configuration information and the identifier of the second terminal device to the second terminal device. If the first terminal device provides relay services for a plurality of terminal devices, it may be determined, by using the identifier of the second terminal device, that the second configuration information corresponds to the second terminal device.

If the second configuration information does not include the second receiving configuration, the second terminal device may generate the second receiving configuration based on the second common configuration. If the second configuration information includes the second receiving configuration, the second terminal device may not need to perform the step of generating the second receiving configuration.

In this manner, the access network device may deliver the first configuration information and the second configuration information, and the first terminal device and the second terminal device may not need to generate corresponding configuration information. This helps reduce load of the terminal device. In addition, the access network device may deliver both the first configuration information and the second configuration information by using the third radio bearer corresponding to the first terminal device, and does not need to separately send the first configuration information and the second configuration information. This reduces signaling overheads.

### 3. A third configuration manner is as follows:

S608: The access network device sends second configuration information to the first terminal device by using the second radio bearer, and correspondingly, the first terminal device receives the second configuration information from the access network device by using the second radio bearer.

The second radio bearer is configured in S602, is a radio bearer between the access network device and the first terminal device, and is configured to transmit the relay information corresponding to the second terminal device. The access network device sends the second configuration information to the first terminal device by using the second radio bearer, and the first terminal device may determine, based on the second radio bearer, that the second configuration information corresponds to the second terminal device.

For example, the second configuration information includes a second sending configuration and a second common configuration, or includes a second sending configuration, a second common configuration, and a second receiving configuration.

S609: The first terminal device forwards the second configuration information to the second terminal device, and correspondingly, the second terminal device receives the second configuration information from the first terminal device.

If the first terminal device determines, based on the second radio bearer, that the second configuration information corresponds to the second terminal device, the first terminal device may forward the second configuration information to the second terminal device, so that the second terminal device can configure the first radio bearer based on the second configuration information.

S610: The access network device sends first configuration information to the first terminal device by using a third radio bearer, and correspondingly, the first terminal device receives the first configuration information from the access network device by using the third radio bearer. S610 and S608 may be simultaneously performed, or S608 may be performed before S610, or S608 may be performed after S610.

For example, the first configuration information includes a first sending configuration and a first common configuration, or includes a first LCID, or includes a first sending configuration, a first common configuration, and a first LCID. The first terminal device may generate, based on the first common configuration, a receiving configuration (for example, referred to as a first receiving configuration) of the first terminal device that corresponds to the first radio bearer. Alternatively, the first configuration information may include a first receiving configuration, and the first terminal device does not need to perform the step of generating the first receiving configuration.

In this manner, the access network device may deliver the first configuration information and the second configuration information, and the first terminal device and the second terminal device may not need to generate corresponding configuration information. This helps reduce load of the terminal device. In addition, the access network device may separately deliver the first configuration information and the second configuration information by using different radio bearers, so that the first terminal device can determine configuration information that is used as configuration information corresponding to the second terminal device, to forward the configuration information corresponding to the second terminal device to the second terminal device. This reduces an error rate of the first terminal device.

In addition to the three configuration manners described above, the access network device may further configure the first radio bearer in another manner. This is not limited in this embodiment of this application.

S611: The second terminal device sends a third message to the first terminal device by using a first bearer element, and correspondingly, the first terminal device receives the third message from the second terminal device by using the first bearer element. The first bearer element may be used to transmit NAS information that corresponds to the second terminal device and that needs to be relayed, and the third message is, for example, a NAS message.

For example, the second terminal device may send the third message to the first terminal device by using the first radio bearer, or the second terminal device may send the third message to the first terminal device by using another radio bearer (for example, a fourth radio bearer) between the first terminal device and the second terminal device. That the fourth radio bearer is not used to transmit relay information may be understood as that the fourth radio bearer is a common radio bearer between the first terminal device and the second terminal device. If the second terminal device sends the third message to the first terminal device by using the fourth radio bearer, because the fourth radio bearer is not used to transmit the relay information, to enable the first terminal device to determine that the third message needs to be forwarded to the network, the second terminal device may send the third message to the first terminal device by using the first bearer element. In this case, the first bearer element is located on the fourth radio bearer. Alternatively, if the second terminal device sends the third message to the first terminal device by using the first radio bearer, because the fourth radio bearer is used to transmit the relay information, the second terminal device may not send the third message to the first terminal device by using the first bearer element. Alternatively, because the third message is the NAS message, even if the second terminal device sends the third message to the first terminal device by using the first radio bearer, the second terminal device may send the third message to the first terminal device by using the first bearer element. In this case, the first bearer element is located on the first radio bearer.

The first bearer element may be specified, for example, in a protocol. The first bearer element is, for example, an information element (information element, IE) or a container (container) in a PC5-RRC message, a PC5-S message, or another message.

That the first bearer element includes the third message may also be understood as that the first bearer element includes information included in the third message. For example, the third message includes fourth information, and the fourth information may be all or some content included in the third message. In this case, the first bearer element may include the fourth information. This is equivalent to that the first bearer element includes the third message.

S612: The first terminal device forwards the third message to the access network device by using a second bearer element, and correspondingly, the access network device receives the third message from the first terminal device by using the second bearer element.

For example, the first terminal device may forward the third message to the access network device by using the second radio bearer, or the first terminal device may forward the third message to the access network device by using another radio bearer (for example, the third radio bearer) between the first terminal device and the access network device. The third radio bearer is not used to transmit the relay information. If the first terminal device sends the third message to the access network device by using the third radio bearer, because the third radio bearer is not used to transmit the relay information, to enable the access network device to determine that the third message is from the second terminal device, the first terminal device may send the third message to the access network device by using the second bearer element. In this case, the second bearer element is located on the third radio bearer. Alternatively, if the first terminal device sends the third message to the access network device by using the second radio bearer, because the second radio bearer is used to transmit the relay information, the first terminal device may not send the third message to the access network device by using the second bearer element. Alternatively, because the third message is the NAS message, even if the first terminal device sends the third message to the access network device by using the second radio bearer, the first terminal device may send the third message to the access network device by using the second bearer element, so that the access network device determines that the third message further needs to be forwarded to a core network device. In this case, the second bearer element is located on the second radio bearer.

The second bearer element may be specified, for example, in a protocol. The second bearer element is, for example, an IE or a container in an RRC message or another message.

That the second bearer element includes the third message may also be understood as that the second bearer element includes information included in the third message. For example, the third message includes fourth information, and the fourth information may be all or some content included in the third message. In this case, the second bearer element may include the fourth information. This is equivalent to that the second bearer element includes the third message.

S613: The access network device forwards the third message to the core network device, and correspondingly, the core network device receives the third message from the access network device. For example, the core network device in the embodiment shown in FIG. 5 is the AMF.

Because the third message is the NAS message, the access network device forwards the third message to the core network device.

S614: Perform an authentication procedure on the second terminal device.

Optionally, the third message may include the identifier of the second terminal device, for example, an ID of the second terminal device (for example, a layer 2 identifier of the second terminal device, a first identifier of the second terminal device, or a second identifier of the second terminal device). After obtaining the third message, the core network device determines that the third message is from the second terminal device, and the core network device may perform the authentication procedure on the second terminal device.

According to the method provided in this embodiment of this application, even if the second terminal device does not need to establish an RRC connection to the access network device, the access network device can perform a procedure such as authentication on the second terminal device. This ensures validity of the second terminal device as much as possible, and maintains network security. In addition, because the second terminal device does not need to establish the RRC connection to the access network device, an execution procedure required for establishing the RRC connection is saved. This helps reduce signaling overheads. In this embodiment of this application, because the second terminal device interacts with the access network device by using the first terminal device, a Uu interface does not need to be set for the second terminal device. If the Uu interface is considered as a logical concept, because the Uu interface does not need to be set, a logical module configured to implement a Uu interface communication function does not occupy a processor resource of the second terminal device, thereby reducing power consumption of the second terminal device. Alternatively, if the Uu interface is considered as a hardware concept, because the Uu interface does not need to be set, the second terminal device can be designed in a lighter and thinner manner, thereby reducing costs of the second terminal device, and reducing power consumption of the second terminal device that is caused by the Uu interface.

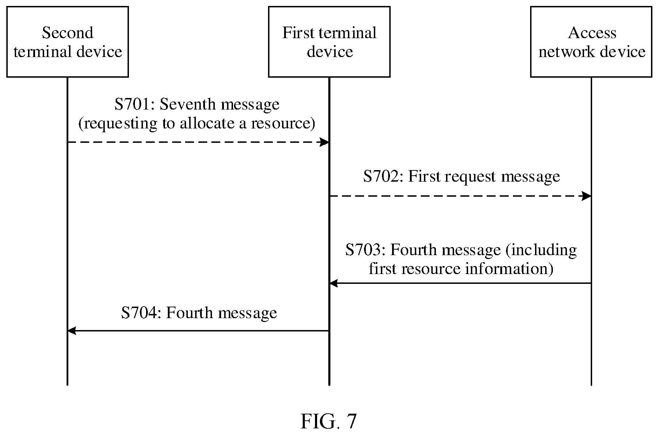

After the first terminal device establishes a connection to the second terminal device, and the second terminal device also establishes a control plane connection to the access network device, the access network device may allocate a resource to the second terminal device, and the like. Next, an embodiment of this application provides a fourth communications method. According to the method, the access network device can allocate a resource to the second terminal device. FIG. 7 is a flowchart of the method. In the following description process, an example in which the method is applied to the network architecture shown in FIG. 3 is used. The scenario shown in FIG. 3 is a relay scenario. Alternatively, this embodiment of this application may not be used in a relay scenario, but is used in a scenario in which two terminal devices are directly connected. For example, if a first terminal device can communicate with a second terminal device, the second terminal device is in an OOC state or is not provided with a Uu interface, and the first terminal device is in an in-coverage state, a network device serving the first terminal device can allocate a resource to the second terminal device.

The method provided in the embodiment shown in FIG. 7 may be performed after the method provided in the embodiment shown in FIG. 4 and the method provided in the embodiment shown in FIG. 5. To be specific, the embodiment shown in FIG. 4, the embodiment shown in FIG. 5, and the embodiment shown in FIG. 7 may be applied in combination. Alternatively, the embodiment shown in FIG. 4, the embodiment shown in FIG. 5, and the embodiment shown in FIG. 7 may be applied separately. Alternatively, the embodiment shown in FIG. 4 and the embodiment shown in FIG. 7 may be applied in combination, for example, the embodiment shown in FIG. 7 may be performed after the embodiment shown in FIG. 4, and the embodiment shown in FIG. 5 may be applied independently. Alternatively, the embodiment shown in FIG. 5 and the embodiment shown in FIG. 7 may be applied in combination, for example, the embodiment shown in FIG. 7 may be performed after the embodiment shown in FIG. 5, and the embodiment shown in FIG. 4 may be applied independently. Alternatively, the embodiment shown in FIG. 4 and the embodiment shown in FIG. 5 may be applied in combination, for example, the embodiment shown in FIG. 5 may be performed after the embodiment shown in FIG. 4, and the embodiment shown in FIG. 7 may be applied independently.

Alternatively, the method provided in the embodiment shown in FIG. 7 may be performed after the method provided in the embodiment shown in FIG. 4 and the method provided in the embodiment shown in FIG. 6A and FIG. 6B. To be specific, the embodiment shown in FIG. 4, the embodiment shown in FIG. 6A and FIG. 6B, and the embodiment shown in FIG. 7 may be applied in combination. Alternatively, the embodiment shown in FIG. 4, the embodiment shown in FIG. 6A and FIG. 6B, and the embodiment shown in FIG. 7 may be applied separately. Alternatively, the embodiment shown in FIG. 4 and the embodiment shown in FIG. 7 may be applied in combination, for example, the embodiment shown in FIG. 7 may be performed after the embodiment shown in FIG. 4, and the embodiment shown in FIG. 6A and FIG. 6B may be applied independently. Alternatively, the embodiment shown in FIG. 6A and FIG. 6B and the embodiment shown in FIG. 7 may be applied in combination, for example, the embodiment shown in FIG. 7 may be performed after the embodiment shown in FIG. 6A and FIG. 6B, and the embodiment shown in FIG. 4 may be applied independently. Alternatively, the embodiment shown in FIG. 4 and the embodiment shown in FIG. 6A and FIG. 6B may be applied in combination, for example, the embodiment shown in FIG. 6A and FIG. 6B may be performed after the embodiment shown in FIG. 4, and the embodiment shown in FIG. 7 may be applied independently.

For ease of description, the following uses an example in which the method is performed by a network device and a terminal device. For example, this embodiment of this application is applied to the network architecture shown in FIG. 3. Therefore, the following access network device may be the access network device in the network architecture shown in FIG. 3, the following first terminal device may be the terminal device 1 in the network architecture shown in FIG. 3, and the following second terminal device may be the terminal device 2 in the network architecture shown in FIG. 3.

S701: The second terminal device sends a seventh message to the first terminal device, and correspondingly, the first terminal device receives the seventh message from the second terminal device. The seventh message may be used to request to allocate a resource. The resource is used by the second terminal device to send information on a sidelink connection, for example, may be used by the second terminal device to send information to the first terminal device by using the sidelink connection. If the embodiment shown in FIG. 7 and the embodiment shown in FIG. 4 are applied in combination, the sidelink connection may be a sidelink connection established by using the method provided in the embodiment shown in FIG. 4.

Optionally, the seventh message may include quality of service (quality of service, QoS) information, or include expected periodicity information, or include QoS information and expected periodicity information. The QoS information may indicate QoS expected by the second terminal device. For example, the second terminal device expects that a resource allocated by the access network device can meet the QoS. For example, the access network device may allocate a resource to the second terminal device based on the QoS information. The expected periodicity information may indicate an expected periodicity, and the expected periodicity is a periodicity that is expected by the second terminal device and that is of the resource allocated by the access network device. For example, if the second terminal device needs to send periodic data by using a resource requested in the seventh message, the access network device may allocate a periodic resource to the second terminal device. In this case, the second terminal device may send the expected periodicity information to the access network device, so that the periodicity of the resource allocated by the access network device can meet the expected periodicity. For example, a length of the periodicity of the resource allocated by the access network device may be equal to a length of the expected periodicity.

For example, if the embodiment shown in FIG. 5 and the embodiment shown in FIG. 7 are applied in combination, the second terminal device may send the seventh message to the first terminal device by using a first radio bearer, and the first terminal device may receive the seventh message from the second terminal device by using the first radio bearer. Alternatively, the second terminal device may send the seventh message to the first terminal device by using an RRC connection between the second terminal device and the access network device, and the first terminal device may receive the seventh message from the second terminal device by using the RRC connection. The first radio bearer is preconfigured. For descriptions of the first radio bearer, refer to the embodiment shown in FIG. 5.

Alternatively, if the embodiment shown in FIG. 6A and FIG. 6B and the embodiment shown in FIG. 7 are applied in combination, the second terminal device may send the seventh message to the first terminal device by using a first radio bearer, and the first terminal device may receive the seventh message from the second terminal device by using the first radio bearer. The first radio bearer is configured by the access network device. For descriptions of the first radio bearer, refer to the embodiment shown in FIG. 6A and FIG. 6B.

Alternatively, if the embodiment shown in FIG. 7 is applied independently, or the embodiment shown in FIG. 5 and the embodiment shown in FIG. 7 are applied in combination, or the embodiment shown in FIG. 6A and FIG. 6B and the embodiment shown in FIG. 7 are applied in combination, the second terminal device may send the seventh message to the first terminal device by using another radio bearer between the first terminal device and the second terminal device. For example, the second terminal device may send the seventh message to the first terminal device by using a fourth radio bearer. That the fourth radio bearer is not used to transmit relay information may be understood as that the fourth radio bearer is a common radio bearer between the first terminal device and the second terminal device. If the second terminal device sends the seventh message to the first terminal device by using the fourth radio bearer, because the seventh message is relay information and needs to be forwarded to a network, the seventh message may include third indication information. The third indication information may indicate that the seventh message is the relay information, or indicate that the seventh message needs to be forwarded to the network. The first terminal device may determine, based on the third indication information, to forward the seventh message to the network. Alternatively, the seventh message may not include third indication information, but includes an identifier of the second terminal device (for related descriptions of the identifier of the second terminal device, refer to the foregoing embodiments). The first terminal device may determine, based on the identifier of the second terminal device, to forward the seventh message to a network.

Alternatively, S701 may not be performed, that is, S701 is an optional step, and is represented by a dashed line in FIG. 7.

S702: The first terminal device sends a first request message to the access network device, and the access network device receives the first request message from the first terminal device.

If S701 is performed, the first request message may include the seventh message. That the first request message includes the seventh message may be understood as that the first request message includes all or some information included in the seventh message. For example, the seventh message includes fifth information, and the fifth information may be all or some information included in the seventh message. In this case, the first terminal device may add the fifth information to the first request message, and send the first request message to the access network device. If the first request message includes only the seventh message, and the first request message includes all information of the seventh message, S702 may also be understood as that the first terminal device forwards the seventh message to the access network device, and the access network device receives the seventh message from the first terminal device.

If S701 is not performed, the first request message is generated by the first terminal device, and certainly does not include the seventh message.

The seventh message is a message that needs to be relayed. Therefore, the first terminal device may forward information (for example, the fifth information) included in the seventh message to the access network device. For example, if the embodiment shown in FIG. 5 and the embodiment shown in FIG. 7 are applied in combination, the first terminal device may send the first request message to the access network device by using a second radio bearer, and the access network device may receive the first request message from the first terminal device by using the second radio bearer. The second radio bearer is preconfigured. For descriptions of the second radio bearer, refer to the embodiment shown in FIG. 5.

Alternatively, if the embodiment shown in FIG. 6A and FIG. 6B and the embodiment shown in FIG. 7 are applied in combination, the first terminal device may send the first request message to the access network device by using a second radio bearer, and the access network device may receive the first request message from the first terminal device by using the second radio bearer. The second radio bearer is configured by the access network device. For descriptions of the second radio bearer, refer to the embodiment shown in FIG. 6A and FIG. 6B.

In addition, if S701 is performed, the second terminal device sends the seventh message to the first terminal device by using a fourth radio bearer in S701, and the seventh message includes third indication information or an identifier of the second terminal device, even if the first terminal device sends the first request message to the access network device by using a second radio bearer in S702, the first request message also includes the third indication information or the identifier of the second terminal device.

Alternatively, if the embodiment shown in FIG. 7 is applied independently, or the embodiment shown in FIG. 5 and the embodiment shown in FIG. 7 are applied in combination, or the embodiment shown in FIG. 6A and FIG. 6B and the embodiment shown in FIG. 7 are applied in combination, the first terminal device may send the first request message to the access network device by using another radio bearer between the first terminal device and the access network device. For example, the first terminal device may send the first request message to the access network device by using a third radio bearer. That the third radio bearer is not used to transmit relay information may be understood as that the third radio bearer is a common radio bearer between the first terminal device and the access network device. If the first terminal device sends the first request message to the access network device by using the third radio bearer, because the seventh message is relay information, the network needs to learn that the seventh message is from the second terminal device, the first request message may include the third indication information (for example, the third indication information is included in the seventh message), and the access network device may determine, based on the third indication information, that the seventh message is from the second terminal device. Alternatively, the seventh message (or the first request message) may not include third indication information, but includes an identifier of the second terminal device. The access network device may determine, based on the identifier of the second terminal device, that the seventh message is from the second terminal device.

In addition, if the second terminal device sends the seventh message to the first terminal device by using a first radio bearer in S701, and the seventh message may not include the third indication information or the identifier of the second terminal device, even if the first terminal device sends the first request message to the access network device by using a third radio bearer in S702, the first request message does not include the third indication information or the identifier of the second terminal device. Therefore, a better manner is as follows: If the second terminal device sends the seventh message to the first terminal device by using the first radio bearer in S701, the first terminal device may send the first request message to the access network device by using the second radio bearer in S702. If the second terminal device sends the seventh message to the first terminal device by using the fourth radio bearer in S701, the first terminal device may send the first request message to the access network device by using the third radio bearer in S702.

Optionally, the first request message may be further used by the first terminal device to request to allocate a resource. For example, the first request message may be used to request to allocate a resource to the second terminal device, and request to allocate a resource to the first terminal device. In this case, if the first request message includes the seventh message (or the fifth information), information used to request to allocate a resource to the first terminal device is included in the first request message, but is not included in the seventh message.

S702 is an optional step, and is not necessarily performed. S702 is represented by a dashed line in FIG. 7. For example, although the second terminal device does not request to allocate a resource, the access network device may allocate a resource to the second terminal device. Alternatively, although the first terminal device does not request to allocate a resource, the access network device may allocate a resource to the first terminal device.

S703: The access network device sends a fourth message to the first terminal device, and correspondingly, the first terminal device receives the fourth message from the access network device. The fourth message may include first resource information, the first resource information may indicate a first resource, and the first resource is a resource allocated to the second terminal device. For example, the first resource may be used by the second terminal device to send data to the first terminal device by using the sidelink connection. Alternatively, the first resource information is used to indicate a candidate resource location at which the second terminal device sends data to the first terminal device on the sidelink connection. In subsequent transmission, the access network device or the first terminal device may quickly indicate an actual data sending location of the second terminal device by using bottom layer signaling such as downlink control information (downlink control information, DCI) or a media access control (media access control, MAC) control element (control element, CE). If the embodiment shown in FIG. 7 and the embodiment shown in FIG. 4 are applied in combination, the sidelink connection may be a sidelink connection established by using the method provided in the embodiment shown in FIG. 4.

After receiving the first request message, the access network device may allocate a resource to the second terminal device, for example, the first resource. After allocating the first resource, the access network device may send the first resource information to the second terminal device, so that the second terminal device uses the first resource. The first resource information may indicate the first resource. Optionally, if the first request message is further used to request to allocate a resource to the first terminal device, after receiving the first request message, the access network device may also allocate a resource to the first terminal device, for example, a fourth resource. After allocating the fourth resource, the access network device may send fourth resource information to the first terminal device, so that the first terminal device uses the fourth resource. The fourth resource information may indicate the fourth resource.

To send the first resource information to the second terminal device, the access network device needs to first send the first resource information to the first terminal device, and then the first terminal device forwards the first resource information to the second terminal device.

For example, if the embodiment shown in FIG. 5 and the embodiment shown in FIG. 7 are applied in combination, the access network device may send the fourth message to the first terminal device by using a second radio bearer, and the first terminal device may receive the fourth message from the access network device by using the second radio bearer. The second radio bearer is preconfigured. For descriptions of the second radio bearer, refer to the embodiment shown in FIG. 5.

Alternatively, if the embodiment shown in FIG. 6A and FIG. 6B and the embodiment shown in FIG. 7 are applied in combination, the access network device may send the fourth message to the first terminal device by using a second radio bearer, and the first terminal device may receive the fourth message from the access network device by using the second radio bearer. The second radio bearer is configured by the access network device. For descriptions of the second radio bearer, refer to the embodiment shown in FIG. 6A and FIG. 6B.

Alternatively, if the embodiment shown in FIG. 7 is applied independently, or the embodiment shown in FIG. 5 and the embodiment shown in FIG. 7 are applied in combination, or the embodiment shown in FIG. 6A and FIG. 6B and the embodiment shown in FIG. 7 are applied in combination, the access network device may send the fourth message to the first terminal device by using another radio bearer between the first terminal device and the access network device. For example, the access network device may send the fourth message to the first terminal device by using a third radio bearer. If the access network device sends the fourth message to the access network device by using the third radio bearer, because the fourth message is relay information, the first terminal device needs to learn that the fourth message needs to be forwarded to the second terminal device, the fourth message may include fourth indication information. The fourth indication information may indicate that the fourth message corresponds to the second terminal device, or indicate that the fourth message is a relay message. The first terminal device may determine, based on the fourth indication information, that the fourth message needs to be forwarded to the second terminal device. Alternatively, the fourth message may not include fourth indication information, but includes an identifier of the second terminal device. The first terminal device may determine, based on the identifier of the second terminal device, that the fourth message needs to be forwarded to the second terminal device.

S704: The first terminal device forwards the fourth message to the second terminal device, and correspondingly, the second terminal device receives the fourth message from the first terminal device.

For example, if the embodiment shown in FIG. 5 and the embodiment shown in FIG. 7 are applied in combination, the first terminal device may send the fourth message to the second terminal device by using a first radio bearer, and the second terminal device may receive the fourth message from the first terminal device by using the first radio bearer. Alternatively, the first terminal device may send the fourth message to the second terminal device by using an RRC connection between the second terminal device and the access network device, and the second terminal device may receive the fourth message from the first terminal device by using the RRC connection. The first radio bearer is preconfigured. For descriptions of the first radio bearer, refer to the embodiment shown in FIG. 5.

Alternatively, if the embodiment shown in FIG. 6A and FIG. 6B and the embodiment shown in FIG. 7 are applied in combination, the first terminal device may send the fourth message to the second terminal device by using a first radio bearer, and the second terminal device may receive the fourth message from the first terminal device by using the first radio bearer. The first radio bearer is configured by the access network device. For descriptions of the first radio bearer, refer to the embodiment shown in FIG. 6A and FIG. 6B.

In addition, if the access network device sends the fourth message to the first terminal device by using a third radio bearer in S703, and the fourth message includes fourth indication information or an identifier of the second terminal device, even if the first terminal device forwards the fourth message to the second terminal device by using a first radio bearer in S704, the fourth message includes the fourth indication information or the identifier of the second terminal device.

Alternatively, if the embodiment shown in FIG. 7 is applied independently, or the embodiment shown in FIG. 5 and the embodiment shown in FIG. 7 are applied in combination, or the embodiment shown in FIG. 6A and FIG. 6B and the embodiment shown in FIG. 7 are applied in combination, the first terminal device may send the fourth message to the second terminal device by using another radio bearer between the first terminal device and the second terminal device. For example, the first terminal device may send the fourth message to the second terminal device by using a fourth radio bearer. If the first terminal device sends the fourth message to the first terminal device by using the fourth radio bearer, because the fourth message is relay information and is from the access network device, the fourth message may include the fourth indication information, and the second terminal device may determine, based on the fourth indication information, that the fourth message is from the network. Alternatively, the fourth message may not include fourth indication information, but includes an identifier of the second terminal device. The second terminal device may determine, based on the identifier of the second terminal device, that the fourth message is from the network.

In addition, if the access network device sends the fourth message to the first terminal device by using a third radio bearer in S703, and the fourth message may not include the fourth indication information or the identifier of the second terminal device, even if the first terminal device forwards the fourth message to the second terminal device by using a first radio bearer in S704, the fourth message does not include the fourth indication information or the identifier of the second terminal device. Therefore, a better manner is as follows: If the access network device sends the fourth message to the first terminal device by using the second radio bearer in S703, the first terminal device may forward the fourth message to the second terminal device by using the first radio bearer in S704. If the access network device sends the fourth message to the first terminal device by using the third radio bearer in S703, the first terminal device may forward the fourth message to the second terminal device by using the fourth radio bearer in S704.

Optionally, if the fourth message further includes fourth resource information, the first terminal device may not forward the fourth message to the second terminal device, but sends the first resource information to the second terminal device. The fourth resource information included in the fourth message is used by the first terminal device, and does not need to be sent to the second terminal device. If the fourth message includes the fourth indication information or the identifier of the second terminal device, the first terminal device may send the fourth indication information or the identifier of the second terminal device to the second terminal device.

In this embodiment of this application, because the second terminal device interacts with the access network device by using the first terminal device, a Uu interface does not need to be set for the second terminal device. If the Uu interface is considered as a logical concept, because the Uu interface does not need to be set, a logical module configured to implement a Uu interface communication function does not occupy a processor resource of the second terminal device, thereby reducing power consumption of the second terminal device. Alternatively, if the Uu interface is considered as a hardware concept, because the Uu interface does not need to be set, the second terminal device can be designed in a lighter and thinner manner, thereby reducing costs of the second terminal device, and reducing power consumption of the second terminal device that is caused by the Uu interface. In addition, according to the method provided in this embodiment of this application, the access network device can allocate a resource to the second terminal device, so that the second terminal device can transmit data by using the sidelink connection. Alternatively, when the second terminal device is in an OOC state, because a sidelink resource may be configured and controlled by using the access network device corresponding to the first terminal device, the second terminal device does not need to use a preconfigured resource to obtain better sidelink performance, or a sidelink resource between the first terminal device and the second terminal device is configured and controlled by using the access network device corresponding to the first terminal device, to obtain better sidelink performance.

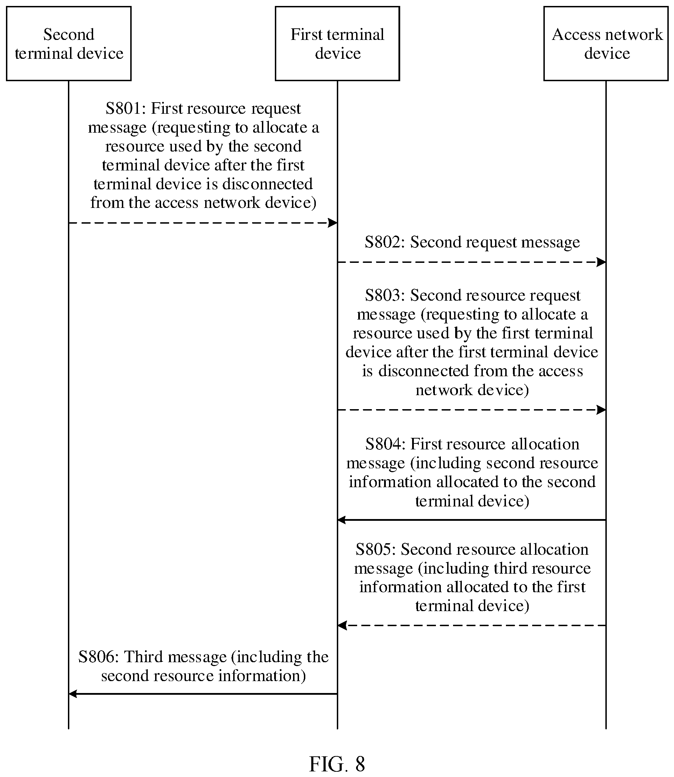

Next, another problem is considered. For the first terminal device that can be connected to the network through the Uu interface, in consideration of power consumption, it is expected that the first terminal device can be released to an RRC inactive state or an RRC idle state in some scenarios, to reduce power consumption of the first terminal device. However, once the first terminal device is released to the RRC inactive state or the RRC idle state, it means that an RRC connection between the first terminal device and the access network device is released. In this case, resources allocated by the access network device to the first terminal device and the second terminal device when the first terminal device is in an RRC connected state cannot be used. To continue to use these resources, the first terminal device may keep in the RRC connected state. Consequently, energy consumption of the first terminal device increases. Therefore, an embodiment of this application provides a fifth communications method. According to the method, power consumption of a first terminal device can be reduced. FIG. 8 is a flowchart of the method. In the following description process, an example in which the method is applied to the network architecture shown in FIG. 3 is used. The scenario shown in FIG. 3 is a relay scenario. Alternatively, this embodiment of this application may not be used in a relay scenario, but is used in a scenario in which two terminal devices are directly connected. For example, if a first terminal device can communicate with a second terminal device, the second terminal device is in an OOC state or is not provided with a Uu interface, and the first terminal device is in an in-coverage state, a network device serving the first terminal device can allocate a resource to the second terminal device.

Any two or more of the embodiment shown in FIG. 4, the embodiment shown in FIG. 5, the embodiment shown in FIG. 7, and the embodiment shown in FIG. 8 may be applied in combination. For example, the method provided in the embodiment shown in FIG. 8 may be performed after the method provided in the embodiment shown in FIG. 4, the method provided in the embodiment shown in FIG. 5, and the method provided in the embodiment shown in FIG. 7. To be specific, the embodiment shown in FIG. 4, the embodiment shown in FIG. 5, the embodiment shown in FIG. 7, and the embodiment shown in FIG. 8 may be applied in combination. Alternatively, the embodiment shown in FIG. 4 and the embodiment shown in FIG. 8 may be applied in combination, for example, the embodiment shown in FIG. 8 may be performed after the embodiment shown in FIG. 4, and the embodiment shown in FIG. 5 and the embodiment shown in FIG. 7 each may be applied independently. Alternatively, the embodiment shown in FIG. 5 and the embodiment shown in FIG. 8 may be applied in combination, for example, the embodiment shown in FIG. 8 may be performed after the embodiment shown in FIG. 5, and the embodiment shown in FIG. 4 and the embodiment shown in FIG. 7 each may be applied independently. Alternatively, the embodiment shown in FIG. 7 and the embodiment shown in FIG. 8 may be applied in combination, for example, the embodiment shown in FIG. 8 may be performed after the embodiment shown in FIG. 7, and the embodiment shown in FIG. 4 and the embodiment shown in FIG. 5 each may be applied independently. Alternatively, the embodiment shown in FIG. 4, the embodiment shown in FIG. 5, and the embodiment shown in FIG. 8 may be applied in combination, for example, the embodiment shown in FIG. 5 may be performed after the embodiment shown in FIG. 4, the embodiment shown in FIG. 8 may be performed after the embodiment shown in FIG. 5, and the embodiment shown in FIG. 7 may be applied independently. Alternatively, the embodiment shown in FIG. 5, the embodiment shown in FIG. 7, and the embodiment shown in FIG. 8 may be applied in combination, for example, the embodiment shown in FIG. 7 may be performed after the embodiment shown in FIG. 5, the embodiment shown in FIG. 8 may be performed after the embodiment shown in FIG. 7, and the embodiment shown in FIG. 4 may be applied independently. Alternatively, the embodiment shown in FIG. 4, the embodiment shown in FIG. 5, and the embodiment shown in FIG. 7 may be applied in combination, for example, the embodiment shown in FIG. 5 may be performed after the embodiment shown in FIG. 4, the embodiment shown in FIG. 7 may be performed after the embodiment shown in FIG. 5, and the embodiment shown in FIG. 8 may be applied independently. Alternatively, the embodiment shown in FIG. 4, the embodiment shown in FIG. 5, the embodiment shown in FIG. 7, and the embodiment shown in FIG. 8 each may be applied independently.

Alternatively, any two or more of the embodiment shown in FIG. 4, the embodiment shown in FIG. 6A and FIG. 6B, the embodiment shown in FIG. 7, and the embodiment shown in FIG. 8 may be applied in combination. For example, the method provided in the embodiment shown in FIG. 8 may be performed after the method provided in the embodiment shown in FIG. 4, the method provided in the embodiment shown in FIG. 6A and FIG. 6B, and the method provided in the embodiment shown in FIG. 7. To be specific, the embodiment shown in FIG. 4, the embodiment shown in FIG. 6A and FIG. 6B, the embodiment shown in FIG. 7, and the embodiment shown in FIG. 8 may be applied in combination. Alternatively, the embodiment shown in FIG. 4 and the embodiment shown in FIG. 8 may be applied in combination, for example, the embodiment shown in FIG. 8 may be performed after the embodiment shown in FIG. 4, and the embodiment shown in FIG. 6A and FIG. 6B and the embodiment shown in FIG. 7 each may be applied independently. Alternatively, the embodiment shown in FIG. 6A and FIG. 6B and the embodiment shown in FIG. 8 may be applied in combination, for example, the embodiment shown in FIG. 8 may be performed after the embodiment shown in FIG. 6A and FIG. 6B, and the embodiment shown in FIG. 4 and the embodiment shown in FIG. 7 each may be applied independently. Alternatively, the embodiment shown in FIG. 7 and the embodiment shown in FIG. 8 may be applied in combination, for example, the embodiment shown in FIG. 8 may be performed after the embodiment shown in FIG. 7, and the embodiment shown in FIG. 4 and the embodiment shown in FIG. 6A and FIG. 6B each may be applied independently. Alternatively, the embodiment shown in FIG. 4, the embodiment shown in FIG. 6A and FIG. 6B, and the embodiment shown in FIG. 8 may be applied in combination, for example, the embodiment shown in FIG. 6A and FIG. 6B may be performed after the embodiment shown in FIG. 4, the embodiment shown in FIG. 8 may be performed after the embodiment shown in FIG. 6A and FIG. 6B, and the embodiment shown in FIG. 7 may be applied independently. Alternatively, the embodiment shown in FIG. 6A and FIG. 6B, the embodiment shown in FIG. 7, and the embodiment shown in FIG. 8 may be applied in combination, for example, the embodiment shown in FIG. 7 may be performed after the embodiment shown in FIG. 6A and FIG. 6B, the embodiment shown in FIG. 8 may be performed after the embodiment shown in FIG. 7, and the embodiment shown in FIG. 4 may be applied independently. Alternatively, the embodiment shown in FIG. 4, the embodiment shown in FIG. 6A and FIG. 6B, and the embodiment shown in FIG. 7 may be applied in combination, for example, the embodiment shown in FIG. 6A and FIG. 6B may be performed after the embodiment shown in FIG. 4, the embodiment shown in FIG. 7 may be performed after the embodiment shown in FIG. 6A and FIG. 6B, and the embodiment shown in FIG. 8 may be applied independently. Alternatively, the embodiment shown in FIG. 4, the embodiment shown in FIG. 6A and FIG. 6B, the embodiment shown in FIG. 7, and the embodiment shown in FIG. 8 each may be applied independently.

For ease of description, the following uses an example in which the method is performed by a network device and a terminal device. For example, this embodiment of this application is applied to the network architecture shown in FIG. 3. Therefore, the following access network device may be the access network device in the network architecture shown in FIG. 3, the following first terminal device may be the terminal device 1 in the network architecture shown in FIG. 3, and the following second terminal device may be the terminal device 2 in the network architecture shown in FIG. 3.

S801: The second terminal device sends a resource request message to the first terminal device, and correspondingly, the first terminal device receives the resource request message from the second terminal device. For example, the resource request message is referred to as a first resource request message. The first resource request message may be used to request to allocate a resource. The resource is used by the second terminal device after an RRC connection between the first terminal device and the access network device is disconnected. The resource is used by the second terminal device to send information on a sidelink connection, for example, may be used by the second terminal device to send information to the first terminal device by using the sidelink connection. Optionally, the information may be sent by using an SL RRC message between the second terminal device and the first terminal device. If the embodiment shown in FIG. 8 and the embodiment shown in FIG. 4 are applied in combination, the sidelink connection may be a sidelink connection established by using the method provided in the embodiment shown in FIG. 4.

For example, if the embodiment shown in FIG. 5 and the embodiment shown in FIG. 8 are applied in combination, the second terminal device may send the first resource request message to the first terminal device by using a first radio bearer, and the first terminal device may receive the first resource request message from the second terminal device by using the first radio bearer. Alternatively, the second terminal device may send the first resource request message to the first terminal device by using an RRC connection between the second terminal device and the access network device, and the first terminal device may receive the first resource request message from the second terminal device by using the RRC connection. The first radio bearer is preconfigured. For descriptions of the first radio bearer, refer to the embodiment shown in FIG. 5.

Alternatively, if the embodiment shown in FIG. 6A and FIG. 6B and the embodiment shown in FIG. 8 are applied in combination, the second terminal device may send the first resource request message to the first terminal device by using a first radio bearer, and the first terminal device may receive the first resource request message from the second terminal device by using the first radio bearer. The first radio bearer is configured by the access network device. For descriptions of the first radio bearer, refer to the embodiment shown in FIG. 6A and FIG. 6B.

Alternatively, if the embodiment shown in FIG. 8 is applied independently, or the embodiment shown in FIG. 5 and the embodiment shown in FIG. 8 are applied in combination, or the embodiment shown in FIG. 6A and FIG. 6B and the embodiment shown in FIG. 8 are applied in combination, the second terminal device may send the first resource request message to the first terminal device by using another radio bearer between the first terminal device and the second terminal device. For example, the second terminal device may send the first resource request message to the first terminal device by using a fourth radio bearer. That the fourth radio bearer is not used to transmit relay information may be understood as that the fourth radio bearer is a common radio bearer between the first terminal device and the second terminal device. If the second terminal device sends the first resource request message to the first terminal device by using the fourth radio bearer, because the first resource request message is relay information and needs to be forwarded to a network, the first resource request message may include fifth indication information. The fifth indication information may indicate that the first resource request message is the relay information, or indicate that the first resource request message needs to be forwarded to the network. The first terminal device may determine, based on the fifth indication information, to forward the first resource request message to the network. Alternatively, the first resource request message may not include fifth indication information, but includes an identifier of the second terminal device (for related descriptions of the identifier of the second terminal device, refer to the foregoing embodiments). The first terminal device may determine, based on the identifier of the second terminal device, to forward the first resource request message to a network.

Alternatively, S801 may not be performed, that is, S801 is an optional step, and is represented by a dashed line in FIG. 8.

S802: The first terminal device sends a second request message to the access network device, and the access network device receives the second request message from the first terminal device.

If S801 is performed, the second request message may include the first resource request message. That the second request message includes the seventh message may be understood as that the second request message includes all or some information included in the first resource request message. For example, the first resource request message includes sixth information, and the sixth information may be all or some information included in the first resource request message. In this case, the first terminal device may add the sixth information to the second request message, and send the second request message to the access network device. If the second request message includes only the first resource request message, and the second request message includes all information of the first resource request message, S802 may also be understood as that the first terminal device forwards the first resource request message to the access network device, and the access network device receives the first resource request message from the first terminal device.

If S801 is not performed, the second request message is generated by the first terminal device, and certainly does not include the first resource request message.

Optionally, the second request message may be further used to request to allocate a resource to the first terminal device. The resource is used by the first terminal device after an RRC connection between the first terminal device and the access network device is disconnected. The resource is used by the first terminal device to send information on a sidelink connection, for example, may be used by the first terminal device to send information to the second terminal device by using the sidelink connection. Optionally, the information may be sent by using an SL RRC message between the second terminal device and the first terminal device. For example, the second request message may be used to request to allocate a resource to the second terminal device, and request to allocate a resource to the first terminal device. In this case, if the second request message includes the first resource request message (or the sixth information), information used to request to allocate a resource to the first terminal device is included in the second request message and included outside the first resource request message.

The second request message may be carried in SUI, UE auxiliary information, or another message.

The first resource request message is a message that needs to be relayed. Therefore, the first terminal device may forward information (for example, the sixth information) included in the first resource request message to the access network device. For example, if the embodiment shown in FIG. 5 and the embodiment shown in FIG. 8 are applied in combination, the first terminal device may send the second request message to the access network device by using a second radio bearer, and the access network device may receive the second request message from the first terminal device by using the second radio bearer. The second radio bearer is preconfigured. For descriptions of the second radio bearer, refer to the embodiment shown in FIG. 5.

Alternatively, if the embodiment shown in FIG. 6A and FIG. 6B and the embodiment shown in FIG. 8 are applied in combination, the first terminal device may send the second request message to the access network device by using a second radio bearer, and the access network device may receive the second request message from the first terminal device by using the second radio bearer. The second radio bearer is configured by the access network device. For descriptions of the second radio bearer, refer to the embodiment shown in FIG. 6A and FIG. 6B.

In addition, the second terminal device sends the first resource request message to the first terminal device by using a fourth radio bearer in S801, and the first resource request message includes fifth indication information or an identifier of the second terminal device, even if the first terminal device sends the second request message to the access network device by using a second radio bearer in S802, the second request message includes the fifth indication information or the identifier of the second terminal device.

Alternatively, if the embodiment shown in FIG. 8 is applied independently, or the embodiment shown in FIG. 5 and the embodiment shown in FIG. 8 are applied in combination, or the embodiment shown in FIG. 6A and FIG. 6B and the embodiment shown in FIG. 8 are applied in combination, the first terminal device may send the second request message to the access network device by using another radio bearer between the first terminal device and the access network device. For example, the first terminal device may send the second request message to the access network device by using a third radio bearer. That the third radio bearer is not used to transmit relay information may be understood as that the third radio bearer is a common radio bearer between the first terminal device and the access network device. If the first terminal device sends the second request message to the access network device by using the third radio bearer, because the first resource request message is relay information, the network needs to learn that the first resource request message is from the second terminal device, the second request message may include the fifth indication information (for example, the fifth indication information is included in the first resource request message), and the access network device may determine, based on the fifth indication information, that the first resource request message is from the second terminal device. Alternatively, the first resource request message (or the second request message) may not include fifth indication information, but includes an identifier of the second terminal device. The access network device may determine, based on the identifier of the second terminal device, that the first resource request message is from the second terminal device.

In addition, if the second terminal device sends the first resource request message to the first terminal device by using a first radio bearer in S801, and the first resource request message may not include the fifth indication information or the identifier of the second terminal device, even if the first terminal device sends the second request message to the access network device by using a third radio bearer in S802, the second request message does not include the fifth indication information or the identifier of the second terminal device. Therefore, a better manner is as follows: If the second terminal device sends the first resource request message to the first terminal device by using the first radio bearer in S801, the first terminal device may send the second request message to the access network device by using the second radio bearer in S802. If the second terminal device sends the first resource request message to the first terminal device by using the fourth radio bearer in S801, the first terminal device may send the second request message to the access network device by using the third radio bearer in S802.

S802 is an optional step, and is not necessarily performed. S802 is represented by a dashed line in FIG. 8. For example, although the second terminal device does not request to allocate a resource, the access network device may allocate a resource to the second terminal device. Alternatively, although the first terminal device does not request to allocate a resource, the access network device may allocate a resource to the first terminal device.

S803: The first terminal device sends a second resource request message to the access network device, and correspondingly, the access network device receives the second resource request message from the first terminal device.

The second resource request message may be used to request to allocate a resource. The resource is used by the first terminal device after an RRC connection between the first terminal device and the access network device is disconnected. The resource is used by the first terminal device to send information on a sidelink connection, for example, may be used by the first terminal device to send information to the second terminal device by using the sidelink connection. If the embodiment shown in FIG. 8 and the embodiment shown in FIG. 4 are applied in combination, the sidelink connection may be a sidelink connection established by using the method provided in the embodiment shown in FIG. 4.

If the embodiment shown in FIG. 8 is applied independently, or the embodiment shown in FIG. 5 and the embodiment shown in FIG. 8 are applied in combination, or the embodiment shown in FIG. 6A and FIG. 6B and the embodiment shown in FIG. 8 are applied in combination, because the second resource request message is not a relay message, the first terminal device may send the second resource request message to the access network device by using another radio bearer between the first terminal device and the access network device. For example, the first terminal device may send the second resource request message to the access network device by using a third radio bearer. That the third radio bearer is not used to transmit relay information may be understood as that the third radio bearer is a common radio bearer between the first terminal device and the access network device.

S803 is an optional step, and is not necessarily performed. S803 is represented by a dashed line in FIG. 8. If S803 needs to be performed, S802 and S803 may be simultaneously performed, or S802 may be performed before S803, or S802 may be performed after S803.

S804: The access network device sends a first resource allocation message to the first terminal device, and correspondingly, the first terminal device receives the first resource allocation message from the access network device. The first resource allocation message may include second resource information, the second resource information may indicate a second resource, and the second resource is a resource allocated to the second terminal device. For example, the second resource may be used by the second terminal device to send data to the first terminal device by using the sidelink connection. In addition, the second resource may be used by the second terminal device after the RRC connection between the first terminal device and the access network device is disconnected. If the embodiment shown in FIG. 8 and the embodiment shown in FIG. 4 are applied in combination, the sidelink connection may be a sidelink connection established by using the method provided in the embodiment shown in FIG. 4.

After receiving the first resource request message, the access network device may allocate a resource to the second terminal device, for example, the second resource. After allocating the second resource, the access network device may send the second resource information to the second terminal device, so that the second terminal device uses the second resource after the RRC connection between the first terminal device and the access network device is disconnected. To send the second resource information to the second terminal device, the access network device needs to first send the second resource information to the first terminal device, and then the first terminal device forwards the second resource information to the second terminal device.

Optionally, the access network device may further set use duration for the second resource, for example, referred to as first duration. The first duration may indicate the use duration of the second resource. For example, if the first duration includes a start moment and an end moment, the second terminal device can use the second resource only within duration indicated by the start moment and the end moment, and when the end moment expires, the second terminal device cannot use the second resource. For another example, the first duration includes duration information. For example, the duration information is one hour or 10 minutes. In this case, a start moment corresponding to the duration information may be calculated starting from a moment for receiving the second resource information by the second terminal device, or may be calculated starting from a moment for sending the second resource information by the access network device. In this case, the second terminal device can use the second resource only within the duration, and when the duration expires, the second terminal device cannot use the second resource. Alternatively, the first duration may be implemented in another form. By setting the duration, the second terminal device is prevented from occupying the second resource for a long time as much as possible, so that the second resource can be properly released for use by another terminal device in an RRC connected state. When the duration expires, if the terminal device still requires a resource to perform communication on the sidelink, the terminal device may re-enter an RRC connected state to request the network. If the access network device sets the first duration for the second resource, the first resource allocation message may further include the first duration.

For example, if the embodiment shown in FIG. 5 and the embodiment shown in FIG. 8 are applied in combination, the access network device may send the first resource allocation message to the first terminal device by using a second radio bearer, and the first terminal device may receive the first resource allocation message from the access network device by using the second radio bearer. The second radio bearer is preconfigured. For descriptions of the second radio bearer, refer to the embodiment shown in FIG. 5.

Alternatively, if the embodiment shown in FIG. 6A and FIG. 6B and the embodiment shown in FIG. 8 are applied in combination, the access network device may send the first resource allocation message to the first terminal device by using a second radio bearer, and the first terminal device may receive the first resource allocation message from the access network device by using the second radio bearer. The second radio bearer is configured by the access network device. For descriptions of the second radio bearer, refer to the embodiment shown in FIG. 6A and FIG. 6B.

Alternatively, if the embodiment shown in FIG. 8 is applied independently, or the embodiment shown in FIG. 5 and the embodiment shown in FIG. 8 are applied in combination, or the embodiment shown in FIG. 6A and FIG. 6B and the embodiment shown in FIG. 8 are applied in combination, the access network device may send the first resource allocation message to the first terminal device by using another radio bearer between the first terminal device and the access network device. For example, the access network device may send the first resource allocation message to the first terminal device by using a third radio bearer. If the access network device sends the first resource allocation message to the access network device by using the third radio bearer, because the first resource allocation message is relay information, the first terminal device needs to learn that the fourth message needs to be forwarded to the second terminal device, the first resource allocation message may include sixth indication information. The sixth indication information may indicate that the first resource allocation message corresponds to the second terminal device (or indicate that the second resource information corresponds to the first terminal device, or indicate that the second resource information and the first duration correspond to the first terminal device), or indicate that the first resource allocation message is a relay message (or indicate that the second resource information is relay information, or indicate that the second resource information and the first duration are relay information). The first terminal device may determine, based on the sixth indication information, that the first resource allocation message needs to be forwarded to the second terminal device. Alternatively, the first resource allocation message may not include sixth indication information, but includes an identifier of the second terminal device. The first terminal device may determine, based on the identifier of the second terminal device, that the first resource allocation message needs to be forwarded to the second terminal device.

For example, the first resource allocation message may be an RRC release (release) message. In addition to the second resource information, the RRC release message may be further used to release the RRC connection between the first terminal device and the access network device. The second resource information is indicated to the second terminal device by using the RRC release message, so that the second terminal device can use the second resource as soon as possible. Alternatively, the resource allocation information may not be an RRC release message, for example, may be another message such as an RRC message used when the first terminal device is in the RRC connected state.

S805: The access network device sends a second resource allocation message to the first terminal device, and correspondingly, the first terminal device receives the second resource allocation message from the access network device. The second resource allocation message may include third resource information, the third resource information may indicate a third resource, and the third resource is a resource allocated to the first terminal device. For example, the third resource may be used by the first terminal device to send data to the second terminal device by using the sidelink connection. In addition, the third resource may be used by the first terminal device after the RRC connection between the first terminal device and the access network device is disconnected. If the embodiment shown in FIG. 8 and the embodiment shown in FIG. 4 are applied in combination, the sidelink connection may be a sidelink connection established by using the method provided in the embodiment shown in FIG. 4.

If S803 is performed, after receiving the second resource request message, the access network device may allocate a resource to the first terminal device, for example, the third resource. After allocating the third resource, the access network device may send the third resource information to the first terminal device, so that the first terminal device uses the third resource after the RRC connection between the first terminal device and the access network device is disconnected. If S803 is not performed, S805 does not need to be performed. Therefore, S805 is an optional step, and is represented by a dashed line in FIG. 8.

Optionally, the access network device may further set use duration for the third resource, for example, referred to as second duration. The second duration may indicate the use duration of the third resource. For example, if the second duration includes a start moment and an end moment, the first terminal device can use the third resource only within duration indicated by the start moment and the end moment, and when the end moment expires, the first terminal device cannot use the third resource. For another example, the second duration includes duration information. For example, the duration information is one hour or 10 minutes. In this case, a start moment corresponding to the duration information may be calculated starting from a moment for receiving the third resource information by the first terminal device, or may be calculated starting from a moment for sending the third resource information by the access network device. In this case, the first terminal device can use the third resource only within the duration, and when the duration expires, the first terminal device cannot use the third resource. Alternatively, the second duration may be implemented in another form. By setting the duration, the first terminal device is prevented from occupying the third resource for a long time as much as possible, so that the third resource can be properly released for use by another terminal device in an RRC connected state. When the duration expires, if the terminal device still requires a resource to perform communication on the sidelink, the terminal device may re-enter an RRC connected state to request the network. If the access network device sets the second duration for the third resource, the second resource allocation message may further include the second duration. A time corresponding to the second duration may be the same as or different from a time corresponding to the third duration.

For example, if the embodiment shown in FIG. 8 is applied independently, or the embodiment shown in FIG. 5 and the embodiment shown in FIG. 8 are applied in combination, or the embodiment shown in FIG. 6A and FIG. 6B and the embodiment shown in FIG. 8 are applied in combination, because the second resource allocation message is not a relay message, the access network device may send the second resource allocation message to the first terminal device by using another radio bearer between the first terminal device and the access network device. For example, the access network device may send the second resource allocation message to the first terminal device by using a third radio bearer.

S805 is an optional step, and is not necessarily performed. S805 is represented by a dashed line in FIG. 8. If S805 needs to be performed, the first resource allocation message and the second resource allocation message may be a same message. For example, the message is an RRC release message, and is used to release the RRC connection between the first terminal device and the access network device. For example, the access network device may send the first resource allocation message (or referred to as the second resource allocation message) to the first terminal device by using the third radio bearer, and the first resource allocation message includes both the second resource information and the third resource information. In this case, the first re source allocation message may further include sixth indication information. In this case, the sixth indication information may indicate that the second resource information corresponds to the second terminal device (or indicate that the second resource information and the first duration correspond to the second terminal device), or indicate that the second resource information is a relay message (or indicate that the second resource information and the first duration are relay information), so that the first terminal device determines that the second resource information (or the second resource information and the first duration) needs to be forwarded to the second terminal device.

Alternatively, the first resource allocation message and the second resource allocation message may be different messages. For example, both the first resource allocation message and the second resource allocation message are RRC release messages, and are used to release the RRC connection between the first terminal device and the access network device. However, the access network device may separately send the first resource allocation message and the second resource allocation message to the first terminal device, and the first resource allocation message is forwarded by the first terminal device to the second terminal device.

S806: The first terminal device sends a third message to the second terminal device, and correspondingly, the second terminal device receives the third message from the first terminal device.

For example, the first terminal device may forward the first resource allocation message to the second terminal device, and the third message is the first resource allocation message. Alternatively, the first terminal device may not need to forward the first resource allocation message to the second terminal device, but sends the second resource information (or the second resource information and the first duration) to the second terminal device. For example, the first terminal device may add the second resource information (or the second resource information and the first duration) to the third message and send the third message to the second terminal device. For example, an information amount of the third message is less than an information amount of the first resource allocation message. In this way, signaling overheads can be reduced.

For example, if the embodiment shown in FIG. 5 and the embodiment shown in FIG. 8 are applied in combination, the first terminal device may send the third message to the second terminal device by using a first radio bearer, and the second terminal device may receive the third message from the first terminal device by using the first radio bearer. Alternatively, the first terminal device may send the third message to the second terminal device by using an RRC connection between the second terminal device and the access network device, and the second terminal device may receive the third message from the first terminal device by using the RRC connection. The first radio bearer is preconfigured. For descriptions of the first radio bearer, refer to the embodiment shown in FIG. 5.

Alternatively, if the embodiment shown in FIG. 6A and FIG. 6B and the embodiment shown in FIG. 8 are applied in combination, the first terminal device may send the third message to the second terminal device by using a first radio bearer, and the second terminal device may receive the third message from the first terminal device by using the first radio bearer. The first radio bearer is configured by the access network device. For descriptions of the first radio bearer, refer to the embodiment shown in FIG. 6A and FIG. 6B.

In addition, if the access network device sends the first resource allocation message to the first terminal device by using a third radio bearer in S804, and the first resource allocation message includes sixth indication information or an identifier of the second terminal device, even if the first terminal device sends the third message to the second terminal device by using a first radio bearer in S806, the third message includes the sixth indication information or the identifier of the second terminal device.

Alternatively, if the embodiment shown in FIG. 8 is applied independently, or the embodiment shown in FIG. 5 and the embodiment shown in FIG. 8 are applied in combination, or the embodiment shown in FIG. 6A and FIG. 6B and the embodiment shown in FIG. 8 are applied in combination, the first terminal device may send the third message to the second terminal device by using another radio bearer between the first terminal device and the second terminal device. For example, the first terminal device may send the third message to the second terminal device by using a fourth radio bearer. If the first terminal device sends the third message to the first terminal device by using the fourth radio bearer, because the third message is relay information and is from the access network device, the third message may include the sixth indication information, and the second terminal device may determine, based on the sixth indication information, that the third message is from the network. Alternatively, the third message may not include sixth indication information, but includes an identifier of the second terminal device. The second terminal device may determine, based on the identifier of the second terminal device, that the third message is from the network.

In addition, if the access network device sends the first resource allocation message to the first terminal device by using a third radio bearer in S804, and the first resource allocation message may not include the sixth indication information or the identifier of the second terminal device, even if the first terminal device sends the third message to the second terminal device by using a fourth radio bearer in S804, the third message does not include the sixth indication information or the identifier of the second terminal device. Therefore, a better manner is as follows: If the access network device sends the first resource allocation message to the first terminal device by using the second radio bearer in S804, the first terminal device may send the third message to the second terminal device by using the first radio bearer in S806. If the access network device sends the first resource allocation message to the first terminal device by using the third radio bearer in S804, the first terminal device may send the third message to the second terminal device by using the fourth radio bearer in S806.

According to the method provided in this embodiment of this application, the terminal device (for example, the first terminal device or the second terminal device) can request a corresponding resource in advance, and the requested resource may be used after the RRC connection between the first terminal device and the access network device is disconnected. The access network device may allocate a resource to the terminal device, so that the terminal device can use the resource after the RRC connection between the first terminal device and the access network device is disconnected. Therefore, the first terminal device does not need to always keep in the RRC connected state to use the resource. This helps reduce power consumption of the first terminal device. In addition, after the RRC connection between the first terminal device and the access network device is disconnected, the first terminal device or the second terminal device still has an available resource to send data by using the sidelink connection. This saves a case in which the terminal device has no available resource, and reduces a data sending delay.

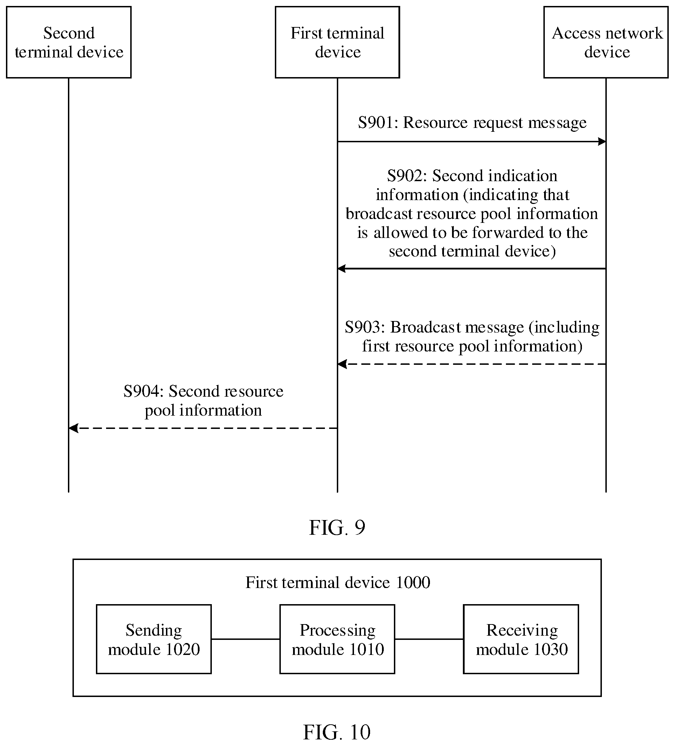

In the manner provided in the embodiment shown in FIG. 8, the terminal device (for example, the first terminal device or the second terminal device) can obtain the resource used after the RRC connection between the first terminal device and the access network device is disconnected, to reduce power consumption of the first terminal device. Next, an embodiment of this application provides a sixth communications method. According to the method, the terminal device (for example, the first terminal device or the second terminal device) can also obtain a resource used after the RRC connection between the first terminal device and the access network device is disconnected, to reduce power consumption of the first terminal device. FIG. 9 is a flowchart of the method. In the following description process, an example in which the method is applied to the network architecture shown in FIG. 3 is used. The scenario shown in FIG. 3 is a relay scenario. Alternatively, this embodiment of this application may not be used in a relay scenario, but is used in a scenario in which two terminal devices are directly connected. For example, if a first terminal device can communicate with a second terminal device, the second terminal device is in an OOC state or is not provided with a Uu interface, and the first terminal device is in an in-coverage state, a network device serving the first terminal device can allocate a resource to the second terminal device.

Any two or more of the embodiment shown in FIG. 4, the embodiment shown in FIG. 5, the embodiment shown in FIG. 7, and the embodiment shown in FIG. 9 may be applied in combination. For example, the method provided in the embodiment shown in FIG. 9 may be performed after the method provided in the embodiment shown in FIG. 4, the method provided in the embodiment shown in FIG. 5, and the method provided in the embodiment shown in FIG. 7. To be specific, the embodiment shown in FIG. 4, the embodiment shown in FIG. 5, the embodiment shown in FIG. 7, and the embodiment shown in FIG. 9 may be applied in combination. Alternatively, the embodiment shown in FIG. 4 and the embodiment shown in FIG. 9 may be applied in combination, for example, the embodiment shown in FIG. 9 may be performed after the embodiment shown in FIG. 4, and the embodiment shown in FIG. 5 and the embodiment shown in FIG. 7 each may be applied independently. Alternatively, the embodiment shown in FIG. 5 and the embodiment shown in FIG. 9 may be applied in combination, for example, the embodiment shown in FIG. 9 may be performed after the embodiment shown in FIG. 5, and the embodiment shown in FIG. 4 and the embodiment shown in FIG. 7 each may be applied independently. Alternatively, the embodiment shown in FIG. 7 and the embodiment shown in FIG. 9 may be applied in combination, for example, the embodiment shown in FIG. 9 may be performed after the embodiment shown in FIG. 7, and the embodiment shown in FIG. 4 and the embodiment shown in FIG. 5 each may be applied independently. Alternatively, the embodiment shown in FIG. 4, the embodiment shown in FIG. 5, and the embodiment shown in FIG. 9 may be applied in combination, for example, the embodiment shown in FIG. 5 may be performed after the embodiment shown in FIG. 4, the embodiment shown in FIG. 9 may be performed after the embodiment shown in FIG. 5, and the embodiment shown in FIG. 7 may be applied independently. Alternatively, the embodiment shown in FIG. 5, the embodiment shown in FIG. 7, and the embodiment shown in FIG. 9 may be applied in combination, for example, the embodiment shown in FIG. 7 may be performed after the embodiment shown in FIG. 5, the embodiment shown in FIG. 9 may be performed after the embodiment shown in FIG. 7, and the embodiment shown in FIG. 4 may be applied independently. Alternatively, the embodiment shown in FIG. 4, the embodiment shown in FIG. 5, and the embodiment shown in FIG. 7 may be applied in combination, for example, the embodiment shown in FIG. 5 may be performed after the embodiment shown in FIG. 4, the embodiment shown in FIG. 7 may be performed after the embodiment shown in FIG. 5, and the embodiment shown in FIG. 9 may be applied independently. Alternatively, the embodiment shown in FIG. 4, the embodiment shown in FIG. 5, the embodiment shown in FIG. 7, and the embodiment shown in FIG. 9 each may be applied independently.

Alternatively, any two or more of the embodiment shown in FIG. 4, the embodiment shown in FIG. 6A and FIG. 6B, the embodiment shown in FIG. 7, and the embodiment shown in FIG. 9 may be applied in combination. For example, the method provided in the embodiment shown in FIG. 9 may be performed after the method provided in the embodiment shown in FIG. 4, the method provided in the embodiment shown in FIG. 6A and FIG. 6B, and the method provided in the embodiment shown in FIG. 7. To be specific, the embodiment shown in FIG. 4, the embodiment shown in FIG. 6A and FIG. 6B, the embodiment shown in FIG. 7, and the embodiment shown in FIG. 9 may be applied in combination. Alternatively, the embodiment shown in FIG. 4 and the embodiment shown in FIG. 9 may be applied in combination, for example, the embodiment shown in FIG. 9 may be performed after the embodiment shown in FIG. 4, and the embodiment shown in FIG. 6A and FIG. 6B and the embodiment shown in FIG. 7 each may be applied independently. Alternatively, the embodiment shown in FIG. 6A and FIG. 6B and the embodiment shown in FIG. 9 may be applied in combination, for example, the embodiment shown in FIG. 9 may be performed after the embodiment shown in FIG. 6A and FIG. 6B, and the embodiment shown in FIG. 4 and the embodiment shown in FIG. 7 each may be applied independently. Alternatively, the embodiment shown in FIG. 7 and the embodiment shown in FIG. 9 may be applied in combination, for example, the embodiment shown in FIG. 9 may be performed after the embodiment shown in FIG. 7, and the embodiment shown in FIG. 4 and the embodiment shown in FIG. 6A and FIG. 6B each may be applied independently. Alternatively, the embodiment shown in FIG. 4, the embodiment shown in FIG. 6A and FIG. 6B, and the embodiment shown in FIG. 9 may be applied in combination, for example, the embodiment shown in FIG. 6A and FIG. 6B may be performed after the embodiment shown in FIG. 4, the embodiment shown in FIG. 9 may be performed after the embodiment shown in FIG. 6A and FIG. 6B, and the embodiment shown in FIG. 7 may be applied independently. Alternatively, the embodiment shown in FIG. 6A and FIG. 6B, the embodiment shown in FIG. 7, and the embodiment shown in FIG. 9 may be applied in combination, for example, the embodiment shown in FIG. 7 may be performed after the embodiment shown in FIG. 6A and FIG. 6B, the embodiment shown in FIG. 9 may be performed after the embodiment shown in FIG. 7, and the embodiment shown in FIG. 4 may be applied independently. Alternatively, the embodiment shown in FIG. 4, the embodiment shown in FIG. 6A and FIG. 6B, and the embodiment shown in FIG. 7 may be applied in combination, for example, the embodiment shown in FIG. 6A and FIG. 6B may be performed after the embodiment shown in FIG. 4, the embodiment shown in FIG. 7 may be performed after the embodiment shown in FIG. 6A and FIG. 6B, and the embodiment shown in FIG. 9 may be applied independently. Alternatively, the embodiment shown in FIG. 4, the embodiment shown in FIG. 6A and FIG. 6B, the embodiment shown in FIG. 7, and the embodiment shown in FIG. 9 each may be applied independently.

For ease of description, the following uses an example in which the method is performed by a network device and a terminal device. For example, this embodiment of this application is applied to the network architecture shown in FIG. 3. Therefore, the following access network device may be the access network device in the network architecture shown in FIG. 3, the following first terminal device may be the terminal device 1 in the network architecture shown in FIG. 3, and the following second terminal device may be the terminal device 2 in the network architecture shown in FIG. 3.

S901: The first terminal device sends a resource request message to the access network device, and correspondingly, the access network device receives the resource request message from the first terminal device. The resource request message may be used to request to forward broadcast resource pool information to the second terminal device. A resource included in the resource pool indicated by the resource pool information may be used by the second terminal device. The resource is used by the second terminal device to send information on a sidelink connection, for example, may be used by the second terminal device to send information to the first terminal device by using the sidelink connection. If the embodiment shown in FIG. 9 and the embodiment shown in FIG. 4 are applied in combination, the sidelink connection may be a sidelink connection established by using the method provided in the embodiment shown in FIG. 4.

If the first terminal device is in an RRC connected state, the access network device may allocate a resource to the second terminal device, or may allocate a resource to the first terminal device. If an RRC connection between the first terminal device and the access network device is disconnected, the access network device cannot allocate a resource to the first terminal device, but the access network device may send a broadcast message. The broadcast message is, for example, a system message, and the system message may include resource pool information. The first terminal device may send data on the sidelink connection by using a resource in a resource pool indicated by the resource pool information. However, no Uu interface is set for the second terminal device. Therefore, the second terminal device cannot receive the broadcast message from the access network device. Therefore, in this embodiment of this application, the first terminal device may send the resource request message to the access network device, to request to forward, to the second terminal device, the resource pool information broadcast by the access network device. In this case, the second terminal device can obtain the resource pool information broadcast by the access network device. Therefore, after the RRC connection between the first terminal device and the access network device is disconnected, the second terminal device can select a resource from the resource pool indicated by the resource pool information to send data on the sidelink connection, to avoid a case in which the second terminal device has no available resource as much as possible, and reduce a data transmission delay. In addition, the first terminal device does not need to always keep in the RRC connected state. This helps reduce power consumption of the first terminal device.

If the embodiment shown in FIG. 9 is applied independently, or the embodiment shown in FIG. 5 and the embodiment shown in FIG. 9 are applied in combination, or the embodiment shown in FIG. 6A and FIG. 6B and the embodiment shown in FIG. 9 are applied in combination, because the resource request message is not a relay message in S901, the first terminal device may send the resource request message to the access network device by using a third radio bearer between the first terminal device and the access network device. That the third radio bearer is not used to transmit relay information may be understood as that the third radio bearer is a common radio bearer between the first terminal device and the access network device.

S902: The access network device sends second indication information to the first terminal device, and correspondingly, the first terminal device receives the second indication information from the access network device.

After receiving the resource request message, the access network device may determine whether the first terminal device is allowed to forward the broadcast resource pool information to the second terminal device. A factor based on which the access network device performs determining depends on internal implementation of the access network device. This is not limited in this embodiment of this application.

If the access network device allows the first terminal device to forward the broadcast resource pool information to the second terminal device, the second indication information may indicate that the broadcast resource pool information is allowed to be forwarded to the second terminal device. Alternatively, if the access network device does not allow the first terminal device to forward the broadcast resource pool information to the second terminal device, the second indication information may indicate that the broadcast resource pool information is not allowed to be forwarded to the second terminal device.

Alternatively, if the access network device allows forwarding the broadcast resource pool information to the second terminal device, the access network device sends the second indication information to the first terminal device, where the second indication information may indicate that the broadcast resource pool information is allowed to be forwarded to the second terminal device. If the access network device does not allow forwarding the broadcast resource pool information to the second terminal device, the access network device may not send the information to the first terminal device. After sending the resource request message to the access network device, if the first terminal device does not receive feedback (for example, the second indication information) from the access network device, the first terminal device may determine that the access network device is not allowed to forward the broadcast resource pool information to the second terminal device.

For example, if the embodiment shown in FIG. 9 is applied independently, or the embodiment shown in FIG. 5 and the embodiment shown in FIG. 9 are applied in combination, or the embodiment shown in FIG. 6A and FIG. 6B and the embodiment shown in FIG. 9 are applied in combination, the access network device may send the second indication information to the first terminal device by using a third radio bearer between the first terminal device and the access network device, and the first terminal device may receive the second indication information from the access network device by using the third radio bearer.

For example, the second indication information may be included in an RRC release message, and the RRC release message is used to release the RRC connection between the first terminal device and the access network device. In other words, the access network device may send the second indication information to the first terminal device when releasing the RRC connection between the first terminal device and the access network device. The second indication information does not need to be sent independently, to reduce signaling overheads. Alternatively, the second indication information may be included in another message, for example, included in another message used when the first terminal device is in the RRC connected state.

S903: The access network device sends a broadcast message after the RRC connection between the first terminal device and the access network device is disconnected, and correspondingly, the first terminal device receives the broadcast message from the access network device.

The broadcast message may include first resource pool information, the first resource pool information indicates a first resource pool, and a resource included in the first resource pool may be used by the terminal device to transmit data on the sidelink connection. Certainly, there may be a plurality of terminal devices that can receive the broadcast message. In this embodiment of this application, only an example in which the first terminal device receives the broadcast message is used. For example, the broadcast message is a system message, for example, a system information block (system information block, SIB) 21 or a SIB26; or the broadcast message may not be a system message, but a message dedicated to broadcasting a resource pool.

After the first terminal device obtains the first resource pool information, if the first terminal device needs to transmit data by using the sidelink connection, the first terminal device may select a resource from the first resource pool.

S904: The first terminal device sends second resource pool information to the second terminal device, and correspondingly, the second terminal device receives the second resource pool information from the first terminal device.

The second resource pool information may indicate a second resource pool, and the second resource pool includes, for example, all or some resources in the first resource pool. For example, if the second resource pool includes all resources in the first resource pool, the second resource pool and the first resource pool are a same resource pool; or if the second resource pool includes some resources in the first resource pool, resources included in the second resource pool are a proper subset of resources included in the first resource pool. In other words, after determining the first resource pool by using the broadcast message, the first terminal device may forward the first resource pool information to the second terminal device, or the first terminal device may select some resources from the first resource pool to obtain the second resource pool, and send the second resource pool information to the second terminal device. For the first terminal device, this implementation is more flexible.

After the second terminal device obtains the second resource pool information, if the second terminal device needs to transmit data by using the sidelink connection, the second terminal device may select a resource from the second resource pool.

S903 to S904 are optional steps, and are represented by dashed lines in FIG. 9.

In this embodiment of this application, although no Uu interface is set for the second terminal device, the second terminal device can obtain the resource pool information broadcast by the access network device. Therefore, after the RRC connection between the first terminal device and the access network device is disconnected, the second terminal device can select a resource from the resource pool indicated by the resource pool information to send data on the sidelink connection, to avoid a case in which the second terminal device has no available resource as much as possible, and reduce a data transmission delay. In addition, the first terminal device does not need to always keep in the RRC connected state. This helps reduce power consumption of the first terminal device.

FIG. 10 is a schematic block diagram of a communications apparatus 1000 according to an embodiment of this application. For example, the communications apparatus 1000 is a first terminal device 1000.

The first terminal device 1000 includes a sending module 1020 and a receiving module 1030. Optionally, the first terminal device 1000 may further include a processing module 1010. For example, the first terminal device 1000 may be a terminal device, or may be a chip used in the terminal device or another combined device or component that has a function of the terminal device. When the first terminal device 1000 is the terminal device, the sending module 1020 may be a transmitter, and the receiving module 1030 may be a receiver. The transmitter may include an antenna, a radio frequency circuit, and the like, or the receiver may include an antenna, a radio frequency circuit, and the like. The transmitter and the receiver may constitute a transceiver together. The transceiver may implement functions of the transmitter and the receiver. Alternatively, the transmitter and the receiver may be two separately deployed function modules. The processing module 1010 may include a processor, for example, a baseband processor. The baseband processor may include one or more central processing units (central processing unit, CPU). When the first terminal device 1000 is the component that has the function of the terminal device, the sending module 1020 may be a radio frequency unit, the receiving module 1030 may be a radio frequency unit, and the processing module 1010 may be a processor, for example, a baseband processor. When the first terminal device 1000 is the chip system, the sending module 1020 and the receiving module 1030 each may be an input/output interface of the chip (for example, a baseband chip), and the processing module 1010 may be a processor of the chip system, and may include one or more central processing units. It should be understood that, in this embodiment of this application, the processing module 1010 may be implemented by a processor or a processor-related circuit component, and the sending module 1020 and the receiving module 1030 may be implemented by a transceiver or a transceiver-related circuit component.

For example, the processing module 1010 may be configured to perform all operations, such as S401 and S403, that are performed by the first terminal device in the embodiment shown in FIG. 4 other than sending and receiving operations, and/or configured to support another process of the technology described in this specification. The sending module 1020 may be configured to perform all sending operations, such as S401, S403, S404, and S406, that are performed by the first terminal device in the embodiment shown in FIG. 4, and/or configured to support another process of the technology described in this specification. The receiving module 1030 may be configured to perform all receiving operations, such as S401, S402, and S403, that are performed by the first terminal device in the embodiment shown in FIG. 4, and/or configured to support another process of the technology described in this specification.

For another example, the processing module 1010 may be configured to perform all operations, such as S505, that are performed by the first terminal device in the embodiment shown in FIG. 5 other than sending and receiving operations, and/or configured to support another process of the technology described in this specification. The sending module 1020 may be configured to perform all sending operations, such as S502, S504, and S505, that are performed by the first terminal device in the embodiment shown in FIG. 5, and/or configured to support another process of the technology described in this specification. The receiving module 1030 may be configured to perform all receiving operations, such as S501, S503, and S505, that are performed by the first terminal device in the embodiment shown in FIG. 5, and/or configured to support another process of the technology described in this specification.

For another example, the processing module 1010 may be configured to perform all operations, such as S614, that are performed by the first terminal device in the embodiment shown in FIG. 6A and FIG. 6B other than sending and receiving operations, and/or configured to support another process of the technology described in this specification. The sending module 1020 may be configured to perform all sending operations, such as S601, S605, S607, S609, S612, and S614, that are performed by the first terminal device in the embodiment shown in FIG. 6A and FIG. 6B, and/or configured to support another process of the technology described in this specification. The receiving module 1030 may be configured to perform all receiving operations, such as S602, S604, S606, S610, S612, and S614, that are performed by the first terminal device in the embodiment shown in FIG. 6A and FIG. 6B, and/or configured to support another process of the technology described in this specification.

For another example, the processing module 1010 may be configured to perform all operations, such as the operation of obtaining the first request message, that are performed by the first terminal device in the embodiment shown in FIG. 7 other than sending and receiving operations, and/or configured to support another process of the technology described in this specification. The sending module 1020 may be configured to perform all sending operations, such as S702 and S704, that are performed by the first terminal device in the embodiment shown in FIG. 7, and/or configured to support another process of the technology described in this specification. The receiving module 1030 may be configured to perform all receiving operations, such as S701 and S703, that are performed by the first terminal device in the embodiment shown in FIG. 7, and/or configured to support another process of the technology described in this specification.

For another example, the processing module 1010 may be configured to perform all operations, such as the operation of obtaining the second request message, that are performed by the first terminal device in the embodiment shown in FIG. 8 other than sending and receiving operations, and/or configured to support another process of the technology described in this specification. The sending module 1020 may be configured to perform all sending operations, such as S802, S803, and S806, that are performed by the first terminal device in the embodiment shown in FIG. 8, and/or configured to support another process of the technology described in this specification. The receiving module 1030 may be configured to perform all receiving operations, such as S801, S804, and S805, that are performed by the first terminal device in the embodiment shown in FIG. 8, and/or configured to support another process of the technology described in this specification.

For still another example, the processing module 1010 may be configured to perform all operations, such as the operation of obtaining the resource request message, that are performed by the first terminal device in the embodiment shown in FIG. 9 other than sending and receiving operations, and/or configured to support another process of the technology described in this specification. The sending module 1020 may be configured to perform all sending operations, such as S901 and S904, that are performed by the first terminal device in the embodiment shown in FIG. 9, and/or configured to support another process of the technology described in this specification. The receiving module 1030 may be configured to perform all receiving operations, such as S902 and S903, that are performed by the first terminal device in the embodiment shown in FIG. 9, and/or configured to support another process of the technology described in this specification.

In addition, the sending module 1020 and the receiving module 1030 may be one function module. The function module is referred to as a transceiver module. The transceiver module can implement both a sending operation and a receiving operation. For example, the transceiver module may be configured to perform all sending operations and all receiving operations performed by the first terminal device in any one of the embodiments shown in FIG. 4 to FIG. 9. For example, when a sending operation is performed, it may be considered that the transceiver module is the sending module 1020, or when a receiving operation is performed, it may be considered that the transceiver module is the receiving module 1030. Alternatively, the sending module 1020 and the receiving module 1030 may be two function modules. The transceiver module may be considered as a general term of the two function modules. The sending module 1020 is configured to implement a sending operation. For example, the sending module 1020 may be configured to perform all sending operations performed by the first terminal device in any one of the embodiments shown in FIG. 4 to FIG. 9. The receiving module 1030 is configured to implement a receiving operation. For example, the receiving module 1030 may be configured to perform all receiving operations performed by the first terminal device in any one of the embodiments shown in FIG. 4 to FIG. 9.

For functions that can be specifically implemented by the processing module 1010, the sending module 1020, and the receiving module 1030, refer to the descriptions of any one of the embodiments shown in FIG. 4 to FIG. 9. Details are not described again.

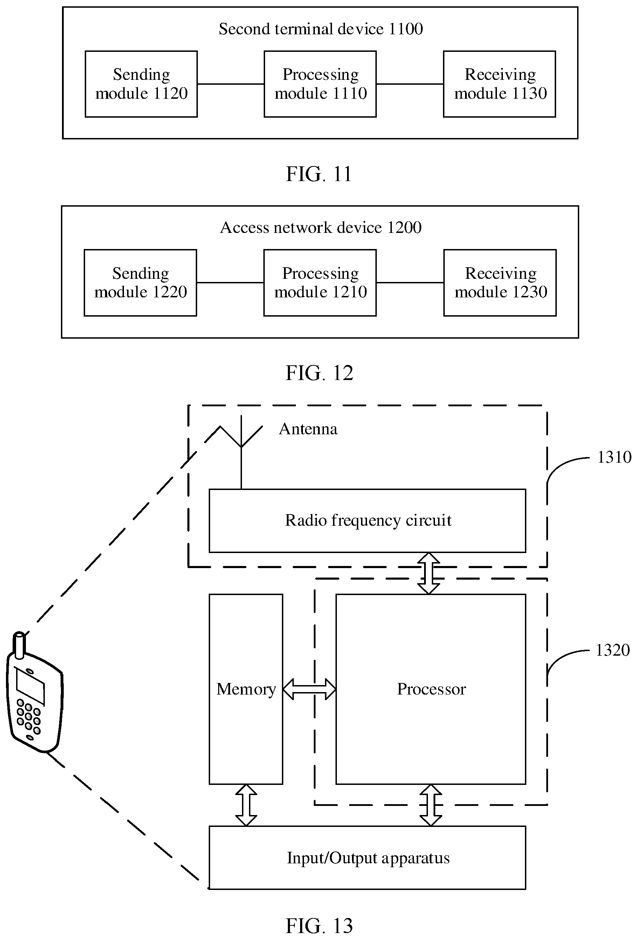

FIG. 11 is a schematic block diagram of a communications apparatus 1100 according to an embodiment of this application. For example, the communications apparatus 1100 is a second terminal device 1100.

The second terminal device 1100 includes a sending module 1120 and a receiving module 1130. Optionally, the second terminal device 1100 may further include a processing module 1110. For example, the second terminal device 1100 may be a terminal device, or may be a chip used in the terminal device or another combined device or component that has a function of the terminal device. When the second terminal device 1100 is the terminal device, the sending module 1120 may be a transmitter, and the receiving module 1130 may be a receiver. The transmitter may include an antenna, a radio frequency circuit, and the like, or the receiver may include an antenna, a radio frequency circuit, and the like. The transmitter and the receiver may constitute a transceiver together. The transceiver may implement functions of the transmitter and the receiver. Alternatively, the transmitter and the receiver may be two separately deployed function modules. The processing module 1110 may include a processor, for example, a baseband processor. The baseband processor may include one or more CPUs. When the second terminal device 1100 is the component that has the function of the terminal device, the sending module 1120 may be a radio frequency unit, the receiving module 1130 may be a radio frequency unit, and the processing module 1110 may be a processor, for example, a baseband processor. When the second terminal device 1100 is the chip system, the sending module 1120 and the receiving module 1130 each may be an input/output interface of the chip (for example, a baseband chip), and the processing module 1110 may be a processor of the chip system, and may include one or more central processing units. It should be understood that, in this embodiment of this application, the processing module 1110 may be implemented by a processor or a processor-related circuit component, and the sending module 1120 and the receiving module 1130 may be implemented by a transceiver or a transceiver-related circuit component.

For example, the processing module 1110 may be configured to perform all operations, such as S401, that are performed by the second terminal device in the embodiment shown in FIG. 4 other than sending and receiving operations, and/or configured to support another process of the technology described in this specification. The sending module 1120 may be configured to perform all sending operations, such as S401 and S402, that are performed by the second terminal device in the embodiment shown in FIG. 4, and/or configured to support another process of the technology described in this specification. The receiving module 1130 may be configured to perform all receiving operations, such as S401 and S406, that are performed by the second terminal device in the embodiment shown in FIG. 4, and/or configured to support another process of the technology described in this specification.

For another example, the processing module 1110 may be configured to perform all operations, such as S505, that are performed by the second terminal device in the embodiment shown in FIG. 5 other than sending and receiving operations, and/or configured to support another process of the technology described in this specification. The sending module 1120 may be configured to perform all sending operations, such as S501 and S505, that are performed by the second terminal device in the embodiment shown in FIG. 5, and/or configured to support another process of the technology described in this specification. The receiving module 1130 may be configured to perform all receiving operations, such as S504 and S505, that are performed by the second terminal device in the embodiment shown in FIG. 5, and/or configured to support another process of the technology described in this specification.

For another example, the processing module 1110 may be configured to perform all operations, such as S614, that are performed by the second terminal device in the embodiment shown in FIG. 6A and FIG. 6B other than sending and receiving operations, and/or configured to support another process of the technology described in this specification. The sending module 1120 may be configured to perform all sending operations, such as S611 and S614, that are performed by the second terminal device in the embodiment shown in FIG. 6A and FIG. 6B, and/or configured to support another process of the technology described in this specification. The receiving module 1130 may be configured to perform all receiving operations, such as S605, S607, S609, and S614, that are performed by the second terminal device in the embodiment shown in FIG. 6A and FIG. 6B, and/or configured to support another process of the technology described in this specification.

For another example, the processing module 1110 may be configured to perform all operations, such as the operation of determining the resource that needs to be allocated, that are performed by the second terminal device in the embodiment shown in FIG. 7 other than sending and receiving operations, and/or configured to support another process of the technology described in this specification. The sending module 1120 may be configured to perform all sending operations, such as S701, that are performed by the second terminal device in the embodiment shown in FIG. 7, and/or configured to support another process of the technology described in this specification. The receiving module 1130 may be configured to perform all receiving operations, such as S704, that are performed by the second terminal device in the embodiment shown in FIG. 7, and/or configured to support another process of the technology described in this specification.

For another example, the processing module 1110 may be configured to perform all operations, such as the operation of determining the resource that needs to be allocated, that are performed by the second terminal device in the embodiment shown in FIG. 8 other than sending and receiving operations, and/or configured to support another process of the technology described in this specification. The sending module 1120 may be configured to perform all sending operations, such as S801, that are performed by the second terminal device in the embodiment shown in FIG. 8, and/or configured to support another process of the technology described in this specification. The receiving module 1130 may be configured to perform all receiving operations, such as S806, that are performed by the second terminal device in the embodiment shown in FIG. 8, and/or configured to support another process of the technology described in this specification.

For still another example, the processing module 1110 may be configured to perform all operations, such as the operation of selecting the resource from the second resource pool indicated by the second resource pool information, that are performed by the second terminal device in the embodiment shown in FIG. 9 other than sending and receiving operations, and/or configured to support another process of the technology described in this specification. The sending module 1120 may be configured to perform all sending operations that are performed by the second terminal device in the embodiment shown in FIG. 9, and/or configured to support another process of the technology described in this specification. The receiving module 1130 may be configured to perform all receiving operations, such as S904, that are performed by the second terminal device in the embodiment shown in FIG. 9, and/or configured to support another process of the technology described in this specification.

In addition, for implementations of the sending module 1120 and the receiving module 1130, refer to the descriptions of the implementations of the sending module 1020 and the receiving module 1030.

For functions that can be specifically implemented by the processing module 1110, the sending module 1120, and the receiving module 1130, refer to the descriptions of any one of the embodiments shown in FIG. 4 to FIG. 9. Details are not described again.

FIG. 12 is a schematic block diagram of a communications apparatus 1200 according to an embodiment of this application. For example, the communications apparatus 1200 is an access network device 1200.

The access network device 1200 includes a sending module 1220 and a receiving module 1230. Optionally, the access network device 1200 may further include a processing module 1210. For example, the access network device 1200 may be an access network device, or may be a chip used in the access network device or another combined device or component that has a function of the access network device. When the access network device 1200 is the access network device, the sending module 1220 may be a transmitter, and the receiving module 1230 may be a receiver. The transmitter may include an antenna, a radio frequency circuit, and the like, or the receiver may include an antenna, a radio frequency circuit, and the like. The transmitter and the receiver may constitute a transceiver together. The transceiver may implement functions of the transmitter and the receiver. Alternatively, the transmitter and the receiver may be two separately deployed function modules. The processing module 1210 may include a processor, for example, a baseband processor. The baseband processor may include one or more CPUs. When the access network device 1200 is the component that has the function of the access network device, the sending module 1220 may be a radio frequency unit, the receiving module 1230 may be a radio frequency unit, and the processing module 1210 may be a processor, for example, a baseband processor. When the access network device 1200 is the chip system, the sending module 1220 and the receiving module 1230 each may be an input/output interface of the chip (for example, a baseband chip), and the processing module 1210 may be a processor of the chip system, and may include one or more central processing units. It should be understood that, in this embodiment of this application, the processing module 1210 may be implemented by a processor or a processor-related circuit component, and the sending module 1220 and the receiving module 1230 may be implemented by a transceiver or a transceiver-related circuit component.

For example, the processing module 1210 may be configured to perform all operations, such as S403 and S405, that are performed by the access network device in the embodiment shown in FIG. 4 other than sending and receiving operations, and/or configured to support another process of the technology described in this specification. The sending module 1220 may be configured to perform all sending operations, such as S403, that are performed by the access network device in the embodiment shown in FIG. 4, and/or configured to support another process of the technology described in this specification. The receiving module 1230 may be configured to perform all receiving operations, such as S403 and S404, that are performed by the access network device in the embodiment shown in FIG. 4, and/or configured to support another process of the technology described in this specification.

For another example, the processing module 1210 may be configured to perform all operations, such as S505, that are performed by the access network device in the embodiment shown in FIG. 5 other than sending and receiving operations, and/or configured to support another process of the technology described in this specification. The sending module 1220 may be configured to perform all sending operations, such as S503 and S505, that are performed by the access network device in the embodiment shown in FIG. 5, and/or configured to support another process of the technology described in this specification. The receiving module 1230 may be configured to perform all receiving operations, such as S502 and S505, that are performed by the access network device in the embodiment shown in FIG. 5, and/or configured to support another process of the technology described in this specification.

For another example, the processing module 1210 may be configured to perform all operations, such as S603, that are performed by the access network device in the embodiment shown in FIG. 6A and FIG. 6B other than sending and receiving operations, and/or configured to support another process of the technology described in this specification. The sending module 1220 may be configured to perform all sending operations, such as S602, S604, S606, S608, S610, S613, and S614 that are performed by the access network device in the embodiment shown in FIG. 6A and FIG. 6B, and/or configured to support another process of the technology described in this specification. The receiving module 1230 may be configured to perform all receiving operations, such as S601, S612, and S614, that are performed by the access network device in the embodiment shown in FIG. 6A and FIG. 6B, and/or configured to support another process of the technology described in this specification.

For another example, the processing module 1210 may be configured to perform all operations, such as the operation of allocating the resource to the second terminal device, that are performed by the access network device in the embodiment shown in FIG. 7 other than sending and receiving operations, and/or configured to support another process of the technology described in this specification. The sending module 1220 may be configured to perform all sending operations, such as S703, that are performed by the access network device in the embodiment shown in FIG. 7, and/or configured to support another process of the technology described in this specification. The receiving module 1230 may be configured to perform all receiving operations, such as S702, that are performed by the access network device in the embodiment shown in FIG. 7, and/or configured to support another process of the technology described in this specification.

For another example, the processing module 1210 may be configured to perform all operations, such as the operation of allocating the resource to the second terminal device, that are performed by the access network device in the embodiment shown in FIG. 8 other than sending and receiving operations, and/or configured to support another process of the technology described in this specification. The sending module 1220 may be configured to perform all sending operations, such as S804 and S805, that are performed by the access network device in the embodiment shown in FIG. 8, and/or configured to support another process of the technology described in this specification. The receiving module 1230 may be configured to perform all receiving operations, such as S802 and S803, that are performed by the access network device in the embodiment shown in FIG. 8, and/or configured to support another process of the technology described in this specification.

For still another example, the processing module 1210 may be configured to perform all operations, such as the operation of allocating the resource to the second terminal device, that are performed by the access network device in the embodiment shown in FIG. 9 other than sending and receiving operations, and/or configured to support another process of the technology described in this specification. The sending module 1220 may be configured to perform all sending operations, such as S902 and S903, that are performed by the access network device in the embodiment shown in FIG. 9, and/or configured to support another process of the technology described in this specification. The receiving module 1230 may be configured to perform all receiving operations, such as S901, that are performed by the access network device in the embodiment shown in FIG. 9, and/or configured to support another process of the technology described in this specification.

In addition, for implementations of the sending module 1220 and the receiving module 1230, refer to the descriptions of the implementations of the sending module 1020 and the receiving module 1030.

For functions that can be specifically implemented by the processing module 1210, the sending module 1220, and the receiving module 1230, refer to the descriptions of any one of the embodiments shown in FIG. 4 to FIG. 9. Details are not described again.

An embodiment of this application further provides a communications apparatus. The communications apparatus may be a terminal device, or may be a circuit. The communications apparatus may be configured to perform the actions performed by the terminal device in the foregoing method embodiments.

When the communications apparatus is the terminal device, FIG. 13 is a simplified schematic diagram of a structure of the terminal device. For ease of understanding and illustration, FIG. 13 uses an example in which the terminal device is a mobile phone. As shown in FIG. 13, the terminal device includes a processor, a memory, a radio frequency circuit, an antenna, and an input/output apparatus. The processor is mainly configured to: process a communications protocol and communications data, and control the terminal device to execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to send and receive a radio frequency signal in a form of an electromagnetic wave. The input/output apparatus, such as a touchscreen, a display, or a keyboard, is mainly configured to receive data entered by a user and output data to the user. It should be noted that some types of terminal devices may have no input/output apparatus.

When data needs to be sent, the processor performs baseband processing on the to-be-sent data, and then outputs a baseband signal to the radio frequency circuit. After performing radio frequency processing on the baseband signal, the radio frequency circuit sends the radio frequency signal in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, only one memory and one processor are shown in FIG. 13. An actual terminal device product may include one or more processors and one or more memories. The memory may also be referred to as a storage medium, a storage device, or the like. The memory may be disposed independently of the processor, or may be integrated into the processor. This is not limited in embodiments of this application.

In this embodiment of this application, the antenna and the radio frequency circuit that have sending and receiving functions may be considered as a transceiver unit of the terminal device (the transceiver unit may be one functional unit, and the functional unit can implement the sending and receiving functions; or the transceiver unit may include two functional units, namely, a receiving unit that can implement the receiving function and a sending unit that can implement the sending function), and the processor that has a processing function is considered as a processing unit of the terminal device. As shown in FIG. 13, the terminal device includes a transceiver unit 1310 and a processing unit 1320. The transceiver unit may also be referred to as a transceiver, a transceiver apparatus, or the like. The processing unit may also be referred to as a processor, a processing board, a processing module, a processing apparatus, or the like. Optionally, a component that is in the transceiver unit 1310 and that is configured to implement a receiving function may be considered as a receiving unit, and a component that is in the transceiver unit 1310 and that is configured to implement a sending function may be considered as a sending unit. In other words, the transceiver unit 1310 includes the receiving unit and the sending unit. The transceiver unit sometimes may also be referred to as a transceiver, a transceiver circuit, or the like. The receiving unit sometimes may also be referred to as a receiver, a receive circuit, or the like. The sending unit sometimes may also be referred to as a transmitter, a transmit circuit, or the like.

It should be understood that the transceiver unit 1310 is configured to perform a sending operation and a receiving operation on the first terminal device side or the second terminal device side in any one of the embodiments shown in FIG. 4 to FIG. 9, and the processing unit 1320 is configured to perform an operation other than the sending and receiving operations on the first terminal device or the second terminal device in any one of the embodiments shown in FIG. 4 to FIG. 9.

When the communications apparatus is a chip apparatus or circuit, the apparatus may include a transceiver unit and a processing unit. The transceiver unit may be an input/output circuit and/or a communications interface. The processing unit is an integrated processor, a microprocessor, or an integrated circuit.

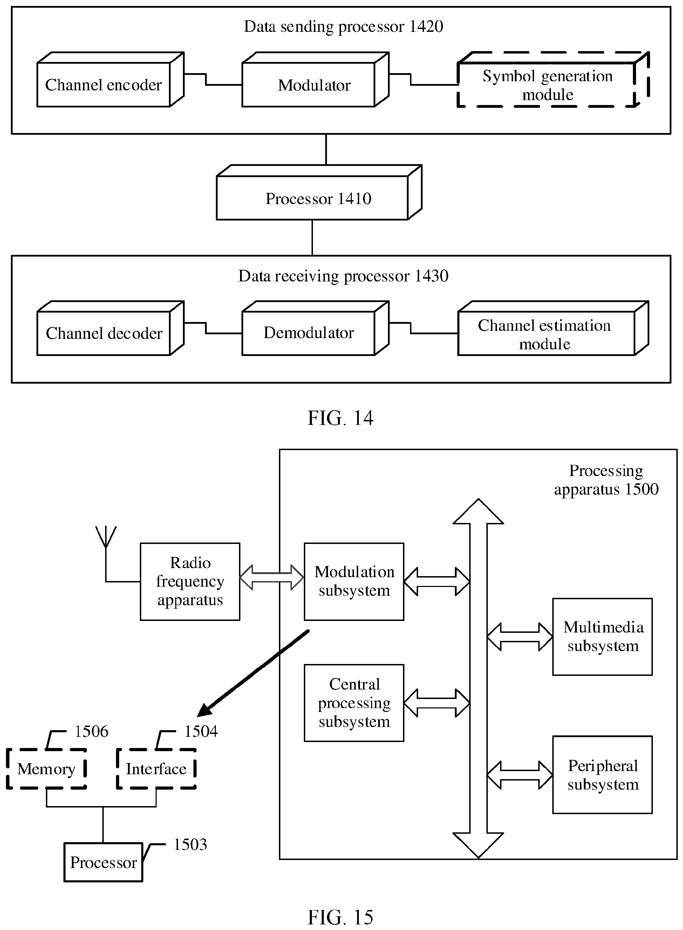

When the communications apparatus in this embodiment is the terminal device, refer to a device shown in FIG. 14. For example, the device can implement a function similar to that of the processing module 1010 in FIG. 10. For another example, the device can implement a function similar to that of the processing module 1110 in FIG. 11. In FIG. 14, the device includes a processor 1410, a data sending processor 1420, and a data receiving processor 1430. The processing module 1010 in the foregoing embodiment may be the processor 1410 in FIG. 14, and implements a corresponding function. The sending module 1020 in the foregoing embodiment may be the data sending processor 1420 in FIG. 14, and implements a corresponding function. The receiving module 1030 in the foregoing embodiment may be the data receiving processor 1430 in FIG. 14, and implements a corresponding function. Alternatively, the processing module 1110 in the foregoing embodiment may be the processor 1410 in FIG. 14, and implements a corresponding function. The sending module 1120 in the foregoing embodiment may be the data sending processor 1420 in FIG. 14, and implements a corresponding function. The receiving module 1130 in the foregoing embodiment may be the data receiving processor 1430 in FIG. 14, and implements a corresponding function. Although FIG. 14 shows a channel encoder and a channel decoder, it may be understood that these modules do not constitute a limitation on this embodiment, but are merely examples.

FIG. 15 shows another form of this embodiment. A processing apparatus 1500 includes modules such as a modulation subsystem, a central processing subsystem, and a peripheral subsystem. The communications apparatus in this embodiment may be used as the modulation subsystem. Specifically, the modulation subsystem may include a processor 1503 and an interface 1504. The processor 1503 implements a function of the processing module 1010, and the interface 1504 implements functions of the sending module 1020 and the receiving module 1030. Alternatively, the processor 1503 implements a function of the processing module 1110, and the interface 1504 implements functions of the sending module 1120 and the receiving module 1130. In another variant, the modulation subsystem includes a memory 1506, a processor 1503, and a program that is stored in the memory 1506 and that can be run on the processor. When executing the program, the processor 1503 implements the method on the terminal device side in the foregoing method embodiments. It should be noted that the memory 1506 may be nonvolatile or volatile. The memory 1506 may be located in the modulation subsystem, or may be located in the processing apparatus 1500, provided that the memory 1506 can be connected to the processor 1503.

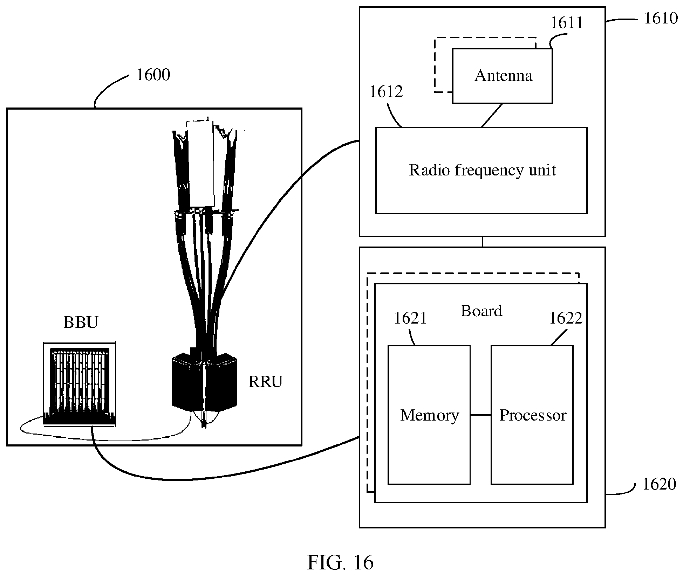

When the apparatus in this embodiment of this application is a network device, the apparatus may be that shown in FIG. 16. An apparatus 1600 includes one or more radio frequency units, such as a remote radio unit (remote radio unit, RRU) 1610 and one or more baseband units (baseband unit, BBU) (which may also be referred to as a digital unit (digital unit, DU)) 1620. The RRU 1610 may be referred to as a transceiver module. The transceiver module may include a sending module and a receiving module, or the transceiver module may be one module that can implement sending and receiving functions. The transceiver module may correspond to the sending module 1220 and the receiving module 1230 in FIG. 12. Optionally, the transceiver module may also be referred to as a transceiver circuit, a transceiver, or the like, and may include at least one antenna 1611 and a radio frequency unit 1612. The RRU 1610 is mainly configured to: send and receive a radio frequency signal, and perform conversion between the radio frequency signal and a baseband signal. For example, the RRU 1610 is configured to send indication information to a terminal device. The BBU 1620 is mainly configured to: perform baseband processing, control the base station, and the like. The RRU 1610 and the BBU 1620 may be physically disposed together, or may be physically disposed separately, that is, in a distributed base station.

The BBU 1620 is a control center of the base station, and may also be referred to as a processing module. The BBU 1620 may correspond to the processing module 1210 in FIG. 9, and is mainly configured to implement a baseband processing function such as channel encoding, multiplexing, modulation, or spreading. For example, the BBU (the processing module) may be configured to control the base station to perform the operation procedure related to the network device in the foregoing method embodiments, for example, generate the foregoing indication information.

For example, the BBU 1620 may include one or more boards, and a plurality of boards may jointly support a radio access network (for example, an LTE network) in a single access standard, or may separately support radio access networks (for example, an LTE network, a 5G network, or another network) in different access standards. The BBU 1620 further includes a memory 1621 and a processor 1622. The memory 1621 is configured to store necessary instructions and data. The processor 1622 is configured to control the base station to perform a necessary action, for example, control the base station to perform the operation procedure related to the network device in the foregoing method embodiments. The memory 1621 and the processor 1622 may serve the one or more boards. In other words, a memory and a processor may be disposed on each board. Alternatively, a plurality of boards may share a same memory and a same processor. In addition, a necessary circuit may be further disposed on each board.

An embodiment of this application provides a communications system. The communications system may include the first terminal device in any one of the embodiments shown in FIG. 4 to FIG. 9, and the second terminal device in any one of the embodiments shown in FIG. 4 to FIG. 9. The first terminal device is, for example, the first terminal device 1000 in FIG. 10. The second terminal device is, for example, the second terminal device 1100 in FIG. 11.

Optionally, the communications system may further include the access network device in any one of the embodiments shown in FIG. 4 to FIG. 9. The access network device is, for example, the access network device 1200 in FIG. 12.

It should be understood that the processor in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be further understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification is intended to include but not limited to these memories and any memory of another proper type.

It should be understood that sequence numbers of the foregoing processes do not mean execution sequences in embodiments of this application. The execution sequences of the processes should be determined according to functions and internal logic of the processes, and should not be construed as any limitation on the implementation processes of embodiments of this application.

A person of ordinary skill in the art may be aware that, units and algorithm steps in examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief descriptions, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing computer-readable storage medium may be any usable medium accessible by a computer. By way of example but not limitation, the computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk or another compact disc storage, a magnetic disk storage medium or another magnetic storage device, or any other medium that can be used to carry or store expected program code in a form of instructions or a data structure and that can be accessed by a computer.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communications method, comprising:
receiving (S402) by a first terminal device a first connection establishment request message from a second terminal device, wherein the first connection establishment request message is used to request the first terminal device to provide a relay service only for the control plane information of the second terminal device, and not to provide the relay service for a user plane information of the second terminal device, wherein the first connection establishment request message comprises first information used to request to establish a sidelink connection to the second terminal device, and is further used to request the first terminal device to provide a relay service for control plane information of the second terminal device by using the sidelink connection, wherein control plane information is relayed by the first terminal device, and wherein data plane information of the second terminal device is transmitted only between the first terminal device and the second terminal device by using the sidelink connection and is not relayed by the first terminal device;
sending (S404) by the first terminal device a first message to an access network device, wherein the first message comprises second information, and the second information is used to request to relay the control plane information of the second terminal device, wherein the second information indicates that the relay service is provided only for the control plane information of the second terminal device, and no relay service is provided for the user plane information of the second terminal device;
receiving by the first terminal device a response message sent by the access network device, wherein the response message indicates that the first message is successfully received; and
sending (S406) by the first terminal device after sending the response message to the access network device but where no response is received from the from the access network device a first connection establishment complete message to the second terminal device, wherein the first connection establishment complete message is used to indicate that the sidelink connection between the first terminal device and the second terminal device has been established, and wherein the first connection establishment request is also used to indicate that the control plane information needs to be relayed, but the user plane information does not need to be relayed.

2. The method according to claim 1, wherein the first message further comprises one or more of the following: a layer 2 identifier of the second terminal device, a first identifier of the second terminal device, or information indicating that the second terminal device is out of coverage, wherein the first identifier is an identifier allocated by the first terminal device to the first terminal device.

3. The method according to claim 1 or 2, wherein the first message is an SUI message, and wherein the sidelink connection is a PC5-S connection.

4. The method according to any one of claims 1 to 3, wherein the method further comprises:
receiving a discovery request message from the second terminal device, wherein the discovery request message is used to request a relay service; and
sending a discovery response message to the second terminal device, wherein the discovery response message is used to determine to provide the relay service for the second terminal device.

5. The method according to any one of claims 1 to 4, wherein the method further comprises:
receiving a second connection establishment request message from the second terminal device by using a preconfigured first radio bearer, wherein the first radio bearer is used to transmit relay information corresponding to the second terminal device, and the second connection establishment request message is used to request to establish an RRC connection to the access network device; and
sending the second connection establishment request message to the access network device by using a preconfigured second radio bearer, wherein the second radio bearer is used to transmit the relay information corresponding to the second terminal device.

6. The method according to claim 5, wherein the method further comprises:
receiving a second connection establishment complete message from the access network device by using the second radio bearer, wherein the second connection establishment complete message is used to indicate that the RRC connection between the access network device and the second terminal device has been established; and
forwarding the second connection establishment complete message to the second terminal device by using the first radio bearer.

7. The method according to claim 5 or 6, wherein the method further comprises:
receiving a fourth message from the access network device by using the second radio bearer corresponding to the RRC connection, wherein the fourth message comprises first resource information, the first resource information is used to indicate a first resource allocated to the second terminal device, and the first resource is used by the second terminal device to send data to the first terminal device by using the sidelink connection; and
forwarding the fourth message to the second terminal device by using the first radio bearer corresponding to the RRC connection.

8. The method according to claim 3, wherein the method further comprises:
receiving a second message from the access network device, wherein the second message is used to configure a second radio bearer between the access network device and the first terminal device, and the second radio bearer is used to transmit relay information corresponding to the second terminal device.

9. The method according to claim 8, wherein the method further comprises:
receiving second configuration information from the access network device by using the second radio bearer, wherein the second configuration information is a configuration of the second terminal device that corresponds to a first radio bearer, the first radio bearer is a radio bearer between the first terminal device and the second terminal device, and the first radio bearer is used to transmit the relay information corresponding to the second terminal device; and
forwarding the second configuration information to the second terminal device.

10. The method according to claim 8 or 9, wherein the method further comprises:
receiving a fourth message from the access network device by using the second radio bearer, wherein the fourth message comprises first resource information, the first resource information is used to indicate a first resource allocated to the second terminal device, and the first resource is used by the second terminal device to send data to the first terminal device by using the sidelink connection; and
forwarding the fourth message to the second terminal device.

11. A communications apparatus, comprising a processor and a transceiver, wherein the processor is coupled to the transceiver and configured to perform the method according to any one of claims 1 to 10.

12. A computer-readable storage medium, wherein the computer-readable storage medium is configured to store a computer program, and when the computer program is run on a computer, the computer is enabled to perform the method according to any one of claims 1 to 10.

## Patentansprüche

1. Kommunikationsverfahren, umfassend:
Empfangen (S402) einer ersten Verbindungsaufbauanforderungsnachricht von einer zweiten Endgerätvorrichtung durch eine erste Endgerätvorrichtung, wobei die erste Verbindungsaufbauanforderungsnachricht verwendet wird, um anzufordern, dass die erste Endgerätvorrichtung einen Übertragungsdienst nur für die Steuerebeneninformationen der zweiten Endgerätvorrichtung bereitstellt und nicht den Übertragungsdienst für Benutzerebeneninformationen der zweiten Endgerätvorrichtung bereitstellt, wobei die erste Verbindungsaufbauanforderungsnachricht erste Informationen umfasst, die verwendet werden, um anzufordern, eine Sidelink-Verbindung zu der zweiten Endgerätvorrichtung aufzubauen, und ferner verwendet wird, um anzufordern, dass die erste Endgerätvorrichtung einen Übertragungsdienst für Steuerebeneninformationen der zweiten Endgerätvorrichtung unter Verwendung der Sidelink-Verbindung bereitstellt, wobei Steuerebeneninformationen durch die erste Endgerätvorrichtung übertragen werden und wobei Datenebeneninformationen der zweiten Endgerätvorrichtung nur zwischen der ersten Endgerätvorrichtung und der zweiten Endgerätvorrichtung unter Verwendung der Sidelink-Verbindung übermittelt werden und nicht durch die erste Endgerätvorrichtung übertragen werden;
Senden (S404) einer ersten Nachricht an eine Zugangsnetzwerkvorrichtung durch die erste Endgerätvorrichtung, wobei die erste Nachricht zweite Informationen umfasst und die zweiten Informationen verwendet werden, um anzufordern, die Steuerebeneninformationen der zweiten Endgerätvorrichtung zu übertragen, wobei die zweiten Informationen angeben, dass der Übertragungsdienst nur für die Steuerebeneninformationen der zweiten Endgerätvorrichtung bereitgestellt ist und kein Übertragungsdienst für die Benutzerebeneninformationen der zweiten Endgerätvorrichtung bereitgestellt ist;
Empfangen einer von der Zugangsnetzwerkvorrichtung gesendeten Antwortnachricht durch die erste Endgerätvorrichtung, wobei die Antwortnachricht angibt, dass die erste Nachricht erfolgreich empfangen wurde; und
Senden (S406) einer ersten Verbindungsaufbauvollendungsnachricht an die zweite Endgerätvorrichtung durch die erste Endgerätvorrichtung, nachdem die Antwortnachricht an die Zugangsnetzwerkvorrichtung gesendet wurde, aber keine Antwort von der Zugangsnetzwerkvorrichtung empfangen wurde, wobei die erste Verbindungsaufbauvollendungsnachricht verwendet wird, um anzugeben, dass die Sidelink-Verbindung zwischen der ersten Endgerätvorrichtung und der zweiten Endgerätvorrichtung aufgebaut worden ist, und wobei die erste Verbindungsaufbauanforderung auch verwendet wird, um anzugeben, dass die Steuerebeneninformationen übertragen werden müssen, aber die Benutzerebeneninformationen nicht übertragen werden müssen.

2. Verfahren nach Anspruch 1, wobei die erste Nachricht ferner eines oder mehreres von Folgendem umfasst: eine Schicht-2-Kennung der zweiten Endgerätvorrichtung, eine erste Kennung der zweiten Endgerätvorrichtung oder Informationen, die angeben, dass die zweite Endgerätvorrichtung nicht abgedeckt ist, wobei die erste Kennung eine Kennung ist, die die erste Endgerätvorrichtung der ersten Endgerätvorrichtung zugewiesen hat.

3. Verfahren nach Anspruch 1 oder 2, wobei die erste Nachricht eine SUI-Nachricht ist und wobei die Sidelink-Verbindung eine PC5-S-Verbindung ist.

4. Verfahren nach einem der Ansprüche 1 bis 3, wobei das Verfahren ferner Folgendes umfasst:
Empfangen einer Erkennungsanforderungsnachricht von der zweiten Endgerätvorrichtung, wobei die Erkennungsanforderungsnachricht verwendet wird, um einen Übertragungsdienst anzufordern; und
Senden einer Erkennungsantwortnachricht an die zweite Endgerätvorrichtung, wobei die Erkennungsantwortnachricht verwendet wird, um zu bestimmen, dass der Übertragungsdienst für die zweite Endgerätvorrichtung bereitgestellt wird.

5. Verfahren nach einem der Ansprüche 1 bis 4, wobei das Verfahren ferner Folgendes umfasst:
Empfangen einer zweiten Verbindungsaufbauanforderungsnachricht von der zweiten Endgerätvorrichtung unter Verwendung eines vorkonfigurierten ersten Funkträgers, wobei der erste Funkträger verwendet wird, um der zweiten Endgerätvorrichtung entsprechende Übertragungsinformationen zu übermitteln, und die zweite Verbindungsaufbauanforderungsnachricht verwendet wird, um anzufordern, eine RRC-Verbindung mit der Zugangsnetzwerkvorrichtung aufzubauen; und
Senden der zweiten Verbindungsaufbauanforderungsnachricht an die Zugangsnetzwerkvorrichtung unter Verwendung eines vorkonfigurierten zweiten Funkträgers, wobei der zweite Funkträger verwendet wird, um die der zweiten Endgerätvorrichtung entsprechenden Übertragungsinformationen zu übermitteln.

6. Verfahren nach Anspruch 5, wobei das Verfahren ferner Folgendes umfasst:
Empfangen einer zweiten Verbindungsaufbauvollendungsnachricht von der Zugangsnetzwerkvorrichtung unter Verwendung des zweiten Funkträgers, wobei die zweite Verbindungsaufbauvollendungsnachricht verwendet wird, um anzugeben, dass die RRC-Verbindung zwischen der Zugangsnetzwerkvorrichtung und der zweiten Endgerätvorrichtung aufgebaut worden ist; und
Weiterleiten der zweiten Verbindungsaufbauvollendungsnachricht an die zweite Endgerätvorrichtung unter Verwendung des ersten Funkträgers.

7. Verfahren nach Anspruch 5 oder 6, wobei das Verfahren ferner Folgendes umfasst:
Empfangen einer vierten Nachricht von der Zugangsnetzwerkvorrichtung unter Verwendung des der RRC-Verbindung entsprechenden zweiten Funkträgers, wobei die vierte Nachricht erste Ressourceninformationen umfasst, wobei die ersten Ressourceninformationen verwendet werden, um eine erste Ressource anzugeben, die der zweiten Endgerätvorrichtung zugewiesen ist, und die erste Ressource von der zweiten Endgerätvorrichtung verwendet wird, um Daten unter Verwendung der Sidelink-Verbindung an die erste Endgerätvorrichtung zu senden; und
Weiterleiten der vierten Nachricht an die zweite Endgerätvorrichtung unter Verwendung des der RRC-Verbindung entsprechenden ersten Funkträgers.

8. Verfahren nach Anspruch 3, wobei das Verfahren ferner Folgendes umfasst:
Empfangen einer zweiten Nachricht von der Zugangsnetzwerkvorrichtung, wobei die zweite Nachricht verwendet wird, um einen zweiten Funkträger zwischen der Zugangsnetzwerkvorrichtung und der ersten Endgerätvorrichtung zu konfigurieren, und der zweite Funkträger verwendet wird, um der zweiten Endgerätvorrichtung entsprechende Übertragungsinformationen zu übermitteln.

9. Verfahren nach Anspruch 8, wobei das Verfahren ferner Folgendes umfasst:
Empfangen von zweiten Konfigurationsinformationen von der Zugangsnetzwerkvorrichtung unter Verwendung des zweiten Funkträgers, wobei die zweiten Konfigurationsinformationen eine Konfiguration der zweiten Endgerätvorrichtung sind, die einem ersten Funkträger entspricht, der erste Funkträger ein Funkträger zwischen der ersten Endgerätvorrichtung und der zweiten Endgerätvorrichtung ist und der erste Funkträger verwendet wird, um die der zweiten Endgerätvorrichtung entsprechenden Übertragungsinformationen zu übermitteln; und
Weiterleiten der zweiten Konfigurationsinformationen an die zweite Endgerätvorrichtung.

10. Verfahren nach Anspruch 8 oder 9, wobei das Verfahren ferner Folgendes umfasst:
Empfangen einer vierten Nachricht von der Zugangsnetzwerkvorrichtung unter Verwendung des zweiten Funkträgers, wobei die vierte Nachricht erste Ressourceninformationen umfasst, wobei die ersten Ressourceninformationen verwendet werden, um eine erste Ressource anzugeben, die der zweiten Endgerätvorrichtung zugewiesen ist, und die erste Ressource von der zweiten Endgerätvorrichtung verwendet wird, um Daten unter Verwendung der Sidelink-Verbindung an die erste Endgerätvorrichtung zu senden; und
Weiterleiten der vierten Meldung an die zweite Endgerätvorrichtung.

11. Kommunikationsvorrichtung, umfassend einen Prozessor und einen Sendeempfänger, wobei der Prozessor mit dem Sendeempfänger gekoppelt und dazu konfiguriert ist, das Verfahren nach einem der Ansprüche 1 bis 10 durchzuführen.

12. Computerlesbares Speichermedium, wobei das computerlesbare Speichermedium dazu konfiguriert ist, ein Computerprogramm zu speichern, und, wenn das Computerprogramm auf einem Computer ausgeführt wird, der Computer in die Lage versetzt wird, das Verfahren nach einem der Ansprüche 1 bis 10 durchzuführen.

## Revendications

1. Procédé de communication, comprenant :
la réception (S402) par un premier dispositif terminal d'un premier message de demande d'établissement de connexion d'un second dispositif terminal, dans lequel le premier message de demande d'établissement de connexion est utilisé pour demander au premier dispositif terminal de fournir un service de relais uniquement pour les informations de plan de commande du second dispositif terminal, et de ne pas fournir le service de relais pour des informations de plan utilisateur du second dispositif terminal, dans lequel le premier message de demande d'établissement de connexion comprend des premières informations utilisées pour demander l'établissement d'une connexion de liaison latérale au second dispositif terminal, et est également utilisé pour demander au premier dispositif terminal de fournir un service de relais pour des informations de plan de commande du second dispositif terminal à l'aide de la connexion de liaison latérale, dans lequel les informations de plan de commande sont relayées par le premier dispositif terminal, et dans lequel des informations de plan de données du second dispositif terminal sont transmises uniquement entre le premier dispositif terminal et le second dispositif terminal à l'aide de la connexion de liaison latérale et ne sont pas relayées par le premier dispositif terminal ;
l'envoi (S404) par le premier dispositif terminal d'un premier message à un dispositif de réseau d'accès, dans lequel le premier message comprend des secondes informations, et les secondes informations sont utilisées pour demander le relais des informations de plan de commande du second dispositif terminal,
dans lequel les secondes informations indiquent que le service de relais est fourni uniquement pour les informations de plan de commande du second dispositif terminal, et aucun service de relais n'est fourni pour les informations de plan utilisateur du second dispositif terminal ;
la réception par le premier dispositif terminal d'un message de réponse envoyé par le dispositif de réseau d'accès, dans lequel le message de réponse indique que le premier message a été reçu avec succès ; et
l'envoi (S406) par le premier dispositif terminal après l'envoi du message de réponse au dispositif de réseau d'accès mais lorsqu'aucune réponse n'est reçue du dispositif de réseau d'accès, d'un premier message d'achèvement de l'établissement de la connexion au second dispositif terminal, dans lequel le premier message d'achèvement de l'établissement de la connexion est utilisé pour indiquer que la connexion de liaison latérale entre le premier dispositif terminal et le second dispositif terminal a été établie, et dans lequel la première demande d'établissement de connexion est aussi utilisée pour indiquer que les informations de plan de commande doivent être relayées, mais que les informations de plan utilisateur n'ont pas besoin d'être relayées.

2. Procédé selon la revendication 1, dans lequel le premier message comprend également l'un ou plusieurs des éléments suivants : un identifiant de couche 2 du second dispositif terminal, un premier identifiant du second dispositif terminal, ou des informations indiquant que le second dispositif terminal est hors de couverture, dans lequel le premier identifiant est un identifiant attribué par le premier dispositif terminal au premier dispositif terminal.

3. Procédé selon la revendication 1 ou 2, dans lequel le premier message est un message SUI, et dans lequel la connexion de liaison latérale est une connexion PC5-S.

4. Procédé selon l'une quelconque des revendications 1 à 3, dans lequel le procédé comprend également :
la réception d'un message de demande de découverte du second dispositif terminal, dans lequel le message de demande de découverte est utilisé pour demander un service de relais ; et
l'envoi d'un message de réponse de découverte au second dispositif terminal, dans lequel le message de réponse de découverte est utilisé pour déterminer s'il convient de fournir le service de relais pour le second dispositif terminal.

5. Procédé selon l'une quelconque des revendications 1 à 4, dans lequel le procédé comprend également :
la réception d'un deuxième message de demande d'établissement de connexion du second dispositif terminal à l'aide d'un premier support radio préconfiguré, dans lequel le premier support radio est utilisé pour transmettre des informations de relais correspondant au second dispositif terminal, et le deuxième message de demande d'établissement de connexion est utilisé pour demander l'établissement d'une connexion RRC au dispositif de réseau d'accès ; et
l'envoi du deuxième message de demande d'établissement de connexion au dispositif de réseau d'accès à l'aide d'un second support radio préconfiguré, dans lequel le second support radio est utilisé pour transmettre les informations de relais correspondant au second dispositif terminal.

6. Procédé selon la revendication 5, dans lequel le procédé comprend également :
la réception d'un deuxième message d'achèvement de l'établissement de la connexion du dispositif de réseau d'accès à l'aide du second support radio, dans lequel le deuxième message d'achèvement de l'établissement de la connexion est utilisé pour indiquer que la connexion RRC entre le dispositif de réseau d'accès et le second dispositif terminal a été établie ; et
le transfert du deuxième message d'achèvement de l'établissement de la connexion au second dispositif terminal à l'aide du premier support radio.

7. Procédé selon la revendication 5 ou 6, dans lequel le procédé comprend également :
la réception d'un quatrième message du dispositif de réseau d'accès à l'aide du second support radio correspondant à la connexion RRC, dans lequel le quatrième message comprend des premières informations de ressource, les premières informations de ressource sont utilisées pour indiquer une première ressource attribuée au second dispositif terminal, et la première ressource est utilisée par le second dispositif terminal pour envoyer des données au premier dispositif terminal à l'aide de la connexion de liaison latérale ; et
le transfert du quatrième message au second dispositif terminal à l'aide du premier support radio correspondant à la connexion RRC.

8. Procédé selon la revendication 3, dans lequel le procédé comprend également :
la réception d'un deuxième message du dispositif de réseau d'accès, dans lequel le deuxième message est utilisé pour configurer un second support radio entre le dispositif de réseau d'accès et le premier dispositif terminal, et le second support radio est utilisé pour transmettre des informations de relais correspondant au second dispositif terminal.

9. Procédé selon la revendication 8, dans lequel le procédé comprend également :
la réception de secondes informations de configuration du dispositif de réseau d'accès à l'aide du second support radio, dans lequel les secondes informations de configuration sont une configuration du second dispositif terminal correspondant à un premier support radio, le premier support radio est un support radio entre le premier dispositif terminal et le second dispositif terminal, et le premier support radio est utilisé pour transmettre les informations de relais correspondant au second dispositif terminal ; et
le transfert des secondes informations de configuration au second dispositif terminal.

10. Procédé selon la revendication 8 ou 9, dans lequel le procédé comprend également :
la réception d'un quatrième message du dispositif de réseau d'accès à l'aide du second support radio, dans lequel le quatrième message comprend des premières informations de ressource, les premières informations de ressource sont utilisées pour indiquer une première ressource attribuée au second dispositif terminal, et la première ressource est utilisée par le second dispositif terminal pour envoyer des données au premier dispositif terminal à l'aide de la connexion de liaison latérale ; et
le transfert du quatrième message au second dispositif terminal.

11. Appareil de communication, comprenant un processeur et un émetteur-récepteur, dans lequel le processeur est couplé à l'émetteur-récepteur et configuré pour réaliser le procédé selon l'une quelconque des revendications 1 à 10.

12. Support de stockage lisible par ordinateur, dans lequel le support de stockage lisible par ordinateur est configuré pour stocker un programme informatique, et lorsque le programme informatique fonctionne sur un ordinateur, l'ordinateur est activé pour réaliser le procédé selon l'une quelconque des revendications 1 à 10.
